(19) Europäisches Patentamt
European Patent Office
Office européen des brevets

(11) **EP 4 776 537 A1**

(12) **EUROPEAN PATENT APPLICATION**
published in accordance with Art. 153(4) EPC

(43) Date of publication:
**15.07.2026  Bulletin 2026/29**

(21) Application number: **24869794.8**

(22) Date of filing: **29.05.2024**

(51) International Patent Classification (IPC):
***H04L 1/00*** (2006.01)

(52) Cooperative Patent Classification (CPC):
**H04L 1/00; H04L 5/00**

(86) International application number:
**PCT/CN2024/096019**

(87) International publication number:
**WO 2025/066231 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023  CN 202311294873**

(71) Applicant: **HUAWEI TECHNOLOGIES CO., LTD.
Shenzhen 518129 (CN)**

(72) Inventors:
• **HUANG, Kechao**
  **Shenzhen, Guangdong 518129 (CN)**
• **WANG, Haoyi**
  **Shenzhen, Guangdong 518129 (CN)**
• **LUO, Ji**
  **Shenzhen, Guangdong 518129 (CN)**
• **MA, Huixiao**
  **Shenzhen, Guangdong 518129 (CN)**

(74) Representative: **Grünecker Patent- und
Rechtsanwälte
PartG mbB
Leopoldstraße 4
80802 München (DE)**

(54) **DATA TRANSMISSION METHOD FOR OPTICAL COMMUNICATION, AND RELATED APPARATUS**

(57)    Embodiments of this application provide a data transmission method for optical communication and a related apparatus, to resolve a prior-art problem that a transmission symbol sequence cannot be used in scenarios above 800 Gbps. Specifically, a transmitter obtains a super-frame including a plurality of sub-frames, where the sub-frame includes pilot symbols. In a polarization direction, a quantity $N_{PS}$ of the pilot symbols in the sub-frame is an even number greater than 0, each pilot symbol is one of four complex numbers: $-A-Aj$, $-A+Aj$, $A-Aj$, and $A+Aj$, A is a real number, every $N_{PG}$ consecutive symbols in the sub-frame include one pilot symbol located at a fixed position, $N_{PG}$ is 96 or 128, the super-frame includes one first-type sub-frame, the first-type sub-frame further includes $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number. Further, the transmitter sends the super-frame. It can be learned that pilot symbols are inserted into the sub-frame at a greater interval, thereby reducing overhead.

[FIG. 5A]

[FIG. 5B]

**Description**

This application claims priority to Chinese Patent Application No. 202311294873.3, filed with the China National Intellectual Property Administration on September 28, 2023 and entitled "DATA TRANSMISSION METHOD FOR OPTICAL COMMUNICATION AND RELATED APPARATUS", which is incorporated herein by reference in its entirety.

TECHNICAL FIELD

Embodiments of this application relate to the field of optical communication, and in particular, to a data transmission method for optical communication and a related apparatus.

BACKGROUND

Driven by continuous advancement of 5G, cloud computing, big data, artificial intelligence, and the like, high-speed optical transport networks are evolving toward high capacity, packetization, and intelligence. Coherent optical communication systems use amplitudes, phases, polarization, and frequencies of optical waves to carry information. To resist optical signal distortion caused by dispersion, polarization-dependent impairment, noise, non-linear effect, and other factors during transmission and maintain long-distance transmission, the coherent optical communication systems typically insert some designed fixed symbol sequences to transmission symbol sequences, to help a receiver restore sent symbols.

Existing transmission symbol sequences are primarily used in 400 Gbps or 800 Gbps scenarios, and cannot adapt to future scenarios above 800 Gbps (including 1.2 Tbps, 1.6 Tbps, and the like), and additionally introduce excessive transmission overhead.

SUMMARY

Embodiments of this application provide a data transmission method for optical communication and a related apparatus, to resolve a problem that prior-art transmission symbol sequences cannot be used in scenarios above 800 Gbps.

According to a first aspect, an embodiment of this application provides a transmission method for optical communication, and the method is applied to a transmitter. Specifically, the transmitter obtains a super-frame including a plurality of sub-frames, where the sub-frame includes pilot symbols. In a polarization direction, a quantity $N_{PS}$ of the pilot symbols in the sub-frame is an even number greater than 0, each pilot symbol is one of four complex numbers: $-A-Aj$, $-A+Aj$, $A-Aj$, and $A+Aj$, A is a real number, every $N_{PG}$ consecutive symbols in the sub-frame include one pilot symbol located at a fixed position, $N_{PG}$ is 96 or 128, the super-frame includes one first-type sub-frame, the first-type sub-frame further includes $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number. Further, the transmitter sends the super-frame. It should be noted that the method may alternatively be applied to a specific module of the transmitter, for example, a signal processor of the transmitter. It should be understood that, that the module obtains the super-frame may be understood as that the module generates a super-frame, or may be understood as that the module receives a super-frame from a preceding module of the module. It should be further understood that, that the module sends the super-frame may be understood as that the module sends the super-frame to a receiver through a channel, or may be understood as that the module sends the super-frame to a subsequent module of the module. In this implementation, every 96 or 128 consecutive symbols in the sub-frame include one pilot symbol. It can be learned that pilot symbols are inserted into the sub-frame at a greater interval, thereby reducing overhead.

In some possible implementations, in one sub-frame, a pilot sequence including a plurality of pilot symbols in a first polarization direction is different from a pilot sequence including a plurality of pilot symbols in a second polarization direction, to avoid a problem that the receiver cannot distinguish between the two polarization directions in actual transmission. The first polarization direction and the second polarization direction are orthogonal to each other.

In some possible implementations, in one sub-frame, a sum of real parts of all pilot symbols in a polarization direction is 0, and a sum of imaginary parts of all the pilot symbols in the polarization direction is 0, so that direct current balance (DC Balance) can be achieved, facilitating signal quality recovery at the receiver. In the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0, so that direct current balance (DC Balance) can be achieved, facilitating signal quality recovery at the receiver.

In some possible implementations, in one sub-frame, for all pilot symbols in a polarization direction, a quantity of pilot symbols having the values $-A-Aj$, $-A+Aj$, $A-Aj$, and $A+Aj$ differ pairwise by no more than 2. This effectively ensures that quantities of symbols are approximately balanced in each polarization direction.

In some possible implementations, in one sub-frame, a quantity of pilot symbols having the value of -A-Aj in two polarization directions, a quantity of pilot symbols having the value of -A+Aj in two polarization directions, a quantity of pilot symbols having the value of A-Aj in two polarization directions, and a quantity of pilot symbols having the value of A+Aj in two polarization directions are equal to each other. This effectively ensures balance between quantities of symbols in the two polarization directions.

In some possible implementations, the first-type sub-frame starts with a pilot symbol, so that arrangement of pilot symbols is more conducive to standardization.

In some possible implementations, the $N_{FAW}$ consecutive frame alignment word symbols are arranged starting from a symbol immediately following the pilot symbol in the first-type sub-frame, so that a structure of the sub-frame is more orderly.

In some possible implementations, the first-type sub-frame further includes a reserved symbol and a symbol before framing, and in the first-type sub-frame, the frame alignment word symbols are located before the reserved symbol, and the reserved symbol is located before the symbol before framing. This enriches a functional implementation of the first-type sub-frame.

In some possible implementations, the super-frame includes at least one second-type sub-frame, and the second-type sub-frame further includes a symbol before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;

$N_{PG}$=128, $N_{CW}$=344064, and $N_F$=346880, 347136, 347392, 347520, 347648, 347776, 347904, or 348160;

$N_{PG}$=128, $N_{CW}$=516096, and $N_F$=520192, 520320, 520448, 520576, 520704, 520832, 520960, 521088, 521472, 521600, 521856, or 522240;

$N_{PG}$=128, $N_{CW}$=688128, and $N_F$=693760, 693888, 694144, 694272, 694400, 694656, 694784, 694912, 695040, 695296, 695552, 695808, 696192, or 696320;

$N_{PG}$=128, $N_{CW}$=150528, and $N_F$=152064, 152192, or 152320;

$N_{PG}$=128, $N_{CW}$=129024, and $N_F$=130176, or 130560;

$N_{PG}$=128, $N_{CW}$=107520, and $N_F$=108416, 108544, 108672, or 108800;

$N_{PG}$=128, $N_{CW}$=175616, and $N_F$=177152, 177280, 177408, 177536, or 177664;

$N_{PG}$=128, $N_{CW}$=351232, and $N_F$=354304, 354432, 354560, 354688, 354816, 354944, 355072, 355200, or 355328;

$N_{PG}$=128, $N_{CW}$=526848, and $N_F$=531200, 531456, 531712, 531840, 532224, 532480, 532608, 532864, 532992, or 533120;

$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;

$N_{PG}$=96, $N_{CW}$=172032, and $N_F$=173952, 174048, 174240, 174336, 174432, or 174528;

$N_{PG}$=96, $N_{CW}$=344064, and $N_F$=347904, 348000, 348096, 348192, 348384, 348480, 348672, 348768, 348864, or 349056;

$N_{PG}$=96, $N_{CW}$=516096, and $N_F$=521664, 521856, 522144, 522240, 522720, 522816, 523008, 523200, 523296, 523393, 523488, 523584, or 523776;

$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;

$N_{PG}$=96, $N_{CW}$=150528, and $N_F$=152160, 152256, 152352, 152448, 152544, 152640, or 152736;

$N_{PG}$=96, $N_{CW}$=129024, and $N_F$=130464, 130560, 130752, 130848, or 130944;

$N_{PG}$=96, $N_{CW}$=107520, and $N_F$=108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is quadrature phase shift keying (Quadrature Phase Shift Keying, QPSK), and A=-1 or 1; in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

According to a second aspect, an embodiment of this application provides a data transmission method for optical communication, and the method is applied to a receiver. Specifically, the receiver receives a super-frame including a plurality of sub-frames, where the sub-frame includes pilot symbols. In a polarization direction, a quantity $N_{PS}$ of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame include one pilot symbol located at a fixed position, $N_{PG}$ is 96 or 128, the super-frame includes one first-type sub-frame, the first-type sub-frame further includes $N_{FAW}$ frame alignment word symbols, each frame alignment word symbol is one of four complex numbers: -$A_{FAW}$-$A_{FAW}$j, -$A_{FAW}$+$A_{FAW}$j, $A_{FAW}$-$A_{FAW}$j, and $A_{FAW}$+$A_{FAW}$j, $A_{FAW}$ is a real number, and $N_{FAW}$ is an even number. Further, the receiver decodes the super-frame.

In some possible implementations, in one sub-frame, a pilot sequence including a plurality of pilot symbols in a first polarization direction is different from a pilot sequence including a plurality of pilot symbols in a second polarization direction, to avoid a problem that the receiver cannot distinguish between the two polarization directions in actual transmission. The first polarization direction and the second polarization direction are orthogonal to each other.

In some possible implementations, in one sub-frame, a sum of real parts of all pilot symbols in a polarization direction is 0, and a sum of imaginary parts of all the pilot symbols in the polarization direction is 0, so that direct current balance (DC Balance) can be achieved, facilitating signal quality recovery at the receiver. In the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0, so that direct current balance (DC Balance) can be achieved, facilitating signal quality recovery at the receiver.

In some possible implementations, in one sub-frame, for all pilot symbols in a polarization direction, a quantity of pilot symbols having the values -A-Aj, -A+Aj, A-Aj, and A+Aj differ pairwise by no more than 2. This effectively ensures that quantities of symbols are approximately balanced in each polarization direction.

In some possible implementations, in one sub-frame, a quantity of pilot symbols having the value of -A-Aj in two polarization directions, a quantity of pilot symbols having the value of -A+Aj in two polarization directions, a quantity of pilot symbols having the value of A-Aj in two polarization directions, and a quantity of pilot symbols having the value of A+Aj in two polarization directions are equal to each other. This effectively ensures balance between quantities of symbols in the two polarization directions.

In some possible implementations, the first-type sub-frame starts with a pilot symbol, so that arrangement of pilot symbols is more conducive to standardization.

In some possible implementations, the $N_{FAW}$ consecutive frame alignment word symbols are arranged starting from a symbol immediately following the pilot symbol in the first-type sub-frame, so that a structure of the sub-frame is more orderly.

In some possible implementations, the first-type sub-frame further includes a reserved symbol and a symbol before framing, and in the first-type sub-frame, the frame alignment word symbols are located before the reserved symbol, and the reserved symbol is located before the symbol before framing. This enriches a functional implementation of the first-type sub-frame.

In some possible implementations, the super-frame includes at least one second-type sub-frame, and the second-type sub-frame further includes a symbol before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;
$N_{PG}$=128, $N_{CW}$=344064, and $N_F$=346880, 347136, 347392, 347520, 347648, 347776, 347904, or 348160;
$N_{PG}$=128, $N_{CW}$=516096, and $N_F$=520192, 520320, 520448, 520576, 520704, 520832, 520960, 521088, 521472, 521600, 521856, or 522240;
$N_{PG}$=128, $N_{CW}$=688128, and $N_F$=693760, 693888, 694144, 694272, 694400, 694656, 694784, 694912, 695040, 695296, 695552, 695808, 696192, or 696320;
$N_{PG}$=128, $N_{CW}$=150528, and $N_F$=152064, 152192, or 152320;
$N_{PG}$=128, $N_{CW}$=129024, and $N_F$=130176, or 130560;
$N_{PG}$=128, $N_{CW}$=107520, and $N_F$=108416, 108544, 108672, or 108800;
$N_{PG}$=128, $N_{CW}$=175616, and $N_F$=177152, 177280, 177408, 177536, or 177664;
$N_{PG}$=128, $N_{CW}$=351232, and $N_F$=354304, 354432, 354560, 354688, 354816, 354944, 355072, 355200, or 355328;
$N_{PG}$=128, $N_{CW}$=526848, and $N_F$=531200, 531456, 531712, 531840, 532224, 532480, 532608, 532864, 532992, or 533120;
$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;

$N_{PG}$=96, $N_{CW}$=172032, and $N_F$=173952, 174048, 174240, 174336, 174432, or 174528;

$N_{PG}$=96, $N_{CW}$=344064, and $N_F$=347904, 348000, 348096, 348192, 348384, 348480, 348672, 348768, 348864, or 349056;

$N_{PG}$=96, $N_{CW}$=516096, and $N_F$=521664, 521856, 522144, 522240, 522720, 522816, 523008, 523200, 523296, 523393, 523488, 523584, or 523776;

$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;

$N_{PG}$=96, $N_{CW}$=150528, and $N_F$=152160, 152256, 152352, 152448, 152544, 152640, or 152736;

$N_{PG}$=96, $N_{CW}$=129024, and $N_F$=130464, 130560, 130752, 130848, or 130944;

$N_{PG}$=96, $N_{CW}$=107520, and $N_F$=108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is quadrature phase shift keying QPSK, and A=-1 or 1; in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

According to a third aspect, an embodiment of this application provides a chip. The chip includes a processor and a memory, the memory and the processor are connected to each other through a line, the memory stores instructions, and the processor is configured to perform the method described in any one of the implementations of the first aspect and the second aspect.

According to a fourth aspect, an embodiment of this application provides a data transmission apparatus used at a transmitter. The data transmission apparatus includes a processing unit and a sending unit. The processing unit is configured to obtain a super-frame including a plurality of sub-frames, where the sub-frame includes pilot symbols. In a polarization direction, a quantity NPS of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame include one pilot symbol located at a fixed position, NPG is 96 or 128, the super-frame includes one first-type sub-frame, the first-type sub-frame further includes $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number. The sending unit is configured to send the super-frame.

In some possible implementations, in one sub-frame, a pilot sequence including a plurality of pilot symbols in a first polarization direction is different from a pilot sequence including a plurality of pilot symbols in a second polarization direction, to avoid a problem that the receiver cannot distinguish between the two polarization directions in actual transmission. The first polarization direction and the second polarization direction are orthogonal to each other.

In some possible implementations, in one sub-frame, a sum of real parts of all pilot symbols in a polarization direction is 0, and a sum of imaginary parts of all the pilot symbols in the polarization direction is 0, so that direct current balance (DC Balance) can be achieved, facilitating signal quality recovery at the receiver. In the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0, so that direct current balance (DC Balance) can be achieved, facilitating signal quality recovery at the receiver.

In some possible implementations, in one sub-frame, for all pilot symbols in a polarization direction, a quantity of pilot symbols having the values -A-Aj, -A+Aj, A-Aj, and A+Aj differ pairwise by no more than 2. This effectively ensures that quantities of symbols are approximately balanced in each polarization direction.

In some possible implementations, in one sub-frame, a quantity of pilot symbols having the value of -A-Aj in two polarization directions, a quantity of pilot symbols having the value of -A+Aj in two polarization directions, a quantity of pilot symbols having the value of A-Aj in two polarization directions, and a quantity of pilot symbols having the value of A+Aj in two polarization directions are equal to each other. This effectively ensures balance between quantities of symbols in the two polarization directions.

In some possible implementations, the first-type sub-frame starts with a pilot symbol, so that arrangement of pilot symbols is more conducive to standardization.

In some possible implementations, the $N_{FAW}$ consecutive frame alignment word symbols are arranged starting from a symbol immediately following the pilot symbol in the first-type sub-frame, so that a structure of the sub-frame is more orderly.

In some possible implementations, the first-type sub-frame further includes a reserved symbol and a symbol before framing, and in the first-type sub-frame, the frame alignment word symbols are located before the reserved symbol, and the reserved symbol is located before the symbol before framing. This enriches a functional implementation of the first-type sub-frame.

In some possible implementations, the super-frame includes at least one second-type sub-frame, and the second-type sub-frame further includes a symbol before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;

$N_{PG}$=128, $N_{CW}$=344064, and $N_F$=346880, 347136, 347392, 347520, 347648, 347776, 347904, or 348160;

$N_{PG}$=128, $N_{CW}$=516096, and $N_F$=520192, 520320, 520448, 520576, 520704, 520832, 520960, 521088, 521472, 521600, 521856, or 522240;

$N_{PG}$=128, $N_{CW}$=688128, and $N_F$=693760, 693888, 694144, 694272, 694400, 694656, 694784, 694912, 695040, 695296, 695552, 695808, 696192, or 696320;

$N_{PG}$=128, $N_{CW}$=150528, and $N_F$=152064, 152192, or 152320;

$N_{PG}$=128, $N_{CW}$=129024, and $N_F$=130176, or 130560;

$N_{PG}$=128, $N_{CW}$=107520, and $N_F$=108416, 108544, 108672, or 108800;

$N_{PG}$=128, $N_{CW}$=175616, and $N_F$=177152, 177280, 177408, 177536, or 177664;

$N_{PG}$=128, $N_{CW}$=351232, and $N_F$=354304, 354432, 354560, 354688, 354816, 354944, 355072, 355200, or 355328;

$N_{PG}$=128, $N_{CW}$=526848, and $N_F$=531200, 531456, 531712, 531840, 532224, 532480, 532608, 532864, 532992, or 533120;

$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;

$N_{PG}$=96, $N_{CW}$=172032, and $N_F$=173952, 174048, 174240, 174336, 174432, or 174528;

$N_{PG}$=96, $N_{CW}$=344064, and $N_F$=347904, 348000, 348096, 348192, 348384, 348480, 348672, 348768, 348864, or 349056;

$N_{PG}$=96, $N_{CW}$=516096, and $N_F$=521664, 521856, 522144, 522240, 522720, 522816, 523008, 523200, 523296, 523393, 523488, 523584, or 523776;

$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;

$N_{PG}$=96, $N_{CW}$=150528, and $N_F$=152160, 152256, 152352, 152448, 152544, 152640, or 152736;

$N_{PG}$=96, $N_{CW}$=129024, and $N_F$=130464, 130560, 130752, 130848, or 130944;

$N_{PG}$=96, $N_{CW}$=107520, and $N_F$=108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is quadrature phase shift keying QPSK, and A=-1 or 1; in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

According to a fifth aspect, an embodiment of this application provides a data transmission apparatus used at a receiver. The data transmission apparatus includes a receiving unit and a processing unit. The receiving unit is configured to receive a super-frame including a plurality of sub-frames, where the sub-frame includes pilot symbols. In a polarization direction, a quantity NPS of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame include one pilot symbol located at a fixed position, $N_{PG}$ is 96 or 128, the super-frame includes one first-type sub-frame, the first-type sub-frame further includes $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number. The processing unit is configured to decode the super-frame.

In some possible implementations, in one sub-frame, a pilot sequence including a plurality of pilot symbols in a first polarization direction is different from a pilot sequence including a plurality of pilot symbols in a second polarization direction, to avoid a problem that the receiver cannot distinguish between the two polarization directions in actual transmission. The first polarization direction and the second polarization direction are orthogonal to each other.

In some possible implementations, in one sub-frame, a sum of real parts of all pilot symbols in a polarization direction is 0, and a sum of imaginary parts of all the pilot symbols in the polarization direction is 0, so that direct current balance (DC Balance) can be achieved, facilitating signal quality recovery at the receiver. In the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0, so that direct current balance (DC Balance) can be achieved, facilitating signal quality recovery at the receiver.

In some possible implementations, in one sub-frame, for all pilot symbols in a polarization direction, a quantity of pilot symbols having the values -A-Aj, -A+Aj, A-Aj, and A+Aj differ pairwise by no more than 2. This effectively ensures that quantities of symbols are approximately balanced in each polarization direction.

In some possible implementations, in one sub-frame, a quantity of pilot symbols having the value of -A-Aj in two polarization directions, a quantity of pilot symbols having the value of -A+Aj in two polarization directions, a quantity of pilot symbols having the value of A-Aj in two polarization directions, and a quantity of pilot symbols having the value of A+Aj in two polarization directions are equal to each other. This effectively ensures balance between quantities of symbols in the two polarization directions.

In some possible implementations, the first-type sub-frame starts with a pilot symbol, so that arrangement of pilot symbols is more conducive to standardization.

In some possible implementations, the $N_{FAW}$ consecutive frame alignment word symbols are arranged starting from a symbol immediately following the pilot symbol in the first-type sub-frame, so that a structure of the sub-frame is more orderly.

In some possible implementations, the first-type sub-frame further includes a reserved symbol and a symbol before framing, and in the first-type sub-frame, the frame alignment word symbols are located before the reserved symbol, and the reserved symbol is located before the symbol before framing. This enriches a functional implementation of the first-type sub-frame.

In some possible implementations, the super-frame includes at least one second-type sub-frame, and the second-type sub-frame further includes a symbol before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}=128$, $N_{CW}=172032$, and $N_F=173440$, 173568, 173696, 173824, 173952, or 174080;

$N_{PG}=128$, $N_{CW}=344064$, and $N_F=346880$, 347136, 347392, 347520, 347648, 347776, 347904, or 348160;

$N_{PG}=128$, $N_{CW}=516096$, and $N_F=520192$, 520320, 520448, 520576, 520704, 520832, 520960, 521088, 521472, 521600, 521856, or 522240;

$N_{PG}=128$, $N_{CW}=688128$, and $N_F=693760$, 693888, 694144, 694272, 694400, 694656, 694784, 694912, 695040, 695296, 695552, 695808, 696192, or 696320;

$N_{PG}=128$, $N_{CW}=150528$, and $N_F=152064$, 152192, or 152320;

$N_{PG}=128$, $N_{CW}=129024$, and $N_F=130176$, or 130560;

$N_{PG}=128$, $N_{CW}=107520$, and $N_F=108416$, 108544, 108672, or 108800;

$N_{PG}=128$, $N_{CW}=175616$, and $N_F=177152$, 177280, 177408, 177536, or 177664;

$N_{PG}=128$, $N_{CW}=351232$, and $N_F=354304$, 354432, 354560, 354688, 354816, 354944, 355072, 355200, or 355328;

$N_{PG}=128$, $N_{CW}=526848$, and $N_F=531200$, 531456, 531712, 531840, 532224, 532480, 532608, 532864, 532992, or 533120;

$N_{PG}=128$, $N_{CW}=702464$, and $N_F=708096$, 708224, 708480, 708608, 708736, 708864, 708992, 709120, 709376, 709504, 709632, 709888, 710016, 710144, 710272, 710400, 710528, or 710656;

$N_{PG}=96$, $N_{CW}=172032$, and $N_F=173952$, 174048, 174240, 174336, 174432, or 174528;

$N_{PG}=96$, $N_{CW}=344064$, and $N_F=347904$, 348000, 348096, 348192, 348384, 348480, 348672, 348768, 348864, or 349056;

$N_{PG}=96$, $N_{CW}=516096$, and $N_F=521664$, 521856, 522144, 522240, 522720, 522816, 523008, 523200, 523296, 523393, 523488, 523584, or 523776;

$N_{PG}=96$, $N_{CW}=688128$, and $N_F=695520$, 695808, 695904, 696000, 696192, 696384, 696672, 696768, 696864, 696960, 697056, 697248, 697344, 697536, 697632, 697728, 698112, or 698400;

$N_{PG}=96$, $N_{CW}=150528$, and $N_F=152160$, 152256, 152352, 152448, 152544, 152640, or 152736;

$N_{PG}=96$, $N_{CW}=129024$, and $N_F=130464$, 130560, 130752, 130848, or 130944;

$N_{PG}$=96, $N_{CW}$=107520, and $N_F$=108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is quadrature phase shift keying QPSK, and A=-1 or 1; in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

BRIEF DESCRIPTION OF DRAWINGS

FIG. 1 is a diagram of a communication system to which an embodiment of this application is applied;
FIG. 2A to FIG. 2C are diagrams of framing processes according to an embodiment of this application;
FIG. 3 is a diagram of a data transmission method according to an embodiment of this application;
FIG. 4 is a diagram of a structure of a super-frame according to an embodiment of this application;
FIG. 5A and FIG. 5B are diagrams of structures of sub-frames according to an embodiment of this application;
FIG. 6A and FIG. 6B are diagrams of other structures of sub-frames according to an embodiment of this application;
FIG. 7A and FIG. 7B are diagrams of constellation diagrams in two polarization directions according to an embodiment of this application;
FIG. 8A and FIG. 8B are other diagrams of constellation diagrams in two polarization directions according to an embodiment of this application;
FIG. 9 is a diagram of analog symbol data streams according to an embodiment of this application;
FIG. 10A and FIG. 10B are diagrams of effect of cross-correlation and autocorrelation according to an embodiment of this application;
FIG. 11A to FIG. 11C are diagrams of a first implementation of a super-frame and sub-frames according to an embodiment of this application;
FIG. 12A to FIG. 12C are diagrams of a second implementation of a super-frame and sub-frames according to an embodiment of this application;
FIG. 13A to FIG. 13C are diagrams of a third implementation of a super-frame and sub-frames according to an embodiment of this application;
FIG. 14A to FIG. 14C are diagrams of a fourth implementation of a super-frame and sub-frames according to an embodiment of this application;
FIG. 15A to FIG. 15C are diagrams of a fifth implementation of a super-frame and sub-frames according to an embodiment of this application;
FIG. 16A to FIG. 16C are diagrams of a sixth implementation of a super-frame and sub-frames according to an embodiment of this application;
FIG. 17A to FIG. 17C are diagrams of a seventh implementation of a super-frame and sub-frames according to an embodiment of this application;
FIG. 18A to FIG. 18C are diagrams of an eighth implementation of a super-frame and sub-frames according to an embodiment of this application;
FIG. 19A to FIG. 19C are diagrams of a ninth implementation of a super-frame and sub-frames according to an embodiment of this application;
FIG. 20A to FIG. 20C are diagrams of a tenth implementation of a super-frame and sub-frames according to an embodiment of this application;
FIG. 21A to FIG. 21C are diagrams of an eleventh implementation of a super-frame and sub-frames according to an embodiment of this application;
FIG. 22A to FIG. 22C are diagrams of a twelfth implementation of a super-frame and sub-frames according to an embodiment of this application;
FIG. 23A to FIG. 23C are diagrams of a thirteenth implementation of a super-frame and sub-frames according to an embodiment of this application;

FIG. 24A to FIG. 24C are diagrams of a fourteenth implementation of a super-frame and sub-frames according to an embodiment of this application;

FIG. 25 is a diagram of a structure of a data transmission apparatus used at a transmitter according to an embodiment of this application;

FIG. 26 is a diagram of a structure of a data transmission apparatus used at a receiver according to an embodiment of this application; and

FIG. 27 is a diagram of another structure of a data transmission apparatus according to an embodiment of this application.

DESCRIPTION OF EMBODIMENTS

Embodiments of this application provide a data transmission method for optical communication and a related apparatus. Every 96 or 128 consecutive symbols in a sub-frame include one pilot symbol. It can be learned that pilot symbols are inserted into the sub-frame at a greater interval, thereby reducing overhead.

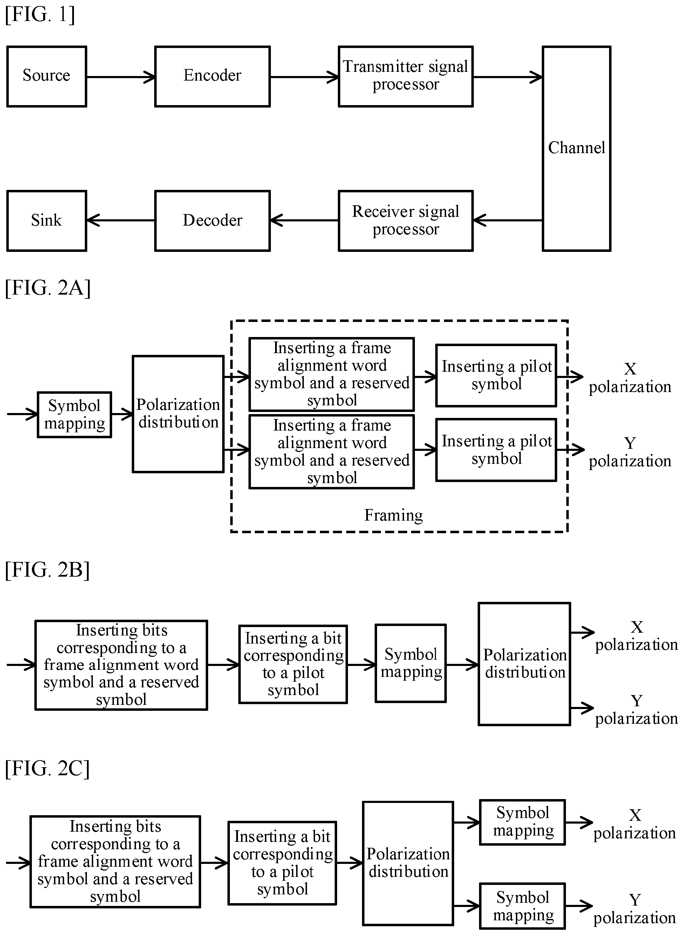

FIG. 1 is a diagram of a communication system to which an embodiment of this application is applied. As shown in FIG. 1, at a transmitter, a source provides a to-be-sent data stream. An encoder receives the data stream, encodes the data stream to obtain codeword information obtained by combining parity bits and information bits, and sends the codeword information to a transmitter signal processor for framing. After being transmitted through a channel, the codeword information reaches a receiver. After receiving a distorted signal generated due to noise or other impairments in the channel, the receiver sends the distorted signal to a receiver signal processor for operations such as dispersion compensation, alignment, and phase recovery, then decoding is performed by a decoder to recover original data, and the original data is sent to a sink. The data transmission method provided in embodiments of this application is applied to the transmitter signal processor shown in FIG. 1, and is a very important part in the communication system.

FIG. 2A to FIG. 2C are diagrams of framing processes according to an embodiment of this application. In a framing manner, as shown in FIG. 2A, symbol mapping (symbol mapping) is performed on a received data sequence, including but not limited to quadrature phase shift keying (Quadrature Phase Shift Keying, QPSK) and quadrature amplitude modulation (Quadrature Amplitude Modulation, QAM), and then polarization symbol distribution (Polarization distribution) is performed to obtain a dual-polarization (Dual-polarization, DP) symbol, for example, a DP-QPSK, DP-8QAM, DP-16QAM, DP-32QAM, or DP-64QAM symbol. A specific quantity of dual-polarization symbols are framed. These dual-polarization symbols before framing are referred to as symbols before framing, or may be referred to as payload (payload) symbols. The framing process is as follows: A frame alignment word sequence (Frame Alignment Word Sequence, FAW Sequence), a reserved symbol (Reserved symbol) sequence, and a pilot sequence (Pilot Sequence) are inserted in each of X and Y polarization directions to obtain a to-be-sent dual-polarization symbol sequence, which is referred to as a super-frame (super-frame) or a multi-frame (multi-frame). The frame alignment word sequence is also referred to as a super-frame alignment word sequence (Super-Frame Alignment Word Sequence). It should be noted that the frame alignment word sequence may also be used for link training, and in this case, the frame alignment word symbol may be considered as a training symbol sequence.

In embodiments of this application, one dual-polarization symbol may be represented by two symbols, where one symbol is located in the X polarization direction, the other symbol is located in the Y polarization direction, and each symbol may be represented by a complex number. For example, a symbol obtained through 16QAM modulation may be represented by any one of the following 16 complex numbers: $\pm 1 \pm 1j$, $\pm 1 \pm 3j$, $\pm 3 \pm 1j$, and $\pm 3 \pm 3j$, where j is a complex number unit, which may alternatively be represented by another letter, for example, i. It should be understood that, in some cases, a real part and an imaginary part are normalized. However, this does not change an underlying principle. Further, a sequence having N dual-polarization symbols may be completely represented by two complex number sequences whose lengths are N, where one complex number sequence represents a symbol on the X polarization, and the other complex number sequence represents a symbol on the Y polarization. Each complex number sequence whose length is N is represented by a real part sequence whose length is N and an imaginary part sequence whose length is N, where N is an integer greater than 1.

Generally, the received data sequence is an information and parity sequence obtained through forward error correction (Forward Error Correction, FEC), and a framing operation shown in FIG. 2A is an operation performed on a symbol. In another framing manner, as shown in FIG. 2B, for a received data sequence, bits that correspond to a frame alignment word sequence, a reserved symbol sequence, and a pilot sequence are first inserted according to a used symbol mapping rule, and then symbol mapping and polarization distribution are performed to obtain a super-frame that is the same as that obtained through the operation shown in FIG. 2A. Similarly, in still another framing manner, as shown in FIG. 2C, for a received data sequence, bits that correspond to a frame alignment word sequence, a reserved symbol sequence, and a pilot sequence are first inserted according to a used symbol mapping rule, and then polarization distribution and symbol mapping are performed to obtain a super-frame that is the same as that obtained through the operation shown in FIG. 2A. It should be understood that, in addition to the framing manners described in FIG. 2A to FIG. 2C, there may be another similar framing manner. Details are not described in this application.

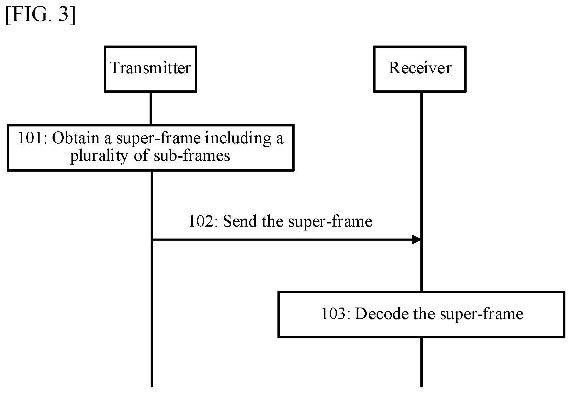

FIG. 3 is a diagram of a data transmission method according to an embodiment of this application. As shown in FIG. 3, the data transmission method includes the following steps.

101: Obtain a super-frame including a plurality of sub-frames.

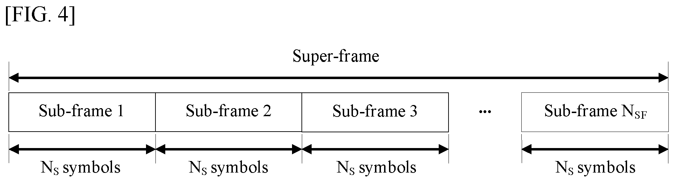

FIG. 4 is a diagram of a structure of a super-frame according to an embodiment of this application. As shown in FIG. 4, the super-frame includes $N_{SF}$ sub-frames, and each sub-frame includes $N_S$ symbols. In this case, the super-frame includes $N_F$ symbols, where $N_F = N_{SF} \times N_S$, and both $N_S$ and $N_{SF}$ are integers greater than 1. The sub-frames in the super-frame are classified into two types, and are denoted as a first-type sub-frame and a second-type sub-frame herein. The following separately describes the two types of sub-frames.

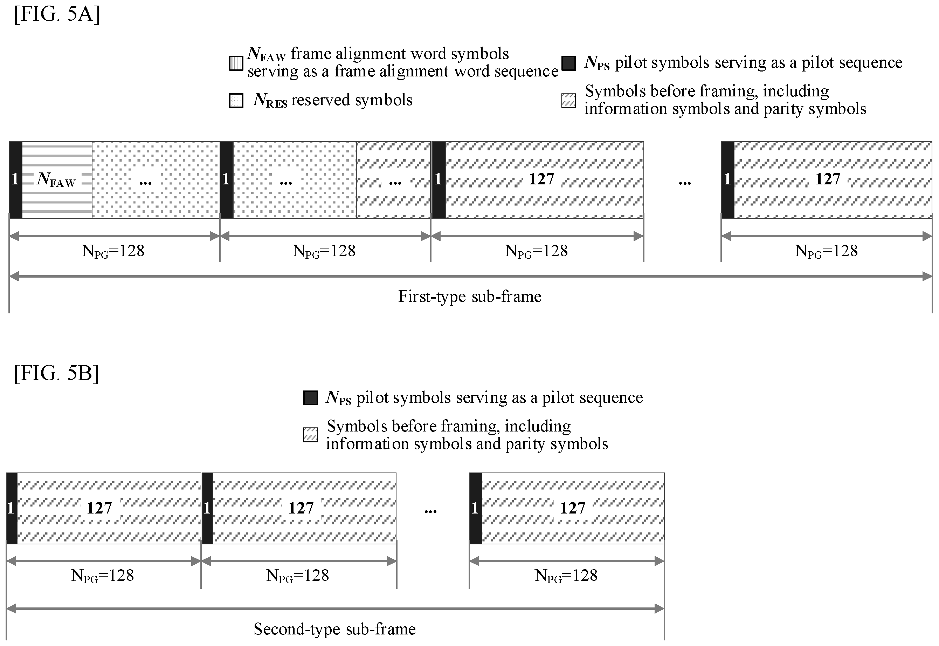

FIG. 5A and FIG. 5B are diagrams of structures of sub-frames according to an embodiment of this application. FIG. 5A shows a structure of the first-type sub-frame. The first-type sub-frame includes pilot symbols, frame alignment word symbols, reserved symbols, and payload symbols. Generally, the first-type sub-frame is a sub-frame arranged at a $1^{st}$ position in the super-frame, and certainly, may alternatively be located at another position in the super-frame. For example, the first-type sub-frame may alternatively be a sub-frame arranged at a last position in the super-frame. A sub-frame other than the first-type sub-frame in the super-frame is the second-type sub-frame. As shown in FIG. 5B, the second-type sub-frame is different from the first-type sub-frame, and the second-type sub-frame includes pilot symbols and payload symbols, but does not include a frame alignment word symbol or a reserved symbol.

For the first-type sub-frame and the second-type sub-frame, each sub-frame includes the pilot symbols, and the pilot symbol is used for carrier phase recovery. In a polarization direction, a quantity of pilot symbols in the sub-frame is denoted as $N_{PS}$, where $N_{PS}$ is an even number greater than 0. A quantity of frame alignment word symbols in the first-type sub-frame is denoted as $N_{FAW}$, where $N_{FAW}$ is an even number. Generally, the first-type sub-frame starts with a pilot symbol, and the $N_{FAW}$ frame alignment word symbols are arranged immediately adjacent to the pilot symbol.

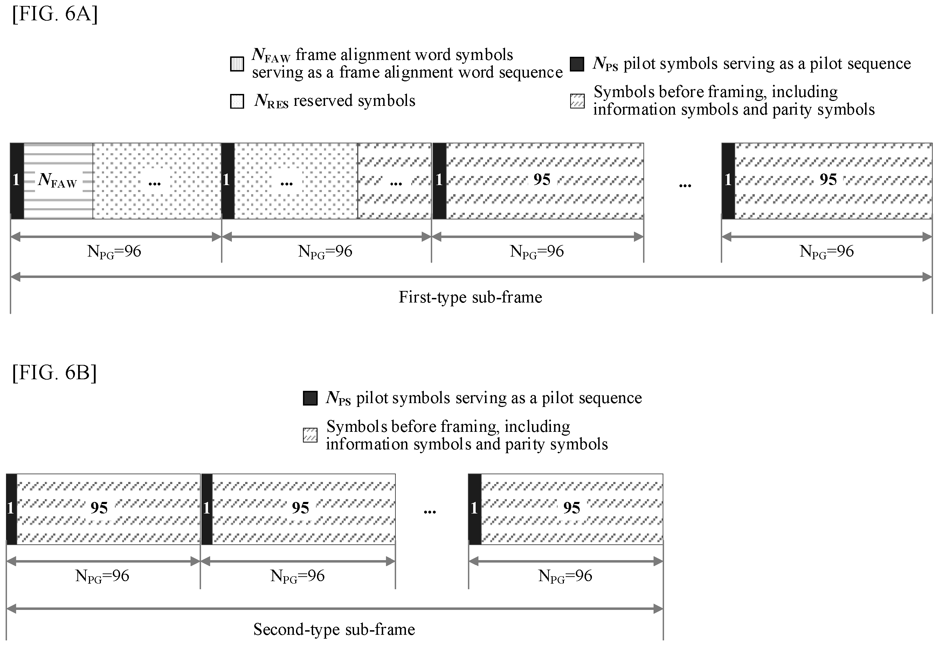

FIG. 6A and FIG. 6B are diagrams of other structures of sub-frames according to an embodiment of this application. For each sub-frame in the super-frame, every $N_{PG}$ consecutive symbols in the sub-frame include one pilot symbol located at a fixed position, where $N_{PG}$ is 96 or 128. To be specific, $N_{PG}$ shown in FIG. 5A and FIG. 5B is 128, and $N_{PG}$ shown in FIG. 6A and FIG. 6B is 96. It should be understood that, because the position of the pilot symbol in every $N_{PG}$ consecutive symbols is fixed, spacing between any two consecutive pilot symbols in the sub-frame is uniform. Generally, the pilot symbol is located at a start position in every $N_{PG}$ consecutive symbols. Certainly, the pilot symbol is located at any position in every $N_{PG}$ consecutive symbols. This is not limited herein.

It should be noted that the frame alignment word symbols are used for alignment between super-frames, that is, $N_{FAW}$ consecutive symbols starting from a $2^{nd}$ symbol in the first-type sub-frame are used for frame alignment. In addition, the frame alignment word symbols may alternatively implement an alignment function together with the pilot symbols. It should be understood that the frame alignment word symbols are arranged consecutively. As shown in FIG. 5A, FIG. 5B, FIG. 6A, and FIG. 6B, the $N_{FAW}$ frame alignment word symbols are arranged immediately adjacent to the pilot symbol, or the $N_{FAW}$ frame alignment word symbols may be separated from the pilot symbol by one or more symbols. A plurality of frame alignment word symbols are usually followed by a plurality of reserved symbols, which may be reserved for future use. The reserved symbols need to be randomized, and may not be symbols in a constellation diagram of a used modulation format. Certainly, in some application, the reserved symbols may alternatively be symbols in the constellation diagram of the used modulation format. Alternatively, a part of the reserved symbols may be fixed for other purposes, for example, optical signal-to-noise ratio (optical signal-to-noise ratio, OSNR) measurement and end-to-end (E2E) delay measurement. Alternatively, the reserved symbols may be located in one of a plurality of second-type sub-frames. This is not limited in this application. Remaining symbols are symbols before framing (that is, payload symbols) including information symbols and parity symbols, where the pilot symbols do not overlap the reserved symbols, and the pilot symbols do not overlap the symbols before framing either. In other words, there is no symbol that serves both a pilot symbol and a symbol before framing, and there is no symbol that serves both a pilot symbol and a reserved symbol.

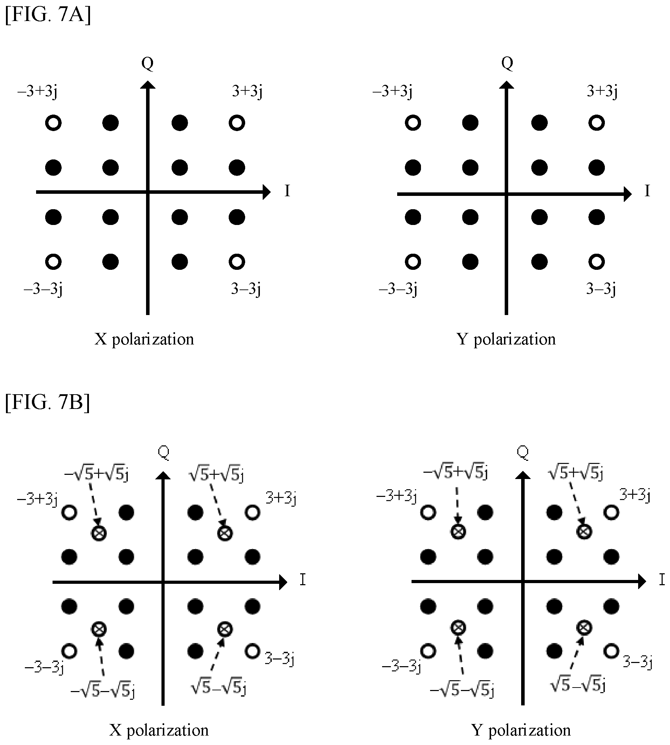

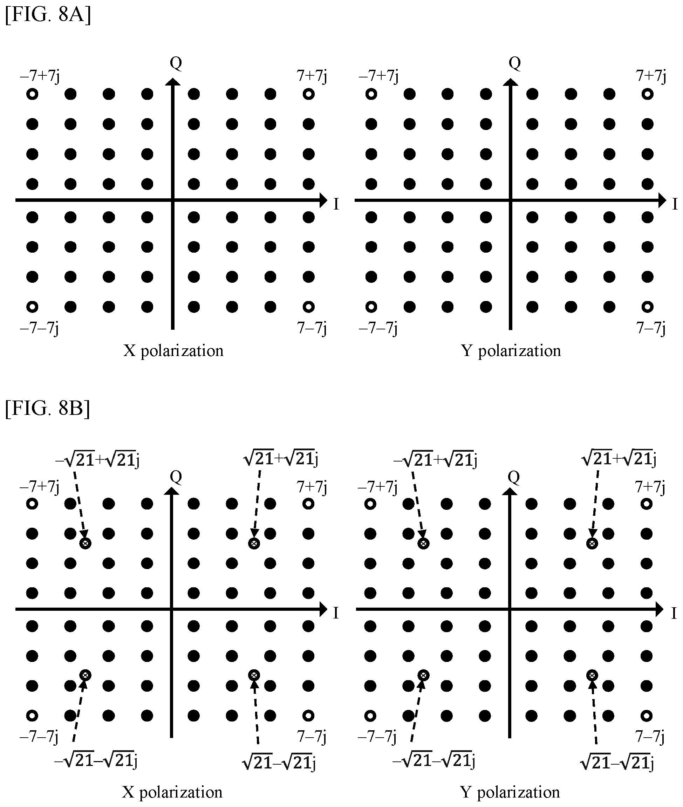

FIG. 7A and FIG. 7B are diagrams of constellation diagrams in two polarization directions according to an embodiment of this application. FIG. 8A and FIG. 8B are other diagrams of constellation diagrams in two polarization directions according to an embodiment of this application. It should be noted that each pilot symbol is one of four complex numbers: -A-Aj, -A+Aj, A-Aj, and A+Aj, where A is a real number. In embodiments of this application, a value of A is determined based on a modulation format used during symbol generation. In some actual application scenarios, -A-Aj, -A+Aj, A-Aj, and A+Aj are symbols in a constellation diagram of the used modulation format. For example, if QPSK is used, there are only four symbols. In this case, A=1 or -1, and each pilot symbol may be represented by one of -1-1j, -1+1j, 1-1j, and 1+1j. In one sub-frame, pilot symbols represented by the four complex numbers all exist. If 16QAM is used, there are 16 symbols. In this case, A=1, -1, 3, or -3. Generally, the pilot symbols are four outermost symbols in a constellation diagram, as indicated by hollow symbols in FIG. 7A. In this case, A=3 or -3, and each pilot symbol may be represented by one of -3-3j, -3+3j, 3-3j, and 3+3j. In one sub-frame, pilot symbols represented by the four complex numbers all exist. Similarly, if 64QAM is used, there are 64 symbols. In this case, A=1, -1, 3, -3, 5, -5, 7, or -7. Generally, in a complex number representing a pilot symbol, A=5, -5, 7, or -7. Assuming that A=7 or -7, as indicated by hollow symbols in FIG. 8A, each pilot symbol may be represented by one of -7-7j, -7+7j, 7-7j, and 7+7j. In one sub-frame, pilot symbols represented by the four complex numbers all exist. Similarly, the same principle applies to the frame alignment word symbol. Alternatively, a higher-order modulation format may be used. Details are not described in this application. In an actual transmission process, this can reduce a probability of a symbol error and facilitate channel estimation.

It should be noted that each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, where $A_{FAW}$ is a real number, and $A_{FAW}$ may be equal to A, or may not be equal to A. Typically, $A_{FAW}$ is equal to A. In this case, an operation of inserting a training symbol, a pilot symbol, and a frame alignment word symbol in a framing operation is simple.

It should be noted that, symbols in the constellation diagram may alternatively be compressed, and correspondingly, a value of A is also compressed. 16QAM is used as an example, and power normalization is performed on 16 symbols in a 16QAM constellation diagram. In this case, the values are changed to $\{\pm\frac{1}{\sqrt{10}}\pm\frac{1}{\sqrt{10}}j, \pm\frac{1}{\sqrt{10}}\pm\frac{3}{\sqrt{10}}j, \pm\frac{3}{\sqrt{10}}\pm\frac{1}{\sqrt{10}}j, \pm\frac{3}{\sqrt{10}}\pm\frac{3}{\sqrt{10}}j\}$ , and the value of A is $\frac{1}{\sqrt{10}}$, $-\frac{1}{\sqrt{10}}$, $\frac{3}{\sqrt{10}}$, or $-\frac{3}{\sqrt{10}}$ . Alternatively, normalization in another manner may be used. This is not limited in this application.

64QAM is used as an example, and power normalization is performed on 64 symbols in a 64QAM constellation diagram. In this case, the values are changed to $\{\pm\frac{1}{\sqrt{42}}\pm\frac{1}{\sqrt{42}}j,$ $\pm\frac{1}{\sqrt{42}}\pm\frac{3}{\sqrt{42}}j,$ $\pm\frac{1}{\sqrt{42}}\pm\frac{5}{\sqrt{42}}j,$ $\pm\frac{1}{\sqrt{42}}\pm\frac{7}{\sqrt{42}}j,$ $\pm\frac{3}{\sqrt{42}}\pm\frac{1}{\sqrt{42}}j,$ $\pm\frac{5}{\sqrt{42}}\pm\frac{1}{\sqrt{42}}j,$ $\pm\frac{7}{\sqrt{42}}\pm\frac{1}{\sqrt{42}}j,$ $\pm\frac{3}{\sqrt{42}}\pm\frac{3}{\sqrt{42}}j,$ $\pm\frac{3}{\sqrt{42}}\pm\frac{5}{\sqrt{42}}j,$ $\pm\frac{3}{\sqrt{42}}\pm\frac{7}{\sqrt{42}}j,$ $\pm\frac{5}{\sqrt{42}}\pm\frac{3}{\sqrt{42}}j,$ $\pm\frac{7}{\sqrt{42}}\pm\frac{3}{\sqrt{42}}j,$ $\pm\frac{5}{\sqrt{42}}\pm\frac{5}{\sqrt{42}}j,$ $\pm\frac{5}{\sqrt{42}}\pm\frac{7}{\sqrt{42}}j,$ $\pm\frac{7}{\sqrt{42}}\pm\frac{5}{\sqrt{42}}j,$ $\pm\frac{7}{\sqrt{42}}\pm\frac{7}{\sqrt{42}}j\}$ , and the value of A is $\frac{1}{\sqrt{42}}$, $-\frac{1}{\sqrt{42}}$, $\frac{3}{\sqrt{42}}$, $-\frac{3}{\sqrt{42}}$, $\frac{5}{\sqrt{42}}$, $-\frac{5}{\sqrt{42}}$, $\frac{7}{\sqrt{42}}$ , or $-\frac{7}{\sqrt{42}}$ . Alternatively, normalization in another manner may be used. This is not limited in this application.

It should be understood that, when the pilot symbols -A-Aj, -A+Aj, A-Aj, and A+Aj are four outermost symbols in the constellation diagram, the pilot symbols have high sensitivity (sensitivity), but have a high peak to average power (peak to average power) ratio. When the pilot symbols -A-Aj, -A+Aj, A-Aj, and A+Aj are four innermost symbols in the constellation diagram, the pilot symbols have low noise (noise), but have low sensitivity (sensitivity).

It should be noted that, in some actual application scenarios, alternatively, the pilot symbols -A-Aj, -A+Aj, A-Aj, and A+Aj may not be the symbols in the constellation diagram of the used modulation format, and may be four symbols in an intermediate area between the four outermost symbols and the four innermost symbols in the constellation diagram. In this case, the pilot symbols have fair noise and sensitivity, but have a low peak to average power ratio. 16QAM is used as an example, values of the 16 symbols in the 16QAM constellation diagram are one of $\{\pm1\pm1j, \pm1\pm3j, \pm3\pm1j, \pm3\pm3j\}$, and the value of the real number A meets $1\leq A\leq 3$. More specifically, as shown in FIG. 7B, outermost four symbols in the constellation diagram are respectively 3 . 3j, 3 - 3j, -3 + 3j, and -3 - 3j, and innermost four symbols in the constellation diagram are respectively 1 . 1j, 1 - 1j, -1 + 1j, and -1 - 1j. Values -A-Aj, -A+Aj, A-Aj, and A+Aj of the pilot symbols may be four symbols in an intermediate area between the four outermost symbols and the four innermost symbols in the 16QAM constellation diagram. The specific value of the real number A may be selected based on an actual application scenario, to achieve a good trade-off of a peak to average power ratio, noise, and sensitivity of the pilot symbols. For example, the value of the real number A = !5, and the value of the pilot symbol is one of $\{-\sqrt{5}-\sqrt{5}j, -\sqrt{5}+\sqrt{5}j, \sqrt{5}-\sqrt{5}j, \sqrt{5}+\sqrt{5}j\}$ . In addition, when power normalization is performed on the 16 symbols in the 16QAM constellation diagram, the values are one of $\{\pm\frac{1}{\sqrt{10}}\pm\frac{1}{\sqrt{10}}j, \pm\frac{1}{\sqrt{10}}\pm\frac{3}{\sqrt{10}}j, \pm\frac{3}{\sqrt{10}}\pm\frac{1}{\sqrt{10}}j, \pm\frac{3}{\sqrt{10}}\pm\frac{3}{\sqrt{10}}j\}$ , and the value of the real number A meets $\frac{1}{\sqrt{10}}\leq A\leq\frac{3}{\sqrt{10}}$ . For example, the value of the real number $A=\frac{\sqrt{2}}{2}$ , and the value of the pilot symbol is one of $\{-\frac{\sqrt{2}}{2}-\frac{\sqrt{2}}{2}j, -\frac{\sqrt{2}}{2}+\frac{\sqrt{2}}{2}j, \frac{\sqrt{2}}{2}-\frac{\sqrt{2}}{2}j, \frac{\sqrt{2}}{2}+\frac{\sqrt{2}}{2}j\}$ . 64QAM is used as an example, values of the 64 symbols in the 64QAM constellation diagram are one of $\{\pm1\pm1j, \pm1\pm3j, \pm1\pm5j, \pm1\pm7j, \pm3\pm1j, \pm5\pm1j, \pm7\pm1j, \pm3\pm3j, \pm3\pm5j, \pm3\pm7j, \pm5\pm3j, \pm7\pm3j, \pm5\pm5j, \pm5\pm7j, \pm7\pm5j, \pm7\pm7j\}$, and the value of the real number A meets $1\leq A\leq7$. More specifically, as shown in FIG. 8B, outermost four symbols in the constellation diagram are respectively 7 . 7j, 7 - 7j, -7 + 7j, and -7 - 7j, and innermost four symbols in the constellation diagram are respectively 1 + 1j, 1 - 1j, -1 + 1j, and -1 - 1j. Values -A-Aj, -A+Aj, A-Aj, and A+Aj of the pilot symbols may be four symbols in an intermediate area between the four outermost symbols and the four innermost symbols in the 64QAM constellation diagram. The specific value of the real number A may be selected based on an actual application scenario, to achieve a good trade-off of a peak to average power ratio, noise, and sensitivity of the pilot symbols. For example, the value of the real number A = !21, and the value of the pilot symbol is one of $\{-\sqrt{21}-\sqrt{21}j, \ -\sqrt{21}+\sqrt{21}j, \ \sqrt{21}-\sqrt{21}j, \ \sqrt{21}+\sqrt{21}j\}$. In addition, when power normalization is performed on the 64 symbols in the 64QAM constellation diagram, the values are one of

$$\{\pm\frac{1}{\sqrt{42}}\pm\frac{1}{\sqrt{42}}j, \ \pm\frac{1}{\sqrt{42}}\pm\frac{3}{\sqrt{42}}j, \ \pm\frac{1}{\sqrt{42}}\pm\frac{5}{\sqrt{42}}j$$

$$\pm\frac{1}{\sqrt{42}}\pm\frac{7}{\sqrt{42}}j, \ \pm\frac{3}{\sqrt{42}}\pm\frac{1}{\sqrt{42}}j, \ \pm\frac{5}{\sqrt{42}}\pm\frac{1}{\sqrt{42}}j, \ \pm\frac{7}{\sqrt{42}}\pm\frac{1}{\sqrt{42}}j, \ \pm\frac{3}{\sqrt{42}}\pm\frac{3}{\sqrt{42}}j, \ \pm\frac{3}{\sqrt{42}}\pm\frac{5}{\sqrt{42}}j,$$

$$\pm\frac{3}{\sqrt{42}}\pm\frac{7}{\sqrt{42}}j, \ \pm\frac{5}{\sqrt{42}}\pm\frac{3}{\sqrt{42}}j, \ \pm\frac{7}{\sqrt{42}}\pm\frac{3}{\sqrt{42}}j, \ \pm\frac{5}{\sqrt{42}}\pm\frac{5}{\sqrt{42}}j, \ \pm\frac{5}{\sqrt{42}}\pm\frac{7}{\sqrt{42}}j, \ \pm\frac{7}{\sqrt{42}}\pm\frac{5}{\sqrt{42}}j,$$

$$\pm\frac{7}{\sqrt{42}}\pm\frac{7}{\sqrt{42}}j\}$$, and the value of the real number A meets $\frac{1}{\sqrt{42}}\leq A\leq\frac{7}{\sqrt{42}}$. For example, the value of the real number $A=\frac{\sqrt{2}}{2}$, and the value of the pilot symbol is one of $\{-\frac{\sqrt{2}}{2}-\frac{\sqrt{2}}{2}j, -\frac{\sqrt{2}}{2}+\frac{\sqrt{2}}{2}j, \ \frac{\sqrt{2}}{2}-\frac{\sqrt{2}}{2}j, \ \frac{\sqrt{2}}{2}+\frac{\sqrt{2}}{2}j\}$.

It should be noted that, in one sub-frame, a pilot sequence including a plurality of pilot symbols in the X polarization direction is different from a pilot sequence including a plurality of pilot symbols in the Y polarization direction. The X polarization direction and the Y polarization direction are orthogonal to each other. For example, the sequence formed by the pilot symbols in the X polarization direction is -A-Aj, -A-Aj, A+Aj, and A-Aj, and the sequence formed by the pilot symbols in the Y polarization direction is -A-Aj, -A-Aj, A+Aj, and A+Aj. The pilot sequences in the two polarization directions differ by one symbol, to avoid a problem that a receiver cannot distinguish between the two polarization directions in actual transmission.

It should be noted that, in one sub-frame, a sum of real parts of all pilot symbols in a polarization direction is 0, and a sum of imaginary parts of all the pilot symbols in the polarization direction is 0. Therefore, a pilot sequence in each sub-frame can achieve direct current balance (DC Balance), facilitating signal quality recovery at the receiver.

It should be noted that, in the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0. Therefore, a frame alignment word sequence in the first-type sub-frame can achieve direct current balance (DC Balance), facilitating signal quality recovery at the receiver.

In a possible scenario, in one sub-frame, a difference between two quantities of symbols having the respective values -A-Aj, -A+Aj, A-Aj, and A+Aj in the pilot sequence in a polarization direction is less than or equal to 2, a quantity of pilot symbols having the value of -A-Aj is the same as a quantity of pilot symbols having the value of A+Aj, and a quantity of pilot symbols having the value of -A+Aj is the same as a quantity of pilot symbols having the value of A-Aj. This effectively ensures that quantities of pilot symbols are approximately balanced in each polarization direction, and further ensures that a sequence formed by the pilot symbols achieves direct current balance, facilitating signal quality recovery at the receiver.

For example, in a polarization direction, a quantity of -A-Aj is $0N_{PS}/44$, a quantity of -A+Aj is $N_{PS}/2-\lfloor N_{PS}/4\rfloor$, a quantity of A-Aj is $N_{PS}/2-\lfloor N_{PS}/4\rfloor$, and a quantity of A+Aj is $0N_{PS}/44$. For another example, in a polarization direction, a quantity of -A-Aj is $N_{PS}/2-\lfloor N_{PS}/4\rfloor$, a quantity of -A+Aj is $0N_{PS}/44$, a quantity of A-Aj is $0N_{PS}/44$, and a quantity of A+Aj is $N_{PS}/2-\lfloor N_{PS}/4\rfloor$. For still another example, in a polarization direction, a quantity of -A-Aj is $\lfloor N_{PS}/4\rfloor+1$, a quantity of -A+Aj is $N_{PS}/2-\lfloor N_{PS}/4\rfloor-1$, a quantity of A-Aj is $N_{PS}/2-\lfloor N_{PS}/4\rfloor-1$, and a quantity of A+Aj is $\lfloor N_{PS}/4\rfloor+1$. For yet another example, in a polarization direction, a quantity of -A-Aj is $\lfloor N_{PS}/4\rfloor-1$, a quantity of -A+Aj is $N_{PS}/2-\lfloor N_{PS}/4\rfloor+1$, a quantity of A-Aj is $N_{PS}/2-\lfloor N_{PS}/4\rfloor+1$, and a quantity of A+Aj is $\lfloor N_{PS}/4\rfloor-1$. $\lfloor a\rfloor$ represents rounding down the positive real number a.

In a possible scenario, $N_{PS}$ is an integer multiple of 4. In one sub-frame, quantities of symbols having the respective values -A-Aj, -A+Aj, A-Aj, and A+Aj in a pilot sequence in a polarization direction are all $N_{PS}/4$. This effectively ensures that quantities of pilot symbols are balanced in each polarization direction, and further ensures that a sequence formed by the pilot symbols achieves direct current balance, facilitating signal quality recovery at the receiver.

In a possible scenario, in one sub-frame, in a total of $N_{FAW}+N_{PS}$ symbols including frame alignment word symbols and pilot symbols in two polarization directions, a quantity of symbols that are -A-Aj, a quantity of symbols that are -A+Aj, a quantity of symbols that are A-Aj, and a quantity of symbols that are A+Aj are the same. This effectively ensures balance between quantities of symbols in the two polarization directions.

In an example, in the $N_{FAW}+N_{PS}$ symbols including pilot symbols and frame alignment word symbols in the two polarization directions, quantities of symbols that are -A-Aj in the two polarization directions are respectively $0(N_{FAW}+N_{PS})/44$ and $(N_{FAW}+N_{PS})/2-0(N_{FAW}+N_{PS})/44$, and a total quantity of symbols that are -A-Aj in the two polarization directions is $(N_{FAW}+N_{PS})/2$; quantities of symbols that are -A+Aj in the two polarization directions are respectively

$$(N_{FAW}+N_{PS})/2-\lfloor(N_{FAW}+N_{PS})/4\rfloor \text{ and } \lfloor(N_{FAW}+N_{PS})/4\rfloor$$, and a total quantity of symbols that are -A+Aj in the two polarization directions is $(N_{FAW}+N_{PS})/2$; quantities of symbols that are A-Aj in the two polarization directions are

respectively $(N_{FAW}+N_{PS})/2-\lfloor(N_{FAW}+N_{PS})/4\rfloor \text{ and } \lfloor(N_{FAW}+N_{PS})/4\rfloor$, and a total quantity of symbols that are A-Aj in the two polarization directions is $(N_{FAW}+N_{PS})/2$; and quantities of symbols that are A+Aj in the two polarization directions are respectively $0(N_{FAW}+N_{PS})/44$ and $(N_{FAW}+N_{PS})/2-0(N_{FAW}+N_{PS})/44$, and a total quantity of symbols that are A+Aj in the two polarization directions is $(N_{FAW}+N_{PS})/2$.

In another example, in the $N_{FAW}+N_{PS}$ symbols including pilot symbols and frame alignment word symbols in the two polarization directions, quantities of symbols that are - A-Aj in the two polarization directions are respectively

$$\lfloor(N_{FAW}+N_{PS})/4\rfloor+1 \text{ and } (N_{FAW}+N_{PS})/2-\lfloor(N_{FAW}+N_{PS})/4\rfloor-1$$, and a total quantity of symbols that are -A-Aj in the two polarization directions is $(N_{FAW}+N_{PS})/2$; quantities of symbols that are -A+Aj in the two polarization directions are

respectively $(N_{FAW}+N_{PS})/2-\lfloor(N_{FAW}+N_{PS})/4\rfloor-1 \text{ and } \lfloor(N_{FAW}+N_{PS})/4\rfloor+1$, and a total quantity of symbols that are -A+Aj in the two polarization directions is $(N_{FAW}+N_{PS})/2$; quantities of symbols that are A-Aj in the two polarization directions are respectively $(N_{FAW}+N_{PS})/2-\lfloor(N_{FAW}+N_{PS})/4\rfloor-1 \text{ and } \lfloor(N_{FAW}+N_{PS})/4\rfloor+1$, and a total quantity of symbols that are A-Aj in the two polarization directions is $(N_{FAW}+N_{PS})/2$; and quantities of symbols that are A+Aj in the two polarization directions are respectively $\lfloor(N_{FAW}+N_{PS})/4\rfloor+1 \text{ and } (N_{FAW}+N_{PS})/2-\lfloor(N_{FAW}+N_{PS})/4\rfloor-1$, and a total quantity of symbols that are A+Aj in the two polarization directions is $(N_{FAW}+N_{PS})/2$.

It should be noted that, in embodiments of this application, a value of a quantity Ncw of symbols before framing in the super-frame includes but is not limited to 172032, 344064, 516096, 688128, 150528, 129024, 107520, 175616, 351232, 526848, 702464, 172032, 344064, 516096, 688128, 150528, 129024, 107520, 175616, 351232, 526848, or 702464.

102: Send the super-frame.

The super-frame sent by the transmitter is transmitted to the receiver through a channel.

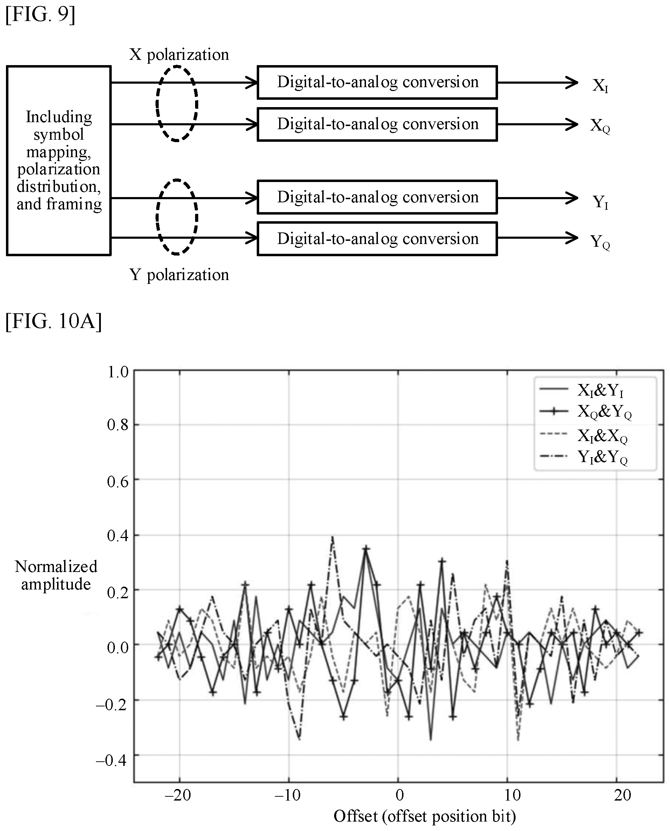

FIG. 9 is a diagram of analog symbol data streams according to an embodiment of this application. As shown in FIG. 9, in some possible scenarios, after digital-to-analog conversion (Digital-to-Analog Conversion, DAC) is performed on a super-frame symbol data stream, the super-frame symbol data stream may be considered as four lanes of analog symbol data streams, which are respectively denoted as $X_I$, $X_Q$, $Y_I$, and $Y_Q$. The analog symbol data stream $X_I$ and the analog symbol data stream $X_Q$ respectively correspond to a real part sequence data stream and an imaginary part sequence data stream in the X polarization direction. The analog symbol data stream $Y_I$ and the analog symbol data stream $Y_Q$ respectively correspond to a real part sequence data stream and an imaginary part sequence data stream in the Y polarization direction. It should be understood that the X polarization direction and the Y polarization direction (which may also be referred to as an H polarization direction and a V polarization direction) are two polarization directions that are orthogonal to each other. In each polarization direction, there are two phase channels that are orthogonal to each other: I (In-phase) and Q (Quadrature). I and Q respectively correspond to the real part sequence data stream and the imaginary part sequence data stream.

103: The receiver decodes the super-frame.

It should be understood that a specific operation after the receiver receives the super-frame is not described in detail in this application. For details, refer to the related descriptions in FIG. 1.

The following describes some specific examples of quantities of different parts of symbols in the super-frame provided in embodiments of this application.

(1) The quantity $N_{CW}$ of symbols before framing is 172032. For example, an open FEC (Open FEC, OFEC) encoding scheme with an encoding overhead of approximately 15.3% is used, or another encoding scheme may be used. A 1st symbol in every $N_{PG}=128$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 1. $N_{FAW}+N_{PS}$ is an even number, $N_{FAW}$ is an even number, and $N_{PS}$ is an even number, and correspondingly, $N_{RES}>0$, and OH= $(N_F-N_{CW})/N_{CW}$.

Parameters other than OH are all symbol quantities, which may be understood as a quantity of dual-polarization symbols, or may be understood as a quantity of symbols in a polarization direction. In addition, quantities of different symbols in two polarization directions are equal to each other. For example, there are 10 frame alignment word symbols in one polarization direction, and there are also 10 frame alignment word symbols in the other polarization direction. On the whole, there are 10 dual-polarization frame alignment word symbols. Subsequent tables may all be understood in this way. Details are not described in this application again.

A frame overhead of a super-frame architecture in cases listed in Table 1 is low: OH<1.20%. Neither the quantity $N_S$ of symbols in each sub-frame nor the quantity $N_F$ of symbols in the super-frame is limited in Table 1.

Table 1

| Sequence number | $N_{SF}$ | $N_{PS}$ | $N_S$ | $N_F$ | OH | $N_{FAW} + N_{RES}$ |
|---|---|---|---|---|---|---|
| 1 | 136 | 10 | 1280 | 174080 | 1.19% | 688 |
| 2 | 113 | 12 | 1536 | 173568 | 0.89% | 180 |
| 3 | 97 | 14 | 1792 | 173824 | 1.04% | 434 |
| 4 | 85 | 16 | 2048 | 174080 | 1.19% | 688 |
| 5 | 68 | 20 | 2560 | 174080 | 1.19% | 688 |
| 6 | 40 | 34 | 4352 | 174080 | 1.19% | 688 |
| 7 | 34 | 40 | 5120 | 174080 | 1.19% | 688 |
| 8 | 20 | 68 | 8704 | 174080 | 1.19% | 688 |
| 9 | 17 | 80 | 10240 | 174080 | 1.19% | 688 |
| 10 | 10 | 136 | 17408 | 174080 | 1.19% | 688 |
| 11 | 8 | 170 | 21760 | 174080 | 1.19% | 688 |
| 12 | 7 | 194 | 24832 | 173824 | 1.04% | 434 |
| 13 | 6 | 226 | 28928 | 173568 | 0.89% | 180 |
| 14 | 5 | 272 | 34816 | 174080 | 1.19% | 688 |
| 15 | 4 | 340 | 43520 | 174080 | 1.19% | 688 |

In some specific application, a bus width (bus width) in a specific DSP implementation of the receiver and the transmitter is 192 or 128. For ease of hardware implementation, the quantity $N_F$ of symbols in the super-frame needs to be an integer multiple of 192 and 128. It should be understood that, when $N_{PG}$=128, to be specific, when one symbol located at a fixed position in every 128 consecutive symbols in each sub-frame is used as a pilot symbol, both the quantity $N_F$ of symbols in the super-frame and the quantity $N_S$ of symbols in each sub-frame are definitely integer multiples of 128. Therefore, when the symbol located at the fixed position in every 128 consecutive symbols in each sub-frame is used as the pilot symbol, it only needs to be considered that the quantity $N_F$ of symbols in the super-frame is an integer multiple of 192. For subsequent tables in which one symbol at a fixed position in every 128 consecutive symbols in each sub-frame is used as a pilot symbol, such understanding applies. Details are not described in this application. Considering that the quantity $N_F$ of symbols in the super-frame needs to be an integer multiple of 192, Table 2 may be obtained with reference to Table 1. In this case, the frame overhead OH in cases listed in Table 2 is less than 1.20%, and the quantity $N_F$ of symbols in the super-frame is an integer multiple of 192 and 128. In addition, the quantity $N_S$ of symbols in each sub-frame is not limited in Table 2.

Table 2

| Sequence number | $N_{SF}$ | $N_{PS}$ | $N_S$ | $N_F$ | OH | $N_{FAW} + N_{RES}$ |
|---|---|---|---|---|---|---|
| 1 | 113 | 12 | 1536 | 173568 | 0.89% | 180 |
| 2 | 6 | 226 | 28928 | 173568 | 0.89% | 180 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 3 may be obtained with reference to Table 2. In this case, the frame overhead OH in cases listed in Table 3 is less than 1.20%, and both the quantity $N_F$ of symbols in the super-frame and the quantity $N_S$ of symbols in each sub-frame are integer multiples of 192 and 128.

Table 3

| Sequence number | $N_{SF}$ | $N_{PS}$ | $N_S$ | $N_F$ | OH | $N_{FAW} + N_{RES}$ |
|---|---|---|---|---|---|---|
| 1 | 113 | 12 | 1536 | 173568 | 0.89% | 180 |

(2) The quantity $N_{CW}$ of symbols before framing is 344064. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 4. $N_{FAW}+N_{PS}$ is an even number, $N_{FAW}$ is an even number, and $N_{PS}$ is an even number, and correspondingly, $N_{RES}>0$, and OH=$(N_F-Ncw)/Ncw$.

A frame overhead of a super-frame architecture in cases listed in Table 4 is low: OH<1.20%. Neither the quantity $N_S$ of symbols in each sub-frame nor the quantity $N_F$ of symbols in the super-frame is limited in Table 4.

Table 4

| Sequence number | $N_{SF}$ | $N_{PS}$ | $N_S$ | $N_F$ | OH | $N_{FAW} + N_{RES}$ |
|---|---|---|---|---|---|---|
| 1 | 271 | 10 | 1280 | 346880 | 0.82% | 106 |
| 2 | 226 | 12 | 1536 | 347136 | 0.89% | 360 |
| 3 | 194 | 14 | 1792 | 347648 | 1.04% | 868 |
| 4 | 170 | 16 | 2048 | 348160 | 1.19% | 1376 |
| 5 | 151 | 18 | 2304 | 347904 | 1.12% | 1122 |
| 6 | 136 | 20 | 2560 | 348160 | 1.19% | 1376 |
| 7 | 113 | 24 | 3072 | 347136 | 0.89% | 360 |
| 8 | 97 | 28 | 3584 | 347648 | 1.04% | 868 |
| 9 | 85 | 32 | 4096 | 348160 | 1.19% | 1376 |
| 10 | 80 | 34 | 4352 | 348160 | 1.19% | 1376 |
| 11 | 68 | 40 | 5120 | 348160 | 1.19% | 1376 |
| 12 | 59 | 46 | 5888 | 347392 | 0.97% | 614 |
| 13 | 40 | 68 | 8704 | 348160 | 1.19% | 1376 |
| 14 | 34 | 80 | 10240 | 348160 | 1.19% | 1376 |
| 15 | 23 | 118 | 15104 | 347392 | 0.97% | 614 |
| 16 | 20 | 136 | 17408 | 348160 | 1.19% | 1376 |
| 17 | 17 | 160 | 20480 | 348160 | 1.19% | 1376 |
| 18 | 16 | 170 | 21760 | 348160 | 1.19% | 1376 |
| 19 | 14 | 194 | 24832 | 347648 | 1.04% | 868 |
| 20 | 12 | 226 | 28928 | 347136 | 0.89% | 360 |
| 21 | 10 | 272 | 34816 | 348160 | 1.19% | 1376 |
| 22 | 9 | 302 | 38656 | 347904 | 1.12% | 1122 |
| 23 | 8 | 340 | 43520 | 348160 | 1.19% | 1376 |

(continued)

| Sequence number | $N_{SF}$ | $N_{PS}$ | $N_S$ | $N_F$ | OH | $N_{FAW} + N_{RES}$ |
|---|---|---|---|---|---|---|
| 24 | 7 | 388 | 49664 | 347648 | 1.04% | 868 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 5 may be obtained with reference to Table 4. In this case, the frame overhead OH in cases listed in Table 5 is less than 1.20%, and the quantity $N_F$ of symbols in the super-frame is an integer multiple of 192 and 128. In addition, a quantity $N_S$ of symbols in each sub-frame is not limited.

Table 5

| Sequence number | $N_{SF}$ | $N_{PS}$ | $N_S$ | $N_F$ | OH | $N_{FAW} + N_{RES}$ |
|---|---|---|---|---|---|---|
| 1 | 226 | 12 | 1536 | 347136 | 0.89% | 360 |
| 2 | 151 | 18 | 2304 | 347904 | 1.12% | 1122 |
| 3 | 113 | 24 | 3072 | 347136 | 0.89% | 360 |
| 4 | 12 | 226 | 28928 | 347136 | 0.89% | 360 |
| 5 | 9 | 302 | 38656 | 347904 | 1.12% | 1122 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 6 may be obtained with reference to Table 5. In this case, the frame overhead OH in cases listed in Table 6 is less than 1.20%, and both the quantity $N_F$ of symbols in the super-frame and the quantity $N_S$ of symbols in each sub-frame are integer multiples of 192 and 128.

Table 6

| Sequence number | $N_{SF}$ | $N_{PS}$ | $N_S$ | $N_F$ | OH | $N_{FAW} + N_{RES}$ |
|---|---|---|---|---|---|---|
| 1 | 226 | 12 | 1536 | 347136 | 0.89% | 360 |
| 2 | 151 | 18 | 2304 | 347904 | 1.12% | 1122 |
| 3 | 113 | 24 | 3072 | 347136 | 0.89% | 360 |

(3) The quantity Ncw of symbols before framing is 516096. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 7. $N_{FAW}+N_{PS}$ is an even number, $N_{FAW}$ is an even number, and $N_{PS}$ is an even number, and correspondingly, $N_{RES}>0$, and OH=($N_F$-Ncw)/Ncw.

A frame overhead of a super-frame architecture in cases listed in Table 7 is low: OH<1.20%. Neither the quantity $N_S$ of symbols in each sub-frame nor the quantity $N_F$ of symbols in the super-frame is limited in Table 7.

Table 7

| Sequence number | $N_{SF}$ | $N_{PS}$ | $N_S$ | $N_F$ | OH | $N_{FAW} + N_{RES}$ |
|---|---|---|---|---|---|---|
| 1 | 407 | 10 | 1280 | 520960 | 0.94% | 794 |
| 2 | 339 | 12 | 1536 | 520704 | 0.89% | 540 |

(continued)

| Sequence number | $N_{SF}$ | $N_{PS}$ | $N_S$ | $N_F$ | OH | $N_{FAW} + N_{RES}$ |
|---|---|---|---|---|---|---|
| 3 | 291 | 14 | 1792 | 521472 | 1.04% | 1302 |
| 4 | 254 | 16 | 2048 | 520192 | 0.79% | 32 |
| 5 | 226 | 18 | 2304 | 520704 | 0.89% | 540 |
| 6 | 204 | 20 | 2560 | 522240 | 1.19% | 2064 |
| 7 | 185 | 22 | 2816 | 520960 | 0.94% | 794 |
| 8 | 170 | 24 | 3072 | 522240 | 1.19% | 2064 |
| 9 | 136 | 30 | 3840 | 522240 | 1.19% | 2064 |
| 10 | 127 | 32 | 4096 | 520192 | 0.79% | 32 |
| 11 | 120 | 34 | 4352 | 522240 | 1.19% | 2064 |
| 12 | 113 | 36 | 4608 | 520704 | 0.89% | 540 |
| 13 | 107 | 38 | 4864 | 520448 | 0.84% | 286 |
| 14 | 102 | 40 | 5120 | 522240 | 1.19% | 2064 |
| 15 | 97 | 42 | 5376 | 521472 | 1.04% | 1302 |
| 16 | 85 | 48 | 6144 | 522240 | 1.19% | 2064 |
| 17 | 68 | 60 | 7680 | 522240 | 1.19% | 2064 |
| 18 | 60 | 68 | 8704 | 522240 | 1.19% | 2064 |
| 19 | 55 | 74 | 9472 | 520960 | 0.94% | 794 |
| 20 | 51 | 80 | 10240 | 522240 | 1.19% | 2064 |
| 21 | 40 | 102 | 13056 | 522240 | 1.19% | 2064 |
| 22 | 37 | 110 | 14080 | 520960 | 0.94% | 794 |
| 23 | 34 | 120 | 15360 | 522240 | 1.19% | 2064 |
| 24 | 30 | 136 | 17408 | 522240 | 1.19% | 2064 |
| 25 | 24 | 170 | 21760 | 522240 | 1.19% | 2064 |
| 26 | 21 | 194 | 24832 | 521472 | 1.04% | 1302 |
| 27 | 20 | 204 | 26112 | 522240 | 1.19% | 2064 |
| 28 | 19 | 214 | 27392 | 520448 | 0.84% | 286 |
| 29 | 18 | 226 | 28928 | 520704 | 0.89% | 540 |
| 30 | 17 | 240 | 30720 | 522240 | 1.19% | 2064 |
| 31 | 16 | 254 | 32512 | 520192 | 0.79% | 32 |
| 32 | 15 | 272 | 34816 | 522240 | 1.19% | 2064 |
| 33 | 12 | 340 | 43520 | 522240 | 1.19% | 2064 |
| 34 | 11 | 370 | 47360 | 520960 | 0.94% | 794 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 8 may be obtained with reference to Table 7. In this case, the frame overhead OH in cases listed in Table 8 is less than 1.20%, and the quantity $N_F$ of symbols in the super-frame is an integer multiple of 192 and 128. In addition, the quantity $N_S$ of symbols in each sub-frame is not limited in Table 8.

Table 8

| Sequence number | $N_{SF}$ | $N_{PS}$ | $N_S$ | $N_F$ | OH | $N_{FAW} + N_{RES}$ |
|---|---|---|---|---|---|---|
| 1 | 339 | 12 | 1536 | 520704 | 0.89% | 540 |
| 2 | 291 | 14 | 1792 | 521472 | 1.04% | 1302 |
| 3 | 226 | 18 | 2304 | 520704 | 0.89% | 540 |
| 4 | 204 | 20 | 2560 | 522240 | 1.19% | 2064 |
| 5 | 170 | 24 | 3072 | 522240 | 1.19% | 2064 |
| 6 | 136 | 30 | 3840 | 522240 | 1.19% | 2064 |
| 7 | 120 | 34 | 4352 | 522240 | 1.19% | 2064 |
| 8 | 113 | 36 | 4608 | 520704 | 0.89% | 540 |
| 9 | 102 | 40 | 5120 | 522240 | 1.19% | 2064 |
| 10 | 97 | 42 | 5376 | 521472 | 1.04% | 1302 |
| 11 | 85 | 48 | 6144 | 522240 | 1.19% | 2064 |
| 12 | 68 | 60 | 7680 | 522240 | 1.19% | 2064 |
| 13 | 60 | 68 | 8704 | 522240 | 1.19% | 2064 |
| 14 | 51 | 80 | 10240 | 522240 | 1.19% | 2064 |
| 15 | 40 | 102 | 13056 | 522240 | 1.19% | 2064 |
| 16 | 34 | 120 | 15360 | 522240 | 1.19% | 2064 |
| 17 | 30 | 136 | 17408 | 522240 | 1.19% | 2064 |
| 18 | 24 | 170 | 21760 | 522240 | 1.19% | 2064 |
| 19 | 21 | 194 | 24832 | 521472 | 1.04% | 1302 |
| 20 | 20 | 204 | 26112 | 522240 | 1.19% | 2064 |
| 21 | 18 | 226 | 28928 | 520704 | 0.89% | 540 |
| 22 | 17 | 240 | 30720 | 522240 | 1.19% | 2064 |
| 23 | 15 | 272 | 34816 | 522240 | 1.19% | 2064 |
| 24 | 12 | 340 | 43520 | 522240 | 1.19% | 2064 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 9 may be obtained with reference to Table 8. In this case, the frame overhead OH in cases listed in Table 9 is less than 1.20%, and both the quantity $N_F$ of symbols in the super-frame and the quantity $N_S$ of symbols in each sub-frame are integer multiples of 192 and 128.

Table 9

| Sequence number | $N_{SF}$ | $N_{PS}$ | $N_S$ | $N_F$ | OH | $N_{FAW} + N_{RES}$ |
|---|---|---|---|---|---|---|
| 1 | 339 | 12 | 1536 | 520704 | 0.89% | 540 |
| 2 | 226 | 18 | 2304 | 520704 | 0.89% | 540 |
| 3 | 170 | 24 | 3072 | 522240 | 1.19% | 2064 |
| 4 | 136 | 30 | 3840 | 522240 | 1.19% | 2064 |
| 5 | 113 | 36 | 4608 | 520704 | 0.89% | 540 |

(continued)

| Sequence number | $N_{SF}$ | $N_{PS}$ | $N_S$ | $N_F$ | OH | $N_{FAW} + N_{RES}$ |
|---|---|---|---|---|---|---|
| 6 | 97 | 42 | 5376 | 521472 | 1.04% | 1302 |
| 7 | 85 | 48 | 6144 | 522240 | 1.19% | 2064 |
| 8 | 68 | 60 | 7680 | 522240 | 1.19% | 2064 |
| 9 | 40 | 102 | 13056 | 522240 | 1.19% | 2064 |
| 10 | 34 | 120 | 15360 | 522240 | 1.19% | 2064 |
| 11 | 20 | 204 | 26112 | 522240 | 1.19% | 2064 |
| 12 | 17 | 240 | 30720 | 522240 | 1.19% | 2064 |

(4) The quantity $N_{CW}$ of symbols before framing is 688128. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 10. $N_{FAW}$+$N_{PS}$ is an even number, $N_{FAW}$ is an even number, and $N_{PS}$ is an even number, and correspondingly, $N_{RES}$>0, and OH=($N_F$-Ncw)/Ncw.
A frame overhead of a super-frame architecture in cases listed in Table 10 is low: OH<1.20%. Neither the quantity $N_S$ of symbols in each sub-frame nor the quantity $N_F$ of symbols in the super-frame is limited in Table 10.

Table 10

| Sequence number | $N_{SF}$ | $N_{PS}$ | $N_S$ | $N_F$ | OH | $N_{FAW} + N_{RES}$ |
|---|---|---|---|---|---|---|
| 1 | 542 | 10 | 1280 | 693760 | 0.82% | 212 |
| 2 | 452 | 12 | 1536 | 694272 | 0.89% | 720 |
| 3 | 388 | 14 | 1792 | 695296 | 1.04% | 1736 |
| 4 | 339 | 16 | 2048 | 694272 | 0.89% | 720 |
| 5 | 302 | 18 | 2304 | 695808 | 1.12% | 2244 |
| 6 | 271 | 20 | 2560 | 693760 | 0.82% | 212 |
| 7 | 247 | 22 | 2816 | 695552 | 1.08% | 1990 |
| 8 | 226 | 24 | 3072 | 694272 | 0.89% | 720 |
| 9 | 209 | 26 | 3328 | 695552 | 1.08% | 1990 |
| 10 | 194 | 28 | 3584 | 695296 | 1.04% | 1736 |
| 11 | 181 | 30 | 3840 | 695040 | 1.00% | 1482 |
| 12 | 170 | 32 | 4096 | 696320 | 1.19% | 2752 |
| 13 | 160 | 34 | 4352 | 696320 | 1.19% | 2752 |
| 14 | 151 | 36 | 4608 | 695808 | 1.12% | 2244 |
| 15 | 143 | 38 | 4864 | 695552 | 1.08% | 1990 |
| 16 | 136 | 40 | 5120 | 696320 | 1.19% | 2752 |
| 17 | 118 | 46 | 5888 | 694784 | 0.97% | 1228 |
| 18 | 113 | 48 | 6144 | 694272 | 0.89% | 720 |
| 19 | 97 | 56 | 7168 | 695296 | 1.04% | 1736 |
| 20 | 85 | 64 | 8192 | 696320 | 1.19% | 2752 |
| 21 | 80 | 68 | 8704 | 696320 | 1.19% | 2752 |
| 22 | 68 | 80 | 10240 | 696320 | 1.19% | 2752 |

(continued)

| Sequence number | $N_{SF}$ | $N_{PS}$ | $N_S$ | $N_F$ | OH | $N_{FAW} + N_{RES}$ |
|---|---|---|---|---|---|---|
| 23 | 59 | 92 | 11776 | 694784 | 0.97% | 1228 |
| 24 | 46 | 118 | 15104 | 694784 | 0.97% | 1228 |
| 25 | 40 | 136 | 17408 | 696320 | 1.19% | 2752 |
| 26 | 34 | 160 | 20480 | 696320 | 1.19% | 2752 |
| 27 | 32 | 170 | 21760 | 696320 | 1.19% | 2752 |
| 28 | 28 | 194 | 24832 | 695296 | 1.04% | 1736 |
| 29 | 24 | 226 | 28928 | 694272 | 0.89% | 720 |
| 30 | 23 | 236 | 30208 | 694784 | 0.97% | 1228 |
| 31 | 20 | 272 | 34816 | 696320 | 1.19% | 2752 |
| 32 | 19 | 286 | 36608 | 695552 | 1.08% | 1990 |
| 33 | 18 | 302 | 38656 | 695808 | 1.12% | 2244 |
| 34 | 17 | 320 | 40960 | 696320 | 1.19% | 2752 |
| 35 | 16 | 340 | 43520 | 696320 | 1.19% | 2752 |
| 36 | 15 | 362 | 46336 | 695040 | 1.00% | 1482 |
| 37 | 14 | 388 | 49664 | 695296 | 1.04% | 1736 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, with reference to Table 10, it may be obtained that the frame overhead OH in cases listed in Table 11 is less than 1.20%, and the quantity $N_F$ of symbols in the super-frame is an integer multiple of 192 and 128. In addition, the quantity $N_S$ of symbols in each sub-frame is not limited in Table 11.

Table 11

| Sequence number | $N_{SF}$ | $N_{PS}$ | $N_S$ | $N_F$ | OH | $N_{FAW} + N_{RES}$ |
|---|---|---|---|---|---|---|
| 1 | 452 | 12 | 1536 | 694272 | 0.89% | 720 |
| 2 | 339 | 16 | 2048 | 694272 | 0.89% | 720 |
| 3 | 302 | 18 | 2304 | 695808 | 1.12% | 2244 |
| 4 | 226 | 24 | 3072 | 694272 | 0.89% | 720 |
| 5 | 181 | 30 | 3840 | 695040 | 1.00% | 1482 |
| 6 | 151 | 36 | 4608 | 695808 | 1.12% | 2244 |
| 7 | 113 | 48 | 6144 | 694272 | 0.89% | 720 |
| 8 | 24 | 226 | 28928 | 694272 | 0.89% | 720 |
| 9 | 18 | 302 | 38656 | 695808 | 1.12% | 2244 |
| 10 | 15 | 362 | 46336 | 695040 | 1.00% | 1482 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 12 may be obtained with reference to Table 11. In this case, the frame overhead OH in cases listed in Table 12 is less than 1.20%, and both the quantity $N_F$ of symbols in the super-frame and the quantity $N_S$ of symbols in each sub-frame are integer multiples of 192 and 128.

Table 12

| Sequence number | $N_{SF}$ | $N_{PS}$ | $N_S$ | $N_F$ | OH | $N_{FAW} + N_{RES}$ |
|---|---|---|---|---|---|---|
| 1 | 452 | 12 | 1536 | 694272 | 0.89% | 720 |
| 2 | 302 | 18 | 2304 | 695808 | 1.12% | 2244 |
| 3 | 226 | 24 | 3072 | 694272 | 0.89% | 720 |
| 4 | 181 | 30 | 3840 | 695040 | 1.00% | 1482 |
| 5 | 151 | 36 | 4608 | 695808 | 1.12% | 2244 |
| 6 | 113 | 48 | 6144 | 694272 | 0.89% | 720 |

(5) The quantity $N_{CW}$ of symbols before framing is 150528. For example, an open FEC (Open FEC, OFEC) encoding scheme with an encoding overhead of approximately 17.9% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 13. $N_{FAW}$+$N_{PS}$ is an even number, $N_{FAW}$ is an even number, and $N_{PS}$ is an even number, and correspondingly, $N_{RES}$>0, and OH=($N_F$-Ncw)/Ncw. A frame overhead of a super-frame architecture in cases listed in Table 13 is low: OH<1.20%. Neither the quantity $N_S$ of symbols in each sub-frame nor the quantity $N_F$ of symbols in the super-frame is limited in Table 13.

Table 13

| Sequence number | $N_{SF}$ | $N_{PS}$ | $N_S$ | $N_F$ | OH | $N_{FAW} + N_{RES}$ |
|---|---|---|---|---|---|---|
| 1 | 119 | 10 | 1280 | 152320 | 1.19% | 602 |
| 2 | 99 | 12 | 1536 | 152064 | 1.02% | 348 |
| 3 | 85 | 14 | 1792 | 152320 | 1.19% | 602 |
| 4 | 66 | 18 | 2304 | 152064 | 1.02% | 348 |
| 5 | 54 | 22 | 2816 | 152064 | 1.02% | 348 |
| 6 | 35 | 34 | 4352 | 152320 | 1.19% | 602 |
| 7 | 33 | 36 | 4608 | 152064 | 1.02% | 348 |
| 8 | 27 | 44 | 5632 | 152064 | 1.02% | 348 |
| 9 | 22 | 54 | 6912 | 152064 | 1.02% | 348 |
| 10 | 18 | 66 | 8448 | 152064 | 1.02% | 348 |
| 11 | 17 | 70 | 8960 | 152320 | 1.19% | 602 |
| 12 | 11 | 108 | 13824 | 152064 | 1.02% | 348 |
| 13 | 9 | 132 | 16896 | 152064 | 1.02% | 348 |
| 14 | 7 | 170 | 21760 | 152320 | 1.19% | 602 |
| 15 | 6 | 198 | 25344 | 152064 | 1.02% | 348 |
| 16 | 5 | 238 | 30464 | 152320 | 1.19% | 602 |
| 17 | 3 | 396 | 50688 | 152064 | 1.02% | 348 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 14 may be obtained with reference to Table 13. In this case, the frame overhead OH in cases listed in Table 14 is less than 1.20%, and the quantity $N_F$ of symbols in the super-frame is an integer multiple of 192 and 128. In addition, the quantity $N_S$ of symbols in each sub-frame is not limited in Table 14.

Table 14

| Sequence number | $N_{SF}$ | $N_{PS}$ | $N_S$ | $N_F$ | OH | $N_{FAW} + N_{RES}$ |
|---|---|---|---|---|---|---|
| 1 | 99 | 12 | 1536 | 152064 | 1.02% | 348 |
| 2 | 66 | 18 | 2304 | 152064 | 1.02% | 348 |
| 3 | 54 | 22 | 2816 | 152064 | 1.02% | 348 |
| 4 | 33 | 36 | 4608 | 152064 | 1.02% | 348 |
| 5 | 27 | 44 | 5632 | 152064 | 1.02% | 348 |
| 6 | 22 | 54 | 6912 | 152064 | 1.02% | 348 |
| 7 | 18 | 66 | 8448 | 152064 | 1.02% | 348 |
| 8 | 11 | 108 | 13824 | 152064 | 1.02% | 348 |
| 9 | 9 | 132 | 16896 | 152064 | 1.02% | 348 |
| 10 | 6 | 198 | 25344 | 152064 | 1.02% | 348 |
| 11 | 3 | 396 | 50688 | 152064 | 1.02% | 348 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 15 may be obtained with reference to Table 14. In this case, the frame overhead OH in cases listed in Table 15 is less than 1.20%, and both the quantity $N_F$ of symbols in the super-frame and the quantity $N_S$ of symbols in each sub-frame are integer multiples of 192 and 128.

Table 15

| Sequence number | $N_{SF}$ | $N_{PS}$ | $N_S$ | $N_F$ | OH | $N_{FAW} + N_{RES}$ |
|---|---|---|---|---|---|---|
| 1 | 99 | 12 | 1536 | 152064 | 1.02% | 348 |
| 2 | 66 | 18 | 2304 | 152064 | 1.02% | 348 |
| 3 | 33 | 36 | 4608 | 152064 | 1.02% | 348 |
| 4 | 22 | 54 | 6912 | 152064 | 1.02% | 348 |
| 5 | 18 | 66 | 8448 | 152064 | 1.02% | 348 |
| 6 | 11 | 108 | 13824 | 152064 | 1.02% | 348 |
| 7 | 9 | 132 | 16896 | 152064 | 1.02% | 348 |
| 8 | 6 | 198 | 25344 | 152064 | 1.02% | 348 |
| 9 | 3 | 396 | 50688 | 152064 | 1.02% | 348 |

(6) The quantity Ncw of symbols before framing is 129024. For example, an open FEC (Open FEC, OFEC) encoding scheme with an encoding overhead of approximately 21.5% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 16. $N_{FAW}+N_{PS}$ is an even number, $N_{FAW}$ is an even number, and $N_{PS}$ is an even number, and correspondingly, $N_{RES}>0$, and OH=$(N_F-N_{CW})/N_{CW}$. A frame overhead of a super-frame architecture in cases listed in Table 16 is low: OH<1.20%. Neither the quantity $N_S$ of symbols in each sub-frame nor the quantity $N_F$ of symbols in the super-frame is limited in Table 16. In some specific application, a bus width in a specific DSP implementation of the receiver and the transmitter is 192 or 128. For ease of hardware implementation, the quantity $N_F$ of symbols in the super-frame needs to be an integer multiple of 192 and 128. It should be noted that, in all cases listed in the table, the quantity $N_F$ of symbols in the super-frame is an integer multiple of 192 and 128. In Case (6), there is no case in which the quantity $N_F$ of symbols in the super-frame is not an integer multiple of 192 or 128.

Table 16

| Sequence number | $N_{SF}$ | $N_{PS}$ | $N_S$ | $N_F$ | OH | $N_{FAW} + N_{RES}$ |
|---|---|---|---|---|---|---|
| 1 | 102 | 10 | 1280 | 130560 | 1.19% | 516 |
| 2 | 85 | 12 | 1536 | 130560 | 1.19% | 516 |
| 3 | 51 | 20 | 2560 | 130560 | 1.19% | 516 |
| 4 | 34 | 30 | 3840 | 130560 | 1.19% | 516 |
| 5 | 30 | 34 | 4352 | 130560 | 1.19% | 516 |
| 6 | 17 | 60 | 7680 | 130560 | 1.19% | 516 |
| 7 | 15 | 68 | 8704 | 130560 | 1.19% | 516 |
| 8 | 10 | 102 | 13056 | 130560 | 1.19% | 516 |
| 9 | 6 | 170 | 21760 | 130560 | 1.19% | 516 |
| 10 | 5 | 204 | 26112 | 130560 | 1.19% | 516 |
| 11 | 3 | 340 | 43520 | 130560 | 1.19% | 516 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 17 may be obtained with reference to Table 16. In this case, the frame overhead OH in cases listed in Table 17 is less than 1.20%, and both the quantity $N_F$ of symbols in the super-frame and the quantity $N_S$ of symbols in each sub-frame are integer multiples of 192 and 128.

Table 17

| Sequence number | $N_{SF}$ | $N_{PS}$ | $N_S$ | $N_F$ | OH | $N_{FAW} + N_{RES}$ |
|---|---|---|---|---|---|---|
| 1 | 85 | 12 | 1536 | 130560 | 1.19% | 516 |
| 2 | 34 | 30 | 3840 | 130560 | 1.19% | 516 |
| 3 | 17 | 60 | 7680 | 130560 | 1.19% | 516 |
| 4 | 10 | 102 | 13056 | 130560 | 1.19% | 516 |
| 5 | 5 | 204 | 26112 | 130560 | 1.19% | 516 |

(7) The quantity $N_{CW}$ of symbols before framing is 107520. For example, an open FEC (Open FEC, OFEC) encoding scheme with an encoding overhead of approximately 27.0% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 18. $N_{FAW}+N_{PS}$ is an even number, $N_{FAW}$ is an even number, and $N_{PS}$ is an even number, and correspondingly, $N_{RES}>0$, and OH=$(N_F-N_{CW})/N_{CW}$. A frame overhead of a super-frame architecture in cases listed in Table 18 is low: OH<1.20%. Neither the quantity $N_S$ of symbols in each sub-frame nor the quantity $N_F$ of symbols in the super-frame is limited in Table 18. It should be noted that, in all cases listed in the table, neither the quantity $N_F$ of symbols in each sub-frame nor the quantity $N_S$ of symbols in each sub-frame is an integer multiple of 192 and 128. In Case (7), there is no case in which the quantity $N_F$ of symbols in the super-frame is an integer multiple of 192 and 128, and there is no case in which both the quantity $N_F$ of symbols in the super-frame and the quantity $N_S$ of symbols in each sub-frame are integer multiples of 192 and 128.

Table 18

| Sequence number | $N_{SF}$ | $N_{PS}$ | $N_S$ | $N_F$ | OH | $N_{FAW} + N_{RES}$ |
|---|---|---|---|---|---|---|
| 1 | 85 | 10 | 1280 | 108800 | 1.19% | 430 |
| 2 | 53 | 16 | 2048 | 108544 | 0.95% | 176 |
| 3 | 25 | 34 | 4352 | 108800 | 1.19% | 430 |
| 4 | 17 | 50 | 6400 | 108800 | 1.19% | 430 |
| 5 | 8 | 106 | 13568 | 108544 | 0.95% | 176 |
| 6 | 5 | 170 | 21760 | 108800 | 1.19% | 430 |
| 7 | 4 | 212 | 27136 | 108544 | 0.95% | 176 |

(8) The quantity Ncw of symbols before framing is 175616. For example, a CFEC encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 19. $N_{FAW}$+$N_{PS}$ is an even number, $N_{FAW}$ is an even number, and $N_{PS}$ is an even number, and correspondingly, $N_{RES}$>0, and OH=($N_F$-$N_{CW}$)/$N_{CW}$.

A frame overhead of a super-frame architecture in cases listed in Table 19 is low: OH<1.20%. Neither the quantity $N_S$ of symbols in each sub-frame nor the quantity $N_F$ of symbols in the super-frame is limited in Table 19.

Table 19

| Sequence number | $N_{SF}$ | $N_{PS}$ | $N_S$ | $N_F$ | OH | $N_{FAW} + N_{RES}$ |
|---|---|---|---|---|---|---|
| 1 | 99 | 14 | 1792 | 177408 | 1.02% | 406 |
| 2 | 77 | 18 | 2304 | 177408 | 1.02% | 406 |
| 3 | 63 | 22 | 2816 | 177408 | 1.02% | 406 |
| 4 | 33 | 42 | 5376 | 177408 | 1.02% | 406 |
| 5 | 21 | 66 | 8448 | 177408 | 1.02% | 406 |
| 6 | 11 | 126 | 16128 | 177408 | 1.02% | 406 |
| 7 | 9 | 154 | 19712 | 177408 | 1.02% | 406 |
| 8 | 7 | 198 | 25344 | 177408 | 1.02% | 406 |
| 9 | 4 | 346 | 44288 | 177152 | 0.87% | 152 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 20 may be obtained with reference to Table 19. In this case, the frame overhead OH in cases listed in Table 20 is less than 1.20%, and the quantity $N_F$ of symbol in the super-frame is an integer multiple of 192 and 128. In addition, the quantity $N_S$ of symbols in each sub-frame is not limited in Table 20.

Table 20

| Sequence number | $N_{SF}$ | $N_{PS}$ | $N_S$ | $N_F$ | OH | $N_{FAW} + N_{RES}$ |
|---|---|---|---|---|---|---|
| 1 | 99 | 14 | 1792 | 177408 | 1.02% | 406 |
| 2 | 77 | 18 | 2304 | 177408 | 1.02% | 406 |
| 3 | 63 | 22 | 2816 | 177408 | 1.02% | 406 |
| 4 | 33 | 42 | 5376 | 177408 | 1.02% | 406 |
| 5 | 21 | 66 | 8448 | 177408 | 1.02% | 406 |

(continued)

| Sequence number | $N_{SF}$ | $N_{PS}$ | $N_S$ | $N_F$ | OH | $N_{FAW} + N_{RES}$ |
|---|---|---|---|---|---|---|
| 6 | 11 | 126 | 16128 | 177408 | 1.02% | 406 |
| 7 | 9 | 154 | 19712 | 177408 | 1.02% | 406 |
| 8 | 7 | 198 | 25344 | 177408 | 1.02% | 406 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 21 may be obtained with reference to Table 20. In this case, the frame overhead OH in cases listed in Table 21 is less than 1.20%, and both the quantity $N_F$ of symbols in the super-frame and the quantity $N_S$ of symbols in each sub-frame are integer multiples of 192 and 128.

Table 21

| Sequence number | $N_{SF}$ | $N_{PS}$ | $N_S$ | $N_F$ | OH | $N_{FAW} + N_{RES}$ |
|---|---|---|---|---|---|---|
| 1 | 77 | 18 | 2304 | 177408 | 1.02% | 406 |
| 2 | 33 | 42 | 5376 | 177408 | 1.02% | 406 |
| 3 | 21 | 66 | 8448 | 177408 | 1.02% | 406 |
| 4 | 11 | 126 | 16128 | 177408 | 1.02% | 406 |
| 5 | 7 | 198 | 25344 | 177408 | 1.02% | 406 |

(9) The quantity $N_{CW}$ of symbols before framing is 351232. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 22. $N_{FAW}+N_{PS}$ is an even number, $N_{FAW}$ is an even number, and $N_{PS}$ is an even number, and correspondingly, $N_{RES}>0$, and OH=$(N_F-Ncw)/Ncw$. A frame overhead of a super-frame architecture in cases listed in Table 22 is low: OH<1.20%. Neither the quantity $N_S$ of symbols in each sub-frame nor the quantity $N_F$ of symbols in the super-frame is limited in Table 22.

Table 22

| Sequence number | $N_{SF}$ | $N_{PS}$ | $N_S$ | $N_F$ | OH | $N_{FAW} + N_{RES}$ |
|---|---|---|---|---|---|---|
| 1 | 277 | 10 | 1280 | 354560 | 0.95% | 558 |
| 2 | 231 | 12 | 1536 | 354816 | 1.02% | 812 |
| 3 | 198 | 14 | 1792 | 354816 | 1.02% | 812 |
| 4 | 173 | 16 | 2048 | 354304 | 0.87% | 304 |
| 5 | 154 | 18 | 2304 | 354816 | 1.02% | 812 |
| 6 | 126 | 22 | 2816 | 354816 | 1.02% | 812 |
| 7 | 99 | 28 | 3584 | 354816 | 1.02% | 812 |
| 8 | 77 | 36 | 4608 | 354816 | 1.02% | 812 |
| 9 | 73 | 38 | 4864 | 355072 | 1.09% | 1066 |
| 10 | 66 | 42 | 5376 | 354816 | 1.02% | 812 |
| 11 | 63 | 44 | 5632 | 354816 | 1.02% | 812 |

(continued)

| Sequence number | $N_{SF}$ | $N_{PS}$ | $N_S$ | $N_F$ | OH | $N_{FAW} + N_{RES}$ |
|---|---|---|---|---|---|---|
| 12 | 42 | 66 | 8448 | 354816 | 1.02% | 812 |
| 13 | 33 | 84 | 10752 | 354816 | 1.02% | 812 |
| 14 | 22 | 126 | 16128 | 354816 | 1.02% | 812 |
| 15 | 21 | 132 | 16896 | 354816 | 1.02% | 812 |
| 16 | 19 | 146 | 18688 | 355072 | 1.09% | 1066 |
| 17 | 18 | 154 | 19712 | 354816 | 1.02% | 812 |
| 18 | 14 | 198 | 25344 | 354816 | 1.02% | 812 |
| 19 | 11 | 252 | 32256 | 354816 | 1.02% | 812 |
| 20 | 9 | 308 | 39424 | 354816 | 1.02% | 812 |
| 21 | 8 | 346 | 44288 | 354304 | 0.87% | 304 |
| 22 | 7 | 396 | 50688 | 354816 | 1.02% | 812 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 23 may be obtained with reference to Table 22. In this case, the frame overhead OH in cases listed in Table 23 is less than 1.20%, and the quantity $N_F$ of symbols in the super-frame is an integer multiple of 192 and 128. In addition, the quantity $N_S$ of symbols in each sub-frame is not limited.

Table 23

| Sequence number | $N_{SF}$ | $N_{PS}$ | $N_S$ | $N_F$ | OH | $N_{FAW} + N_{RES}$ |
|---|---|---|---|---|---|---|
| 1 | 231 | 12 | 1536 | 354816 | 1.02% | 812 |
| 2 | 198 | 14 | 1792 | 354816 | 1.02% | 812 |
| 3 | 154 | 18 | 2304 | 354816 | 1.02% | 812 |
| 4 | 126 | 22 | 2816 | 354816 | 1.02% | 812 |
| 5 | 99 | 28 | 3584 | 354816 | 1.02% | 812 |
| 6 | 77 | 36 | 4608 | 354816 | 1.02% | 812 |
| 7 | 66 | 42 | 5376 | 354816 | 1.02% | 812 |
| 8 | 63 | 44 | 5632 | 354816 | 1.02% | 812 |
| 9 | 42 | 66 | 8448 | 354816 | 1.02% | 812 |
| 10 | 33 | 84 | 10752 | 354816 | 1.02% | 812 |
| 11 | 22 | 126 | 16128 | 354816 | 1.02% | 812 |
| 12 | 21 | 132 | 16896 | 354816 | 1.02% | 812 |
| 13 | 18 | 154 | 19712 | 354816 | 1.02% | 812 |
| 14 | 14 | 198 | 25344 | 354816 | 1.02% | 812 |
| 15 | 11 | 252 | 32256 | 354816 | 1.02% | 812 |
| 16 | 9 | 308 | 39424 | 354816 | 1.02% | 812 |
| 17 | 7 | 396 | 50688 | 354816 | 1.02% | 812 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 24 may be obtained with reference to Table 23. In this case, the frame overhead OH in cases listed in Table 24 is less than 1.20%, and both the quantity $N_F$ of symbols in the super-frame and the quantity $N_S$ of symbols in each sub-frame are integer multiples of 192 and 128.

Table 24

| Sequence number | $N_{SF}$ | $N_{PS}$ | $N_S$ | $N_F$ | OH | $N_{FAW} + N_{RES}$ |
|---|---|---|---|---|---|---|
| 1 | 231 | 12 | 1536 | 354816 | 1.02% | 812 |
| 2 | 154 | 18 | 2304 | 354816 | 1.02% | 812 |
| 3 | 77 | 36 | 4608 | 354816 | 1.02% | 812 |
| 4 | 66 | 42 | 5376 | 354816 | 1.02% | 812 |
| 5 | 42 | 66 | 8448 | 354816 | 1.02% | 812 |
| 6 | 33 | 84 | 10752 | 354816 | 1.02% | 812 |
| 7 | 22 | 126 | 16128 | 354816 | 1.02% | 812 |
| 8 | 21 | 132 | 16896 | 354816 | 1.02% | 812 |
| 9 | 14 | 198 | 25344 | 354816 | 1.02% | 812 |
| 10 | 11 | 252 | 32256 | 354816 | 1.02% | 812 |
| 11 | 7 | 396 | 50688 | 354816 | 1.02% | 812 |

(10) The quantity $N_{CW}$ of symbols before framing is 526848. For example, an open FEC (Open FEC, OFEC) encoding scheme with an encoding overhead of approximately 15.3% is used, or another encoding scheme may be used. A 1st symbol in every $N_{PG}=128$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 25. $N_{FAW}+N_{PS}$ is an even number, $N_{FAW}$ is an even number, and $N_{PS}$ is an even number, and correspondingly, $N_{RES}>0$, and $OH=(N_F-N_{CW})/N_{CW}$. A frame overhead of a super-frame architecture in cases listed in Table 25 is low: $OH<1.20\%$. Neither the quantity $N_S$ of symbols in each sub-frame nor the quantity $N_F$ of symbols in the super-frame is limited in Table 25.

Table 25

| Sequence number | $N_{SF}$ | $N_{PS}$ | $N_S$ | $N_F$ | OH | $N_{FAW} + N_{RES}$ |
|---|---|---|---|---|---|---|
| 1 | 415 | 10 | 1280 | 531200 | 0.83% | 202 |
| 2 | 346 | 12 | 1536 | 531456 | 0.87% | 456 |
| 3 | 297 | 14 | 1792 | 532224 | 1.02% | 1218 |
| 4 | 260 | 16 | 2048 | 532480 | 1.07% | 1472 |
| 5 | 231 | 18 | 2304 | 532224 | 1.02% | 1218 |
| 6 | 208 | 20 | 2560 | 532480 | 1.07% | 1472 |
| 7 | 189 | 22 | 2816 | 532224 | 1.02% | 1218 |
| 8 | 173 | 24 | 3072 | 531456 | 0.87% | 456 |
| 9 | 160 | 26 | 3328 | 532480 | 1.07% | 1472 |
| 10 | 130 | 32 | 4096 | 532480 | 1.07% | 1472 |
| 11 | 104 | 40 | 5120 | 532480 | 1.07% | 1472 |
| 12 | 99 | 42 | 5376 | 532224 | 1.02% | 1218 |
| 13 | 83 | 50 | 6400 | 531200 | 0.83% | 202 |

(continued)

| Sequence number | $N_{SF}$ | $N_{PS}$ | $N_S$ | $N_F$ | OH | $N_{FAW} + N_{RES}$ |
|---|---|---|---|---|---|---|
| 14 | 80 | 52 | 6656 | 532480 | 1.07% | 1472 |
| 15 | 77 | 54 | 6912 | 532224 | 1.02% | 1218 |
| 16 | 67 | 62 | 7936 | 531712 | 0.92% | 710 |
| 17 | 65 | 64 | 8192 | 532480 | 1.07% | 1472 |
| 18 | 63 | 66 | 8448 | 532224 | 1.02% | 1218 |
| 19 | 52 | 80 | 10240 | 532480 | 1.07% | 1472 |
| 20 | 40 | 104 | 13312 | 532480 | 1.07% | 1472 |
| 21 | 33 | 126 | 16128 | 532224 | 1.02% | 1218 |
| 22 | 32 | 130 | 16640 | 532480 | 1.07% | 1472 |
| 23 | 31 | 134 | 17152 | 531712 | 0.92% | 710 |
| 24 | 27 | 154 | 19712 | 532224 | 1.02% | 1218 |
| 25 | 26 | 160 | 20480 | 532480 | 1.07% | 1472 |
| 26 | 25 | 166 | 21248 | 531200 | 0.83% | 202 |
| 27 | 21 | 198 | 25344 | 532224 | 1.02% | 1218 |
| 28 | 20 | 208 | 26624 | 532480 | 1.07% | 1472 |
| 29 | 16 | 260 | 33280 | 532480 | 1.07% | 1472 |
| 30 | 13 | 320 | 40960 | 532480 | 1.07% | 1472 |
| 31 | 12 | 346 | 44288 | 531456 | 0.87% | 456 |
| 32 | 11 | 378 | 48384 | 532224 | 1.02% | 1218 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 26 may be obtained with reference to Table 25. In this case, the frame overhead OH in cases listed in Table 26 is less than 1.20%, and the quantity $N_F$ of symbols in the super-frame is an integer multiple of 192 and 128. In addition, the quantity $N_S$ of symbols in each sub-frame is not limited in Table 26.

Table 26

| Sequence number | $N_{SF}$ | $N_{PS}$ | $N_S$ | $N_F$ | OH | $N_{FAW} + N_{RES}$ |
|---|---|---|---|---|---|---|
| 1 | 346 | 12 | 1536 | 531456 | 0.87% | 456 |
| 2 | 297 | 14 | 1792 | 532224 | 1.02% | 1218 |
| 3 | 231 | 18 | 2304 | 532224 | 1.02% | 1218 |
| 4 | 189 | 22 | 2816 | 532224 | 1.02% | 1218 |
| 5 | 173 | 24 | 3072 | 531456 | 0.87% | 456 |
| 6 | 99 | 42 | 5376 | 532224 | 1.02% | 1218 |
| 7 | 77 | 54 | 6912 | 532224 | 1.02% | 1218 |
| 8 | 63 | 66 | 8448 | 532224 | 1.02% | 1218 |
| 9 | 33 | 126 | 16128 | 532224 | 1.02% | 1218 |
| 10 | 27 | 154 | 19712 | 532224 | 1.02% | 1218 |
| 11 | 21 | 198 | 25344 | 532224 | 1.02% | 1218 |
| 12 | 12 | 346 | 44288 | 531456 | 0.87% | 456 |

(continued)

| Sequence number | $N_{SF}$ | $N_{PS}$ | $N_S$ | $N_F$ | OH | $N_{FAW} + N_{RES}$ |
|---|---|---|---|---|---|---|
| 13 | 11 | 378 | 48384 | 532224 | 1.02% | 1218 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 27 may be obtained with reference to Table 26. In this case, the frame overhead OH in cases listed in Table 27 is less than 1.20%, and both the quantity $N_F$ of symbols in the super-frame and the quantity $N_S$ of symbols in each sub-frame are integer multiples of 192 and 128.

Table 27

| Sequence number | $N_{SF}$ | $N_{PS}$ | $N_S$ | $N_F$ | OH | $N_{FAW} + N_{RES}$ |
|---|---|---|---|---|---|---|
| 1 | 346 | 12 | 1536 | 531456 | 0.87% | 456 |
| 2 | 231 | 18 | 2304 | 532224 | 1.02% | 1218 |
| 3 | 173 | 24 | 3072 | 531456 | 0.87% | 456 |
| 4 | 99 | 42 | 5376 | 532224 | 1.02% | 1218 |
| 5 | 77 | 54 | 6912 | 532224 | 1.02% | 1218 |
| 6 | 63 | 66 | 8448 | 532224 | 1.02% | 1218 |
| 7 | 33 | 126 | 16128 | 532224 | 1.02% | 1218 |
| 8 | 21 | 198 | 25344 | 532224 | 1.02% | 1218 |
| 9 | 11 | 378 | 48384 | 532224 | 1.02% | 1218 |

(11) The quantity Ncw of symbols before framing is 702464. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 28. $N_{FAW}+N_{PS}$ is an even number, $N_{FAW}$ is an even number, and $N_{PS}$ is an even number, and correspondingly, $N_{RES}>0$, and OH=($N_F$-Ncw)/Ncw. A frame overhead of a super-frame architecture in cases listed in Table 28 is low: OH<1.20%. Neither the quantity $N_S$ of symbols in each sub-frame nor the quantity $N_F$ of symbols in the super-frame is limited in Table 28.

Table 28

| Sequence number | $N_{SF}$ | $N_{PS}$ | $N_S$ | $N_F$ | OH | $N_{FAW} + N_{RES}$ |
|---|---|---|---|---|---|---|
| 1 | 554 | 10 | 1280 | 709120 | 0.95% | 1116 |
| 2 | 461 | 12 | 1536 | 708096 | 0.80% | 100 |
| 3 | 396 | 14 | 1792 | 709632 | 1.02% | 1624 |
| 4 | 346 | 16 | 2048 | 708608 | 0.87% | 608 |
| 5 | 308 | 18 | 2304 | 709632 | 1.02% | 1624 |
| 6 | 277 | 20 | 2560 | 709120 | 0.95% | 1116 |
| 7 | 252 | 22 | 2816 | 709632 | 1.02% | 1624 |
| 8 | 231 | 24 | 3072 | 709632 | 1.02% | 1624 |
| 9 | 213 | 26 | 3328 | 708864 | 0.91% | 862 |

(continued)

| Sequence number | $N_{SF}$ | $N_{PS}$ | $N_S$ | $N_F$ | OH | $N_{FAW} + N_{RES}$ |
|---|---|---|---|---|---|---|
| 10 | 198 | 28 | 3584 | 709632 | 1.02% | 1624 |
| 11 | 185 | 30 | 3840 | 710400 | 1.13% | 2386 |
| 12 | 173 | 32 | 4096 | 708608 | 0.87% | 608 |
| 13 | 163 | 34 | 4352 | 709376 | 0.98% | 1370 |
| 14 | 154 | 36 | 4608 | 709632 | 1.02% | 1624 |
| 15 | 146 | 38 | 4864 | 710144 | 1.09% | 2132 |
| 16 | 132 | 42 | 5376 | 709632 | 1.02% | 1624 |
| 17 | 126 | 44 | 5632 | 709632 | 1.02% | 1624 |
| 18 | 111 | 50 | 6400 | 710400 | 1.13% | 2386 |
| 19 | 99 | 56 | 7168 | 709632 | 1.02% | 1624 |
| 20 | 84 | 66 | 8448 | 709632 | 1.02% | 1624 |
| 21 | 77 | 72 | 9216 | 709632 | 1.02% | 1624 |
| 22 | 75 | 74 | 9472 | 710400 | 1.13% | 2386 |
| 23 | 73 | 76 | 9728 | 710144 | 1.09% | 2132 |
| 24 | 71 | 78 | 9984 | 708864 | 0.91% | 862 |
| 25 | 66 | 84 | 10752 | 709632 | 1.02% | 1624 |
| 26 | 63 | 88 | 11264 | 709632 | 1.02% | 1624 |
| 27 | 59 | 94 | 12032 | 709888 | 1.06% | 1878 |
| 28 | 47 | 118 | 15104 | 709888 | 1.06% | 1878 |
| 29 | 44 | 126 | 16128 | 709632 | 1.02% | 1624 |
| 30 | 42 | 132 | 16896 | 709632 | 1.02% | 1624 |
| 31 | 39 | 142 | 18176 | 708864 | 0.91% | 862 |
| 32 | 38 | 146 | 18688 | 710144 | 1.09% | 2132 |
| 33 | 37 | 150 | 19200 | 710400 | 1.13% | 2386 |
| 34 | 36 | 154 | 19712 | 709632 | 1.02% | 1624 |
| 35 | 33 | 168 | 21504 | 709632 | 1.02% | 1624 |
| 36 | 28 | 198 | 25344 | 709632 | 1.02% | 1624 |
| 37 | 25 | 222 | 28416 | 710400 | 1.13% | 2386 |
| 38 | 22 | 252 | 32256 | 709632 | 1.02% | 1624 |
| 39 | 21 | 264 | 33792 | 709632 | 1.02% | 1624 |
| 40 | 19 | 292 | 37376 | 710144 | 1.09% | 2132 |
| 41 | 18 | 308 | 39424 | 709632 | 1.02% | 1624 |
| 42 | 17 | 326 | 41728 | 709376 | 0.98% | 1370 |
| 43 | 16 | 346 | 44288 | 708608 | 0.87% | 608 |
| 44 | 15 | 370 | 47360 | 710400 | 1.13% | 2386 |
| 45 | 14 | 396 | 50688 | 709632 | 1.02% | 1624 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 29 may be obtained with reference to Table 28. In this case, the frame overhead OH in cases listed in Table 29 is less than 1.20%, and the quantity $N_F$ of symbols in the super-frame is an integer multiple of 192 and 128. In addition, the quantity $N_S$ of symbols in each sub-frame is not limited in Table 29.

Table 29

| Sequence number | $N_{SF}$ | $N_{PS}$ | $N_S$ | $N_F$ | OH | $N_{FAW} + N_{RES}$ |
|---|---|---|---|---|---|---|
| 1 | 461 | 12 | 1536 | 708096 | 0.80% | 100 |
| 2 | 396 | 14 | 1792 | 709632 | 1.02% | 1624 |
| 3 | 308 | 18 | 2304 | 709632 | 1.02% | 1624 |
| 4 | 252 | 22 | 2816 | 709632 | 1.02% | 1624 |
| 5 | 231 | 24 | 3072 | 709632 | 1.02% | 1624 |
| 6 | 213 | 26 | 3328 | 708864 | 0.91% | 862 |
| 7 | 198 | 28 | 3584 | 709632 | 1.02% | 1624 |
| 8 | 185 | 30 | 3840 | 710400 | 1.13% | 2386 |
| 9 | 154 | 36 | 4608 | 709632 | 1.02% | 1624 |
| 10 | 132 | 42 | 5376 | 709632 | 1.02% | 1624 |
| 11 | 126 | 44 | 5632 | 709632 | 1.02% | 1624 |
| 12 | 111 | 50 | 6400 | 710400 | 1.13% | 2386 |
| 13 | 99 | 56 | 7168 | 709632 | 1.02% | 1624 |
| 14 | 84 | 66 | 8448 | 709632 | 1.02% | 1624 |
| 15 | 77 | 72 | 9216 | 709632 | 1.02% | 1624 |
| 16 | 75 | 74 | 9472 | 710400 | 1.13% | 2386 |
| 17 | 71 | 78 | 9984 | 708864 | 0.91% | 862 |
| 18 | 66 | 84 | 10752 | 709632 | 1.02% | 1624 |
| 19 | 63 | 88 | 11264 | 709632 | 1.02% | 1624 |
| 20 | 44 | 126 | 16128 | 709632 | 1.02% | 1624 |
| 21 | 42 | 132 | 16896 | 709632 | 1.02% | 1624 |
| 22 | 39 | 142 | 18176 | 708864 | 0.91% | 862 |
| 23 | 37 | 150 | 19200 | 710400 | 1.13% | 2386 |
| 24 | 36 | 154 | 19712 | 709632 | 1.02% | 1624 |
| 25 | 33 | 168 | 21504 | 709632 | 1.02% | 1624 |
| 26 | 28 | 198 | 25344 | 709632 | 1.02% | 1624 |
| 27 | 25 | 222 | 28416 | 710400 | 1.13% | 2386 |
| 28 | 22 | 252 | 32256 | 709632 | 1.02% | 1624 |
| 29 | 21 | 264 | 33792 | 709632 | 1.02% | 1624 |
| 30 | 18 | 308 | 39424 | 709632 | 1.02% | 1624 |
| 31 | 15 | 370 | 47360 | 710400 | 1.13% | 2386 |
| 32 | 14 | 396 | 50688 | 709632 | 1.02% | 1624 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 30 may be obtained with reference to Table 29. In this case, the frame overhead OH in cases listed in Table 30 is less than 1.20%, and both the quantity $N_F$ of symbols in the super-frame and the quantity $N_S$ of symbols in each sub-frame are integer multiples of 192 and 128.

Table 30

| Sequence number | $N_{SF}$ | $N_{PS}$ | $N_S$ | $N_F$ | OH | $N_{FAW} + N_{RES}$ |
|---|---|---|---|---|---|---|
| 1 | 461 | 12 | 1536 | 708096 | 0.80% | 100 |
| 2 | 308 | 18 | 2304 | 709632 | 1.02% | 1624 |
| 3 | 231 | 24 | 3072 | 709632 | 1.02% | 1624 |
| 4 | 185 | 30 | 3840 | 710400 | 1.13% | 2386 |
| 5 | 154 | 36 | 4608 | 709632 | 1.02% | 1624 |
| 6 | 132 | 42 | 5376 | 709632 | 1.02% | 1624 |
| 7 | 84 | 66 | 8448 | 709632 | 1.02% | 1624 |
| 8 | 77 | 72 | 9216 | 709632 | 1.02% | 1624 |
| 9 | 71 | 78 | 9984 | 708864 | 0.91% | 862 |
| 10 | 66 | 84 | 10752 | 709632 | 1.02% | 1624 |
| 11 | 44 | 126 | 16128 | 709632 | 1.02% | 1624 |
| 12 | 42 | 132 | 16896 | 709632 | 1.02% | 1624 |
| 13 | 37 | 150 | 19200 | 710400 | 1.13% | 2386 |
| 14 | 33 | 168 | 21504 | 709632 | 1.02% | 1624 |
| 15 | 28 | 198 | 25344 | 709632 | 1.02% | 1624 |
| 16 | 25 | 222 | 28416 | 710400 | 1.13% | 2386 |
| 17 | 22 | 252 | 32256 | 709632 | 1.02% | 1624 |
| 18 | 21 | 264 | 33792 | 709632 | 1.02% | 1624 |
| 19 | 14 | 396 | 50688 | 709632 | 1.02% | 1624 |

(12) The quantity $N_{CW}$ of symbols before framing is 172032. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 31. $N_{FAW}+N_{PS}$ is an even number, $N_{FAW}$ is an even number, and $N_{PS}$ is an even number, and correspondingly, $N_{RES}>0$, and $OH=(N_F-N_{CW})/N_{CW}$.
A frame overhead of a super-frame architecture in cases listed in Table 31 is low: OH<1.50%. Neither the quantity $N_S$ of symbols in each sub-frame nor the quantity $N_F$ of symbols in the super-frame is limited in Table 31.

Table 31

| Sequence number | $N_{SF}$ | $N_{PS}$ | $N_S$ | $N_F$ | OH | $N_{FAW} + N_{RES}$ |
|---|---|---|---|---|---|---|
| 1 | 151 | 12 | 1152 | 173952 | 1.12% | 108 |
| 2 | 101 | 18 | 1728 | 174528 | 1.45% | 678 |
| 3 | 9 | 202 | 19392 | 174528 | 1.45% | 678 |
| 4 | 6 | 302 | 28992 | 173952 | 1.12% | 108 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 32 may be obtained with reference to Table 31. In this case, the frame overhead OH in cases listed in Table 32 is less than 1.50%, and the quantity $N_F$ of symbols in the super-frame is an integer multiple of 192 and 128. In addition, the quantity $N_S$ of symbols in each sub-frame is not limited in Table 32.

Table 32

| Sequence number | $N_{SF}$ | $N_{PS}$ | $N_S$ | $N_F$ | OH | $N_{FAW} + N_{RES}$ |
|---|---|---|---|---|---|---|
| 1 | 151 | 12 | 1152 | 173952 | 1.12% | 108 |
| 2 | 6 | 302 | 28992 | 173952 | 1.12% | 108 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 33 may be obtained with reference to Table 32. In this case, the frame overhead OH in cases listed in Table 33 is less than 1.50%, and both the quantity $N_F$ of symbols in the super-frame and the quantity $N_S$ of symbols in each sub-frame are integer multiples of 192 and 128.

Table 33

| Sequence number | $N_{SF}$ | $N_{PS}$ | $N_S$ | $N_F$ | OH | $N_{FAW} + N_{RES}$ |
|---|---|---|---|---|---|---|
| 1 | 151 | 12 | 1152 | 173952 | 1.12% | 108 |

(13) The quantity $N_{CW}$ of symbols before framing is 344064. For example, an open FEC (Open FEC, OFEC) encoding scheme with an encoding overhead of approximately 15.3% is used, or another encoding scheme may be used. A 1st symbol in every $N_{PG}=96$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 34. $N_{FAW}+N_{PS}$ is an even number, $N_{FAW}$ is an even number, and $N_{PS}$ is an even number, and correspondingly, $N_{RES}>0$, and $OH=(N_F-Ncw)/Ncw$.

A frame overhead of a super-frame architecture in cases listed in Table 34 is low: OH<1.50%. Neither the quantity $N_S$ of symbols in each sub-frame nor the quantity $N_F$ of symbols in the super-frame is limited in Table 34.

Table 34

| Sequence number | $N_{SF}$ | $N_{PS}$ | $N_S$ | $N_F$ | OH | $N_{FAW} + N_{RES}$ |
|---|---|---|---|---|---|---|
| 1 | 363 | 10 | 960 | 348480 | 1.28% | 786 |
| 2 | 302 | 12 | 1152 | 347904 | 1.12% | 216 |
| 3 | 259 | 14 | 1344 | 348096 | 1.17% | 406 |
| 4 | 227 | 16 | 1536 | 348672 | 1.34% | 976 |
| 5 | 202 | 18 | 1728 | 349056 | 1.45% | 1356 |
| 6 | 165 | 22 | 2112 | 348480 | 1.28% | 786 |
| 7 | 151 | 24 | 2304 | 347904 | 1.12% | 216 |
| 8 | 121 | 30 | 2880 | 348480 | 1.28% | 786 |
| 9 | 101 | 36 | 3456 | 349056 | 1.45% | 1356 |
| 10 | 79 | 46 | 4416 | 348864 | 1.40% | 1166 |
| 11 | 55 | 66 | 6336 | 348480 | 1.28% | 786 |
| 12 | 49 | 74 | 7104 | 348096 | 1.17% | 406 |
| 13 | 37 | 98 | 9408 | 348096 | 1.17% | 406 |

(continued)

| Sequence number | $N_{SF}$ | $N_{PS}$ | $N_S$ | $N_F$ | OH | $N_{FAW} + N_{RES}$ |
|---|---|---|---|---|---|---|
| 14 | 33 | 110 | 10560 | 348480 | 1.28% | 786 |
| 15 | 23 | 158 | 15168 | 348864 | 1.40% | 1166 |
| 16 | 18 | 202 | 19392 | 349056 | 1.45% | 1356 |
| 17 | 15 | 242 | 23232 | 348480 | 1.28% | 786 |
| 18 | 12 | 302 | 28992 | 347904 | 1.12% | 216 |
| 19 | 11 | 330 | 31680 | 348480 | 1.28% | 786 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 35 may be obtained with reference to Table 34. In this case, the frame overhead OH in cases listed in Table 35 is less than 1.50%, and the quantity $N_F$ of symbols in the super-frame is an integer multiple of 192 and 128. In addition, the quantity $N_S$ of symbols in each sub-frame is not limited in Table 35.

Table 35

| Sequence number | $N_{SF}$ | $N_{PS}$ | $N_S$ | $N_F$ | OH | $N_{FAW} + N_{RES}$ |
|---|---|---|---|---|---|---|
| 1 | 302 | 12 | 1152 | 347904 | 1.12% | 216 |
| 2 | 227 | 16 | 1536 | 348672 | 1.34% | 976 |
| 3 | 202 | 18 | 1728 | 349056 | 1.45% | 1356 |
| 4 | 151 | 24 | 2304 | 347904 | 1.12% | 216 |
| 5 | 101 | 36 | 3456 | 349056 | 1.45% | 1356 |
| 6 | 18 | 202 | 19392 | 349056 | 1.45% | 1356 |
| 7 | 12 | 302 | 28992 | 347904 | 1.12% | 216 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 36 may be obtained with reference to Table 35. In this case, the frame overhead OH in cases listed in Table 36 is less than 1.50%, and both the quantity $N_F$ of symbols in the super-frame and the quantity $N_S$ of symbols in each sub-frame are integer multiples of 192 and 128.

Table 36

| Sequence number | $N_{SF}$ | $N_{PS}$ | $N_S$ | $N_F$ | OH | $N_{FAW} + N_{RES}$ |
|---|---|---|---|---|---|---|
| 1 | 302 | 12 | 1152 | 347904 | 1.12% | 216 |
| 2 | 227 | 16 | 1536 | 348672 | 1.34% | 976 |
| 3 | 151 | 24 | 2304 | 347904 | 1.12% | 216 |
| 4 | 101 | 36 | 3456 | 349056 | 1.45% | 1356 |

(14) The quantity $N_{CW}$ of symbols before framing is 516096. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 37. $N_{FAW}+N_{PS}$ is an even number, $N_{FAW}$ is an even number, and $N_{PS}$ is an even number, and correspondingly, $N_{RES}>0$, and OH=($N_F$-Ncw)/Ncw.

A frame overhead of a super-frame architecture in cases listed in Table 37 is low: OR<1.50%. Neither the quantity $N_S$ of symbols in each sub-frame nor the quantity $N_F$ of symbols in the super-frame is limited in Table 37.

Table 37

| Sequence number | $N_{SF}$ | $N_{PS}$ | $N_S$ | $N_F$ | OH | $N_{FAW} + N_{RES}$ |
|---|---|---|---|---|---|---|
| 1 | 544 | 10 | 960 | 522240 | 1.19% | 704 |
| 2 | 453 | 12 | 1152 | 521856 | 1.12% | 324 |
| 3 | 389 | 14 | 1344 | 522816 | 1.30% | 1274 |
| 4 | 340 | 16 | 1536 | 522240 | 1.19% | 704 |
| 5 | 302 | 18 | 1728 | 521856 | 1.12% | 324 |
| 6 | 272 | 20 | 1920 | 522240 | 1.19% | 704 |
| 7 | 247 | 22 | 2112 | 521664 | 1.08% | 134 |
| 8 | 227 | 24 | 2304 | 523008 | 1.34% | 1464 |
| 9 | 209 | 26 | 2496 | 521664 | 1.08% | 134 |
| 10 | 170 | 32 | 3072 | 522240 | 1.19% | 704 |
| 11 | 160 | 34 | 3264 | 522240 | 1.19% | 704 |
| 12 | 151 | 36 | 3456 | 521856 | 1.12% | 324 |
| 13 | 143 | 38 | 3648 | 521664 | 1.08% | 134 |
| 14 | 136 | 40 | 3840 | 522240 | 1.19% | 704 |
| 15 | 124 | 44 | 4224 | 523776 | 1.49% | 2224 |
| 16 | 109 | 50 | 4800 | 523200 | 1.38% | 1654 |
| 17 | 101 | 54 | 5184 | 523584 | 1.45% | 2034 |
| 18 | 94 | 58 | 5568 | 523392 | 1.41% | 1844 |
| 19 | 88 | 62 | 5952 | 523776 | 1.49% | 2224 |
| 20 | 85 | 64 | 6144 | 522240 | 1.19% | 704 |
| 21 | 80 | 68 | 6528 | 522240 | 1.19% | 704 |
| 22 | 68 | 80 | 7680 | 522240 | 1.19% | 704 |
| 23 | 62 | 88 | 8448 | 523776 | 1.49% | 2224 |
| 24 | 58 | 94 | 9024 | 523392 | 1.41% | 1844 |
| 25 | 47 | 116 | 11136 | 523392 | 1.41% | 1844 |
| 26 | 44 | 124 | 11904 | 523776 | 1.49% | 2224 |
| 27 | 40 | 136 | 13056 | 522240 | 1.19% | 704 |
| 28 | 34 | 160 | 15360 | 522240 | 1.19% | 704 |
| 29 | 32 | 170 | 16320 | 522240 | 1.19% | 704 |
| 30 | 31 | 176 | 16896 | 523776 | 1.49% | 2224 |
| 31 | 29 | 188 | 18048 | 523392 | 1.41% | 1844 |
| 32 | 27 | 202 | 19392 | 523584 | 1.45% | 2034 |
| 33 | 25 | 218 | 20928 | 523200 | 1.38% | 1654 |
| 34 | 22 | 248 | 23808 | 523776 | 1.49% | 2224 |
| 35 | 20 | 272 | 26112 | 522240 | 1.19% | 704 |
| 36 | 19 | 286 | 27456 | 521664 | 1.08% | 134 |

(continued)

| Sequence number | $N_{SF}$ | $N_{PS}$ | $N_S$ | $N_F$ | OH | $N_{FAW} + N_{RES}$ |
|---|---|---|---|---|---|---|
| 37 | 18 | 302 | 28992 | 521856 | 1.12% | 324 |
| 38 | 17 | 320 | 30720 | 522240 | 1.19% | 704 |
| 39 | 16 | 340 | 32640 | 522240 | 1.19% | 704 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 38 may be obtained with reference to Table 37. In this case, the frame overhead OH in cases listed in Table 38 is less than 1.50%, and the quantity $N_F$ of symbols in the super-frame is an integer multiple of 192 and 128. In addition, the quantity $N_S$ of symbols in each sub-frame is not limited in Table 38.

Table 38

| Sequence number | $N_{SF}$ | $N_{PS}$ | $N_S$ | $N_F$ | OH | $N_{FAW} + N_{RES}$ |
|---|---|---|---|---|---|---|
| 1 | 544 | 10 | 960 | 522240 | 1.19% | 704 |
| 2 | 453 | 12 | 1152 | 521856 | 1.12% | 324 |
| 3 | 340 | 16 | 1536 | 522240 | 1.19% | 704 |
| 4 | 302 | 18 | 1728 | 521856 | 1.12% | 324 |
| 5 | 272 | 20 | 1920 | 522240 | 1.19% | 704 |
| 6 | 227 | 24 | 2304 | 523008 | 1.34% | 1464 |
| 7 | 170 | 32 | 3072 | 522240 | 1.19% | 704 |
| 8 | 160 | 34 | 3264 | 522240 | 1.19% | 704 |
| 9 | 151 | 36 | 3456 | 521856 | 1.12% | 324 |
| 10 | 136 | 40 | 3840 | 522240 | 1.19% | 704 |
| 11 | 124 | 44 | 4224 | 523776 | 1.49% | 2224 |
| 12 | 94 | 58 | 5568 | 523392 | 1.41% | 1844 |
| 13 | 88 | 62 | 5952 | 523776 | 1.49% | 2224 |
| 14 | 85 | 64 | 6144 | 522240 | 1.19% | 704 |
| 15 | 80 | 68 | 6528 | 522240 | 1.19% | 704 |
| 16 | 68 | 80 | 7680 | 522240 | 1.19% | 704 |
| 17 | 62 | 88 | 8448 | 523776 | 1.49% | 2224 |
| 18 | 58 | 94 | 9024 | 523392 | 1.41% | 1844 |
| 19 | 47 | 116 | 11136 | 523392 | 1.41% | 1844 |
| 20 | 44 | 124 | 11904 | 523776 | 1.49% | 2224 |
| 21 | 40 | 136 | 13056 | 522240 | 1.19% | 704 |
| 22 | 34 | 160 | 15360 | 522240 | 1.19% | 704 |
| 23 | 32 | 170 | 16320 | 522240 | 1.19% | 704 |
| 24 | 31 | 176 | 16896 | 523776 | 1.49% | 2224 |
| 25 | 29 | 188 | 18048 | 523392 | 1.41% | 1844 |
| 26 | 22 | 248 | 23808 | 523776 | 1.49% | 2224 |
| 27 | 20 | 272 | 26112 | 522240 | 1.19% | 704 |
| 28 | 18 | 302 | 28992 | 521856 | 1.12% | 324 |

(continued)

| Sequence number | $N_{SF}$ | $N_{PS}$ | $N_S$ | $N_F$ | OH | $N_{FAW} + N_{RES}$ |
|---|---|---|---|---|---|---|
| 29 | 17 | 320 | 30720 | 522240 | 1.19% | 704 |
| 30 | 16 | 340 | 32640 | 522240 | 1.19% | 704 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 39 may be obtained with reference to Table 38. In this case, the frame overhead OH in cases listed in Table 39 is less than 1.50%, and both the quantity $N_F$ of symbols in the super-frame and the quantity $N_S$ of symbols in each sub-frame are integer multiples of 192 and 128.

Table 39

| Sequence number | $N_{SF}$ | $N_{PS}$ | $N_S$ | $N_F$ | OH | $N_{FAW} + N_{RES}$ |
|---|---|---|---|---|---|---|
| 1 | 453 | 12 | 1152 | 521856 | 1.12% | 324 |
| 2 | 340 | 16 | 1536 | 522240 | 1.19% | 704 |
| 3 | 272 | 20 | 1920 | 522240 | 1.19% | 704 |
| 4 | 227 | 24 | 2304 | 523008 | 1.34% | 1464 |
| 5 | 170 | 32 | 3072 | 522240 | 1.19% | 704 |
| 6 | 151 | 36 | 3456 | 521856 | 1.12% | 324 |
| 7 | 136 | 40 | 3840 | 522240 | 1.19% | 704 |
| 8 | 124 | 44 | 4224 | 523776 | 1.49% | 2224 |
| 9 | 85 | 64 | 6144 | 522240 | 1.19% | 704 |
| 10 | 80 | 68 | 6528 | 522240 | 1.19% | 704 |
| 11 | 68 | 80 | 7680 | 522240 | 1.19% | 704 |
| 12 | 62 | 88 | 8448 | 523776 | 1.49% | 2224 |
| 13 | 47 | 116 | 11136 | 523392 | 1.41% | 1844 |
| 14 | 44 | 124 | 11904 | 523776 | 1.49% | 2224 |
| 15 | 40 | 136 | 13056 | 522240 | 1.19% | 704 |
| 16 | 34 | 160 | 15360 | 522240 | 1.19% | 704 |
| 17 | 31 | 176 | 16896 | 523776 | 1.49% | 2224 |
| 18 | 29 | 188 | 18048 | 523392 | 1.41% | 1844 |
| 19 | 22 | 248 | 23808 | 523776 | 1.49% | 2224 |
| 20 | 20 | 272 | 26112 | 522240 | 1.19% | 704 |
| 21 | 17 | 320 | 30720 | 522240 | 1.19% | 704 |
| 22 | 16 | 340 | 32640 | 522240 | 1.19% | 704 |

(15) The quantity $N_{CW}$ of symbols before framing is 688128. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 40. $N_{FAW}+N_{PS}$ is an even number, $N_{FAW}$ is an even number, and $N_{PS}$ is an even number, and correspondingly, $N_{RES}>0$, and $OH=(N_F-N_{CW})/N_{CW}$.

A frame overhead of a super-frame architecture in cases listed in Table 40 is low: OR<1.50%. Neither the quantity $N_S$ of symbols in each sub-frame nor the quantity $N_F$ of symbols in the super-frame is limited in Table 40.

Table 40

| Sequence number | $N_{SF}$ | $N_{PS}$ | $N_S$ | $N_F$ | OH | $N_{FAW} + N_{RES}$ |
|---|---|---|---|---|---|---|
| 1 | 725 | 10 | 960 | 696000 | 1.14% | 622 |
| 2 | 604 | 12 | 1152 | 695808 | 1.12% | 432 |
| 3 | 518 | 14 | 1344 | 696192 | 1.17% | 812 |
| 4 | 453 | 16 | 1536 | 695808 | 1.12% | 432 |
| 5 | 403 | 18 | 1728 | 696384 | 1.20% | 1002 |
| 6 | 363 | 20 | 1920 | 696960 | 1.28% | 1572 |
| 7 | 330 | 22 | 2112 | 696960 | 1.28% | 1572 |
| 8 | 302 | 24 | 2304 | 695808 | 1.12% | 432 |
| 9 | 279 | 26 | 2496 | 696384 | 1.20% | 1002 |
| 10 | 259 | 28 | 2688 | 696192 | 1.17% | 812 |
| 11 | 242 | 30 | 2880 | 696960 | 1.28% | 1572 |
| 12 | 227 | 32 | 3072 | 697344 | 1.34% | 1952 |
| 13 | 202 | 36 | 3456 | 698112 | 1.45% | 2712 |
| 14 | 191 | 38 | 3648 | 696768 | 1.26% | 1382 |
| 15 | 173 | 42 | 4032 | 697536 | 1.37% | 2142 |
| 16 | 165 | 44 | 4224 | 696960 | 1.28% | 1572 |
| 17 | 158 | 46 | 4416 | 697728 | 1.40% | 2332 |
| 18 | 151 | 48 | 4608 | 695808 | 1.12% | 432 |
| 19 | 145 | 50 | 4800 | 696000 | 1.14% | 622 |
| 20 | 125 | 58 | 5568 | 696000 | 1.14% | 622 |
| 21 | 121 | 60 | 5760 | 696960 | 1.28% | 1572 |
| 22 | 117 | 62 | 5952 | 696384 | 1.20% | 1002 |
| 23 | 110 | 66 | 6336 | 696960 | 1.28% | 1572 |
| 24 | 101 | 72 | 6912 | 698112 | 1.45% | 2712 |
| 25 | 98 | 74 | 7104 | 696192 | 1.17% | 812 |
| 26 | 93 | 78 | 7488 | 696384 | 1.20% | 1002 |
| 27 | 79 | 92 | 8832 | 697728 | 1.40% | 2332 |
| 28 | 74 | 98 | 9408 | 696192 | 1.17% | 812 |
| 29 | 66 | 110 | 10560 | 696960 | 1.28% | 1572 |
| 30 | 55 | 132 | 12672 | 696960 | 1.28% | 1572 |
| 31 | 49 | 148 | 14208 | 696192 | 1.17% | 812 |
| 32 | 46 | 158 | 15168 | 697728 | 1.40% | 2332 |
| 33 | 39 | 186 | 17856 | 696384 | 1.20% | 1002 |
| 34 | 37 | 196 | 18816 | 696192 | 1.17% | 812 |
| 35 | 36 | 202 | 19392 | 698112 | 1.45% | 2712 |
| 36 | 33 | 220 | 21120 | 696960 | 1.28% | 1572 |

(continued)

| Sequence number | $N_{SF}$ | $N_{PS}$ | $N_S$ | $N_F$ | OH | $N_{FAW} + N_{RES}$ |
|---|---|---|---|---|---|---|
| 37 | 31 | 234 | 22464 | 696384 | 1.20% | 1002 |
| 38 | 30 | 242 | 23232 | 696960 | 1.28% | 1572 |
| 39 | 29 | 250 | 24000 | 696000 | 1.14% | 622 |
| 40 | 25 | 290 | 27840 | 696000 | 1.14% | 622 |
| 41 | 24 | 302 | 28992 | 695808 | 1.12% | 432 |
| 42 | 23 | 316 | 30336 | 697728 | 1.40% | 2332 |
| 43 | 22 | 330 | 31680 | 696960 | 1.28% | 1572 |
| 44 | 21 | 346 | 33216 | 697536 | 1.37% | 2142 |
| 45 | 19 | 382 | 36672 | 696768 | 1.26% | 1382 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 41 may be obtained with reference to Table 40. In this case, the frame overhead OH in cases listed in Table 41 is less than 1.50%, and the quantity $N_F$ of symbols in the super-frame is an integer multiple of 192 and 128. In addition, the quantity $N_S$ of symbols in each sub-frame is not limited in Table 41.

Table 41

| Sequence number | $N_{SF}$ | $N_{PS}$ | $N_S$ | $N_F$ | OH | $N_{FAW} + N_{RES}$ |
|---|---|---|---|---|---|---|
| 1 | 604 | 12 | 1152 | 695808 | 1.12% | 432 |
| 2 | 518 | 14 | 1344 | 696192 | 1.17% | 812 |
| 3 | 453 | 16 | 1536 | 695808 | 1.12% | 432 |
| 4 | 363 | 20 | 1920 | 696960 | 1.28% | 1572 |
| 5 | 330 | 22 | 2112 | 696960 | 1.28% | 1572 |
| 6 | 302 | 24 | 2304 | 695808 | 1.12% | 432 |
| 7 | 259 | 28 | 2688 | 696192 | 1.17% | 812 |
| 8 | 242 | 30 | 2880 | 696960 | 1.28% | 1572 |
| 9 | 227 | 32 | 3072 | 697344 | 1.34% | 1952 |
| 10 | 202 | 36 | 3456 | 698112 | 1.45% | 2712 |
| 11 | 165 | 44 | 4224 | 696960 | 1.28% | 1572 |
| 12 | 158 | 46 | 4416 | 697728 | 1.40% | 2332 |
| 13 | 151 | 48 | 4608 | 695808 | 1.12% | 432 |
| 14 | 121 | 60 | 5760 | 696960 | 1.28% | 1572 |
| 15 | 110 | 66 | 6336 | 696960 | 1.28% | 1572 |
| 16 | 101 | 72 | 6912 | 698112 | 1.45% | 2712 |
| 17 | 98 | 74 | 7104 | 696192 | 1.17% | 812 |
| 18 | 79 | 92 | 8832 | 697728 | 1.40% | 2332 |
| 19 | 74 | 98 | 9408 | 696192 | 1.17% | 812 |
| 20 | 66 | 110 | 10560 | 696960 | 1.28% | 1572 |
| 21 | 55 | 132 | 12672 | 696960 | 1.28% | 1572 |
| 22 | 49 | 148 | 14208 | 696192 | 1.17% | 812 |

(continued)

| Sequence number | $N_{SF}$ | $N_{PS}$ | $N_S$ | $N_F$ | OH | $N_{FAW} + N_{RES}$ |
|---|---|---|---|---|---|---|
| 23 | 46 | 158 | 15168 | 697728 | 1.40% | 2332 |
| 24 | 37 | 196 | 18816 | 696192 | 1.17% | 812 |
| 25 | 36 | 202 | 19392 | 698112 | 1.45% | 2712 |
| 26 | 33 | 220 | 21120 | 696960 | 1.28% | 1572 |
| 27 | 30 | 242 | 23232 | 696960 | 1.28% | 1572 |
| 28 | 24 | 302 | 28992 | 695808 | 1.12% | 432 |
| 29 | 23 | 316 | 30336 | 697728 | 1.40% | 2332 |
| 30 | 22 | 330 | 31680 | 696960 | 1.28% | 1572 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if Ns is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 42 may be obtained with reference to Table 41. In this case, the frame overhead OH in cases listed in Table 42 is less than 1.50%, and both the quantity $N_F$ of symbols in the super-frame and the quantity $N_S$ of symbols in each sub-frame are integer multiples of 192 and 128.

Table 42

| Sequence number | $N_{SF}$ | $N_{PS}$ | $N_S$ | $N_F$ | OH | $N_{FAW} + N_{RES}$ |
|---|---|---|---|---|---|---|
| 1 | 604 | 12 | 1152 | 695808 | 1.12% | 432 |
| 2 | 453 | 16 | 1536 | 695808 | 1.12% | 432 |
| 3 | 363 | 20 | 1920 | 696960 | 1.28% | 1572 |
| 4 | 302 | 24 | 2304 | 695808 | 1.12% | 432 |
| 5 | 259 | 28 | 2688 | 696192 | 1.17% | 812 |
| 6 | 227 | 32 | 3072 | 697344 | 1.34% | 1952 |
| 7 | 202 | 36 | 3456 | 698112 | 1.45% | 2712 |
| 8 | 165 | 44 | 4224 | 696960 | 1.28% | 1572 |
| 9 | 151 | 48 | 4608 | 695808 | 1.12% | 432 |
| 10 | 121 | 60 | 5760 | 696960 | 1.28% | 1572 |
| 11 | 101 | 72 | 6912 | 698112 | 1.45% | 2712 |
| 12 | 79 | 92 | 8832 | 697728 | 1.40% | 2332 |
| 13 | 55 | 132 | 12672 | 696960 | 1.28% | 1572 |
| 14 | 49 | 148 | 14208 | 696192 | 1.17% | 812 |
| 15 | 37 | 196 | 18816 | 696192 | 1.17% | 812 |
| 16 | 33 | 220 | 21120 | 696960 | 1.28% | 1572 |
| 17 | 23 | 316 | 30336 | 697728 | 1.40% | 2332 |

(16) The quantity $N_{CW}$ of symbols before framing is 150528. For example, an open FEC (Open FEC, OFEC) encoding scheme with an encoding overhead of approximately 17.9% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 43. $N_{FAW}+N_{PS}$ is an even number, $N_{FAW}$ is an even number, and $N_{PS}$ is an even number, and correspondingly, $N_{RES}>0$, and OH=$(N_F-Ncw)/Ncw$.

A frame overhead of a super-frame architecture in cases listed in Table 43 is low: OH<1.50%. Neither the quantity $N_S$ of symbols in each sub-frame nor the quantity $N_F$ of symbols in the super-frame is limited in Table 43. In some specific application, a bus width in a specific DSP implementation of the receiver and the transmitter is 192 or 128. For ease of hardware implementation, the quantity $N_F$ of symbols in the super-frame needs to be an integer multiple of 192 and 128. Preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. It should be noted that, in cases listed in Table 43, both the quantity $N_F$ of symbols in the super-frame and the quantity $N_S$ of symbols in each sub-frame are integer multiples of 192 and 128. In Case (16), there is no case in which both the quantity $N_F$ of symbols in the super-frame and the quantity $N_S$ of symbols in each sub-frame are integer multiples of 192 and 128, and there is no case in which the quantity $N_F$ of symbols in the super-frame is an integer multiple of 192 and 128 while the quantity $N_S$ of symbols in each sub-frame is not an integer multiple of 192 or 128.

Table 43

| Sequence number | $N_{SF}$ | $N_{PS}$ | $N_S$ | $N_F$ | OH | $N_{FAW} + N_{RES}$ |
|---|---|---|---|---|---|---|
| 1 | 159 | 10 | 960 | 152640 | 1.40% | 522 |
| 2 | 61 | 26 | 2496 | 152256 | 1.15% | 142 |
| 3 | 53 | 30 | 2880 | 152640 | 1.40% | 522 |
| 4 | 15 | 106 | 10176 | 152640 | 1.40% | 522 |
| 5 | 13 | 122 | 11712 | 152256 | 1.15% | 142 |
| 6 | 5 | 318 | 30528 | 152640 | 1.40% | 522 |

(17) The quantity Ncw of symbols before framing is 129024. For example, an open FEC (Open FEC, OFEC) encoding scheme with an encoding overhead of approximately 21.5% is used, or another encoding scheme may be used. A 1st symbol in every $N_{PG}=96$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 44. $N_{FAW}+N_{PS}$ is an even number, $N_{FAW}$ is an even number, and $N_{PS}$ is an even number, and correspondingly, $N_{RES}>0$, and OH=$(N_F-Ncw)/Ncw$.

A frame overhead of a super-frame architecture in cases listed in Table 44 is low: OR<1.50%. Neither the quantity $N_S$ of symbols in each sub-frame nor the quantity $N_F$ of symbols in the super-frame is limited in Table 44. In some specific application, a bus width in a specific DSP implementation of the receiver and the transmitter is 192 or 128. For ease of hardware implementation, the quantity $N_F$ of symbols in the super-frame needs to be an integer multiple of 192 and 128. It should be noted that, in all cases listed in the table, the quantity $N_F$ of symbols in each sub-frame is an integer multiple of 192 and 128. In Case (17), there is no case in which the quantity $N_F$ of symbols in the super-frame is not an integer multiple of 192 or 128.

Table 44

| Sequence number | $N_{SF}$ | $N_{PS}$ | $N_S$ | $N_F$ | OH | $N_{FAW} +N_{RES}$ |
|---|---|---|---|---|---|---|
| 1 | 136 | 10 | 960 | 130560 | 1.19% | 176 |
| 2 | 85 | 16 | 1536 | 130560 | 1.19% | 176 |
| 3 | 68 | 20 | 1920 | 130560 | 1.19% | 176 |
| 4 | 62 | 22 | 2112 | 130944 | 1.49% | 556 |
| 5 | 40 | 34 | 3264 | 130560 | 1.19% | 176 |
| 6 | 34 | 40 | 3840 | 130560 | 1.19% | 176 |
| 7 | 31 | 44 | 4224 | 130944 | 1.49% | 556 |
| 8 | 22 | 62 | 5952 | 130944 | 1.49% | 556 |

(continued)

| Sequence number | $N_{SF}$ | $N_{PS}$ | $N_S$ | $N_F$ | OH | $N_{FAW} + N_{RES}$ |
|---|---|---|---|---|---|---|
| 9 | 20 | 68 | 6528 | 130560 | 1.19% | 176 |
| 10 | 17 | 80 | 7680 | 130560 | 1.19% | 176 |
| 11 | 11 | 124 | 11904 | 130944 | 1.49% | 556 |
| 12 | 10 | 136 | 13056 | 130560 | 1.19% | 176 |
| 13 | 8 | 170 | 16320 | 130560 | 1.19% | 176 |
| 14 | 5 | 272 | 26112 | 130560 | 1.19% | 176 |
| 15 | 4 | 340 | 32640 | 130560 | 1.19% | 176 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 45 may be obtained with reference to Table 44. In this case, the frame overhead OH in cases listed in Table 45 is less than 1.50%, and both the quantity $N_F$ of symbols in the super-frame and the quantity $N_S$ of symbols in each sub-frame are integer multiples of 192 and 128.

Table 45

| Sequence number | $N_{SF}$ | $N_{PS}$ | $N_S$ | $N_F$ | OH | $N_{FAW} + N_{RES}$ |
|---|---|---|---|---|---|---|
| 1 | 85 | 16 | 1536 | 130560 | 1.19% | 176 |
| 2 | 68 | 20 | 1920 | 130560 | 1.19% | 176 |
| 3 | 34 | 40 | 3840 | 130560 | 1.19% | 176 |
| 4 | 31 | 44 | 4224 | 130944 | 1.49% | 556 |
| 5 | 20 | 68 | 6528 | 130560 | 1.19% | 176 |
| 6 | 17 | 80 | 7680 | 130560 | 1.19% | 176 |
| 7 | 11 | 124 | 11904 | 130944 | 1.49% | 556 |
| 8 | 10 | 136 | 13056 | 130560 | 1.19% | 176 |
| 9 | 5 | 272 | 26112 | 130560 | 1.19% | 176 |
| 10 | 4 | 340 | 32640 | 130560 | 1.19% | 176 |

(18) The quantity $N_{CW}$ of symbols before framing is 107520. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 46. $N_{FAW}+N_{PS}$ is an even number, $N_{FAW}$ is an even number, and $N_{PS}$ is an even number, and correspondingly, $N_{RES}>0$, and OH=($N_F$-Ncw)/Ncw.

A frame overhead of a super-frame architecture in cases listed in Table 46 is low: OH<1.50%. Neither the quantity $N_S$ of symbols in each sub-frame nor the quantity $N_F$ of symbols in the super-frame is limited in Table 46.

Table 46

| Sequence number | $N_{SF}$ | $N_{PS}$ | $N_S$ | $N_F$ | OH | $N_{FAW} + N_{RES}$ |
|---|---|---|---|---|---|---|
| 1 | 81 | 14 | 1344 | 108864 | 1.25% | 210 |
| 2 | 71 | 16 | 1536 | 109056 | 1.43% | 400 |

(continued)

| Sequence number | $N_{SF}$ | $N_{PS}$ | $N_S$ | $N_F$ | OH | $N_{FAW} + N_{RES}$ |
|---|---|---|---|---|---|---|
| 3 | 63 | 18 | 1728 | 108864 | 1.25% | 210 |
| 4 | 27 | 42 | 4032 | 108864 | 1.25% | 210 |
| 5 | 21 | 54 | 5184 | 108864 | 1.25% | 210 |
| 6 | 9 | 126 | 12096 | 108864 | 1.25% | 210 |
| 7 | 8 | 142 | 13632 | 109056 | 1.43% | 400 |
| 8 | 7 | 162 | 15552 | 108864 | 1.25% | 210 |
| 9 | 4 | 284 | 27264 | 109056 | 1.43% | 400 |
| 10 | 3 | 378 | 36288 | 108864 | 1.25% | 210 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 47 may be obtained with reference to Table 46. In this case, the frame overhead OH in cases listed in Table 47 is less than 1.50%, and the quantity $N_F$ of symbols in the super-frame is an integer multiple of 192 and 128. In addition, the quantity $N_S$ of symbols in each sub-frame is not limited in Table 47.

Table 47

| Sequence number | $N_{SF}$ | $N_{PS}$ | $N_S$ | $N_F$ | OH | $N_{FAW} + N_{RES}$ |
|---|---|---|---|---|---|---|
| 1 | 71 | 16 | 1536 | 109056 | 1.43% | 400 |
| 2 | 8 | 142 | 13632 | 109056 | 1.43% | 400 |
| 3 | 4 | 284 | 27264 | 109056 | 1.43% | 400 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if Ns is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 48 may be obtained with reference to Table 47. In this case, the frame overhead OH in cases listed in Table 48 is less than 1.50%, and both the quantity $N_F$ of symbols in the super-frame and the quantity $N_S$ of symbols in each sub-frame are integer multiples of 192 and 128.

Table 48

| Sequence number | $N_{SF}$ | $N_{PS}$ | $N_S$ | $N_F$ | OH | $N_{FAW} + N_{RES}$ |
|---|---|---|---|---|---|---|
| 1 | 71 | 16 | 1536 | 109056 | 1.43% | 400 |
| 2 | 4 | 284 | 27264 | 109056 | 1.43% | 400 |

(19) The quantity $N_{CW}$ of symbols before framing is 175616. For example, a CFEC encoding scheme with an encoding overhead of approximately 15.3% is used, or another encoding scheme may be used. A 1st symbol in every $N_{PG}=96$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 49. $N_{FAW}+N_{PS}$ is an even number, $N_{FAW}$ is an even number, and $N_{PS}$ is an even number, and correspondingly, $N_{RES}>0$, and $OH=(N_F-N_{CW})/N_{CW}$.

A frame overhead of a super-frame architecture in cases listed in Table 49 is low: OR<1.50%. Neither the quantity $N_S$ of symbols in each sub-frame nor the quantity $N_F$ of symbols in the super-frame is limited in Table 49.

Table 49

| Sequence number | $N_{SF}$ | $N_{PS}$ | $N_S$ | $N_F$ | OH | $N_{FAW} + N_{RES}$ |
|---|---|---|---|---|---|---|
| 1 | 185 | 10 | 960 | 177600 | 1.13% | 134 |
| 2 | 116 | 16 | 1536 | 178176 | 1.46% | 704 |
| 3 | 103 | 18 | 1728 | 177984 | 1.35% | 514 |
| 4 | 58 | 32 | 3072 | 178176 | 1.46% | 704 |
| 5 | 37 | 50 | 4800 | 177600 | 1.13% | 134 |
| 6 | 32 | 58 | 5568 | 178176 | 1.46% | 704 |
| 7 | 29 | 64 | 6144 | 178176 | 1.46% | 704 |
| 8 | 25 | 74 | 7104 | 177600 | 1.13% | 134 |
| 9 | 16 | 116 | 11136 | 178176 | 1.46% | 704 |
| 10 | 9 | 206 | 19776 | 177984 | 1.35% | 514 |
| 11 | 8 | 232 | 22272 | 178176 | 1.46% | 704 |
| 12 | 5 | 370 | 35520 | 177600 | 1.13% | 134 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 50 may be obtained with reference to Table 49. In this case, the frame overhead OH in cases listed in Table 50 is less than 1.50%, and the quantity $N_F$ of symbols in the super-frame is an integer multiple of 192 and 128. In addition, the quantity $N_S$ of symbols in each sub-frame is not limited in Table 50.

Table 50

| Sequence number | $N_{SF}$ | $N_{PS}$ | $N_S$ | $N_F$ | OH | $N_{FAW} + N_{RES}$ |
|---|---|---|---|---|---|---|
| 1 | 116 | 16 | 1536 | 178176 | 1.46% | 704 |
| 2 | 58 | 32 | 3072 | 178176 | 1.46% | 704 |
| 3 | 32 | 58 | 5568 | 178176 | 1.46% | 704 |
| 4 | 29 | 64 | 6144 | 178176 | 1.46% | 704 |
| 5 | 16 | 116 | 11136 | 178176 | 1.46% | 704 |
| 6 | 8 | 232 | 22272 | 178176 | 1.46% | 704 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if Ns is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 51 may be obtained with reference to Table 50. In this case, the frame overhead OH in cases listed in Table 51 is less than 1.50%, and both the quantity $N_F$ of symbols in the super-frame and the quantity $N_S$ of symbols in each sub-frame are integer multiples of 192 and 128.

Table 51

| Sequence number | $N_{SF}$ | $N_{PS}$ | $N_S$ | $N_F$ | OH | $N_{FAW} + N_{RES}$ |
|---|---|---|---|---|---|---|
| 1 | 116 | 16 | 1536 | 178176 | 1.46% | 704 |
| 2 | 58 | 32 | 3072 | 178176 | 1.46% | 704 |
| 3 | 29 | 64 | 6144 | 178176 | 1.46% | 704 |

(continued)

| Sequence number | $N_{SF}$ | $N_{PS}$ | $N_S$ | $N_F$ | OH | $N_{FAW} + N_{RES}$ |
|---|---|---|---|---|---|---|
| 4 | 16 | 116 | 11136 | 178176 | 1.46% | 704 |
| 5 | 8 | 232 | 22272 | 178176 | 1.46% | 704 |

(20) The quantity $N_{CW}$ of symbols before framing is 351232. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 52. $N_{FAW}+N_{PS}$ is an even number, $N_{FAW}$ is an even number, and $N_{PS}$ is an even number, and correspondingly, $N_{RES}$>0, and OH=$(N_F-Ncw)/Ncw$.

A frame overhead of a super-frame architecture in cases listed in Table 52 is low: OR<1.50%. Neither the quantity $N_S$ of symbols in each sub-frame nor the quantity $N_F$ of symbols in the super-frame is limited in Table 52.

Table 52

| Sequence number | $N_{SF}$ | $N_{PS}$ | $N_S$ | $N_F$ | OH | $N_{FAW} + N_{RES}$ |
|---|---|---|---|---|---|---|
| 1 | 370 | 10 | 960 | 355200 | 1.13% | 268 |
| 2 | 309 | 12 | 1152 | 355968 | 1.35% | 1028 |
| 3 | 265 | 14 | 1344 | 356160 | 1.40% | 1218 |
| 4 | 232 | 16 | 1536 | 356352 | 1.46% | 1408 |
| 5 | 206 | 18 | 1728 | 355968 | 1.35% | 1028 |
| 6 | 185 | 20 | 1920 | 355200 | 1.13% | 268 |
| 7 | 116 | 32 | 3072 | 356352 | 1.46% | 1408 |
| 8 | 109 | 34 | 3264 | 355776 | 1.29% | 838 |
| 9 | 103 | 36 | 3456 | 355968 | 1.35% | 1028 |
| 10 | 74 | 50 | 4800 | 355200 | 1.13% | 268 |
| 11 | 64 | 58 | 5568 | 356352 | 1.46% | 1408 |
| 12 | 58 | 64 | 6144 | 356352 | 1.46% | 1408 |
| 13 | 53 | 70 | 6720 | 356160 | 1.40% | 1218 |
| 14 | 50 | 74 | 7104 | 355200 | 1.13% | 268 |
| 15 | 43 | 86 | 8256 | 355008 | 1.08% | 78 |
| 16 | 37 | 100 | 9600 | 355200 | 1.13% | 268 |
| 17 | 35 | 106 | 10176 | 356160 | 1.40% | 1218 |
| 18 | 32 | 116 | 11136 | 356352 | 1.46% | 1408 |
| 19 | 29 | 128 | 12288 | 356352 | 1.46% | 1408 |
| 20 | 25 | 148 | 14208 | 355200 | 1.13% | 268 |
| 21 | 18 | 206 | 19776 | 355968 | 1.35% | 1028 |
| 22 | 17 | 218 | 20928 | 355776 | 1.29% | 838 |
| 23 | 16 | 232 | 22272 | 356352 | 1.46% | 1408 |
| 24 | 10 | 370 | 35520 | 355200 | 1.13% | 268 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 53 may be obtained with reference to Table 52. In this case, the frame overhead OH in cases listed in Table 53 is less than 1.50%, and the quantity $N_F$ of symbols in the super-frame is an integer multiple of 192 and 128. In addition, the quantity $N_S$ of symbols in each sub-frame is not limited in Table 53.

Table 53

| Sequence number | $N_{SF}$ | $N_{PS}$ | $N_S$ | $N_F$ | OH | $N_{FAW} + N_{RES}$ |
|---|---|---|---|---|---|---|
| 1 | 370 | 10 | 960 | 355200 | 1.13% | 268 |
| 2 | 309 | 12 | 1152 | 355968 | 1.35% | 1028 |
| 3 | 232 | 16 | 1536 | 356352 | 1.46% | 1408 |
| 4 | 206 | 18 | 1728 | 355968 | 1.35% | 1028 |
| 5 | 185 | 20 | 1920 | 355200 | 1.13% | 268 |
| 6 | 116 | 32 | 3072 | 356352 | 1.46% | 1408 |
| 7 | 103 | 36 | 3456 | 355968 | 1.35% | 1028 |
| 8 | 74 | 50 | 4800 | 355200 | 1.13% | 268 |
| 9 | 64 | 58 | 5568 | 356352 | 1.46% | 1408 |
| 10 | 58 | 64 | 6144 | 356352 | 1.46% | 1408 |
| 11 | 50 | 74 | 7104 | 355200 | 1.13% | 268 |
| 12 | 37 | 100 | 9600 | 355200 | 1.13% | 268 |
| 13 | 32 | 116 | 11136 | 356352 | 1.46% | 1408 |
| 14 | 29 | 128 | 12288 | 356352 | 1.46% | 1408 |
| 15 | 25 | 148 | 14208 | 355200 | 1.13% | 268 |
| 16 | 18 | 206 | 19776 | 355968 | 1.35% | 1028 |
| 17 | 16 | 232 | 22272 | 356352 | 1.46% | 1408 |
| 18 | 10 | 370 | 35520 | 355200 | 1.13% | 268 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 54 may be obtained with reference to Table 53. In this case, the frame overhead OH in cases listed in Table 54 is less than 1.50%, and both the quantity $N_F$ of symbols in the super-frame and the quantity $N_S$ of symbols in each sub-frame are integer multiples of 192 and 128.

Table 54

| Sequence number | $N_{SF}$ | $N_{PS}$ | $N_S$ | $N_F$ | OH | $N_{FAW} + N_{RES}$ |
|---|---|---|---|---|---|---|
| 1 | 309 | 12 | 1152 | 355968 | 1.35% | 1028 |
| 2 | 232 | 16 | 1536 | 356352 | 1.46% | 1408 |
| 3 | 185 | 20 | 1920 | 355200 | 1.13% | 268 |
| 4 | 116 | 32 | 3072 | 356352 | 1.46% | 1408 |
| 5 | 103 | 36 | 3456 | 355968 | 1.35% | 1028 |
| 6 | 58 | 64 | 6144 | 356352 | 1.46% | 1408 |
| 7 | 37 | 100 | 9600 | 355200 | 1.13% | 268 |
| 8 | 32 | 116 | 11136 | 356352 | 1.46% | 1408 |

(continued)

| Sequence number | $N_{SF}$ | $N_{PS}$ | $N_S$ | $N_F$ | OH | $N_{FAW} + N_{RES}$ |
|---|---|---|---|---|---|---|
| 9 | 29 | 128 | 12288 | 356352 | 1.46% | 1408 |
| 10 | 25 | 148 | 14208 | 355200 | 1.13% | 268 |
| 11 | 16 | 232 | 22272 | 356352 | 1.46% | 1408 |

(21) The quantity $N_{CW}$ of symbols before framing is 526848. For example, an open FEC (Open FEC, OFEC) encoding scheme with an encoding overhead of approximately 15.3% is used, or another encoding scheme may be used. A 1st symbol in every $N_{PG}=96$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 55. $N_{FAW}+N_{PS}$ is an even number, $N_{FAW}$ is an even number, and $N_{PS}$ is an even number, and correspondingly, $N_{RES}>0$, and OH=$(N_F-Ncw)/Ncw$.
A frame overhead of a super-frame architecture in cases listed in Table 55 is low: OH<1.50%. Neither the quantity $N_S$ of symbols in each sub-frame nor the quantity $N_F$ of symbols in the super-frame is limited in Table 55.

Table 55

| Sequence number | $N_{SF}$ | $N_{PS}$ | $N_S$ | $N_F$ | OH | $N_{FAW} + N_{RES}$ |
|---|---|---|---|---|---|---|
| 1 | 555 | 10 | 960 | 532800 | 1.13% | 402 |
| 2 | 463 | 12 | 1152 | 533376 | 1.24% | 972 |
| 3 | 397 | 14 | 1344 | 533568 | 1.28% | 1162 |
| 4 | 347 | 16 | 1536 | 532992 | 1.17% | 592 |
| 5 | 309 | 18 | 1728 | 533952 | 1.35% | 1542 |
| 6 | 278 | 20 | 1920 | 533760 | 1.31% | 1352 |
| 7 | 253 | 22 | 2112 | 534336 | 1.42% | 1922 |
| 8 | 232 | 24 | 2304 | 534528 | 1.46% | 2112 |
| 9 | 214 | 26 | 2496 | 534144 | 1.38% | 1732 |
| 10 | 185 | 30 | 2880 | 532800 | 1.13% | 402 |
| 11 | 174 | 32 | 3072 | 534528 | 1.46% | 2112 |
| 12 | 146 | 38 | 3648 | 532608 | 1.09% | 212 |
| 13 | 139 | 40 | 3840 | 533760 | 1.31% | 1352 |
| 14 | 121 | 46 | 4416 | 534336 | 1.42% | 1922 |
| 15 | 116 | 48 | 4608 | 534528 | 1.46% | 2112 |
| 16 | 111 | 50 | 4800 | 532800 | 1.13% | 402 |
| 17 | 107 | 52 | 4992 | 534144 | 1.38% | 1732 |
| 18 | 103 | 54 | 5184 | 533952 | 1.35% | 1542 |
| 19 | 96 | 58 | 5568 | 534528 | 1.46% | 2112 |
| 20 | 87 | 64 | 6144 | 534528 | 1.46% | 2112 |
| 21 | 75 | 74 | 7104 | 532800 | 1.13% | 402 |
| 22 | 73 | 76 | 7296 | 532608 | 1.09% | 212 |
| 23 | 59 | 94 | 9024 | 532416 | 1.06% | 22 |
| 24 | 58 | 96 | 9216 | 534528 | 1.46% | 2112 |
| 25 | 48 | 116 | 11136 | 534528 | 1.46% | 2112 |
| 26 | 47 | 118 | 11328 | 532416 | 1.06% | 22 |

(continued)

| Sequence number | $N_{SF}$ | $N_{PS}$ | $N_S$ | $N_F$ | OH | $N_{FAW} + N_{RES}$ |
|---|---|---|---|---|---|---|
| 27 | 38 | 146 | 14016 | 532608 | 1.09% | 212 |
| 28 | 37 | 150 | 14400 | 532800 | 1.13% | 402 |
| 29 | 32 | 174 | 16704 | 534528 | 1.46% | 2112 |
| 30 | 29 | 192 | 18432 | 534528 | 1.46% | 2112 |
| 31 | 27 | 206 | 19776 | 533952 | 1.35% | 1542 |
| 32 | 26 | 214 | 20544 | 534144 | 1.38% | 1732 |
| 33 | 25 | 222 | 21312 | 532800 | 1.13% | 402 |
| 34 | 24 | 232 | 22272 | 534528 | 1.46% | 2112 |
| 35 | 23 | 242 | 23232 | 534336 | 1.42% | 1922 |
| 36 | 20 | 278 | 26688 | 533760 | 1.31% | 1352 |
| 37 | 19 | 292 | 28032 | 532608 | 1.09% | 212 |
| 38 | 16 | 348 | 33408 | 534528 | 1.46% | 2112 |
| 39 | 15 | 370 | 35520 | 532800 | 1.13% | 402 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 56 may be obtained with reference to Table 55. In this case, the frame overhead OH in cases listed in Table 56 is less than 1.50%, and the quantity $N_F$ of symbols in the super-frame is an integer multiple of 192 and 128. In addition, the quantity $N_S$ of symbols in each sub-frame is not limited in Table 56.

Table 56

| Sequence number | $N_{SF}$ | $N_{PS}$ | $N_S$ | $N_F$ | OH | $N_{FAW} + N_{RES}$ |
|---|---|---|---|---|---|---|
| 1 | 463 | 12 | 1152 | 533376 | 1.24% | 972 |
| 2 | 347 | 16 | 1536 | 532992 | 1.17% | 592 |
| 3 | 278 | 20 | 1920 | 533760 | 1.31% | 1352 |
| 4 | 232 | 24 | 2304 | 534528 | 1.46% | 2112 |
| 5 | 214 | 26 | 2496 | 534144 | 1.38% | 1732 |
| 6 | 174 | 32 | 3072 | 534528 | 1.46% | 2112 |
| 7 | 146 | 38 | 3648 | 532608 | 1.09% | 212 |
| 8 | 139 | 40 | 3840 | 533760 | 1.31% | 1352 |
| 9 | 116 | 48 | 4608 | 534528 | 1.46% | 2112 |
| 10 | 107 | 52 | 4992 | 534144 | 1.38% | 1732 |
| 11 | 96 | 58 | 5568 | 534528 | 1.46% | 2112 |
| 12 | 87 | 64 | 6144 | 534528 | 1.46% | 2112 |
| 13 | 73 | 76 | 7296 | 532608 | 1.09% | 212 |
| 14 | 58 | 96 | 9216 | 534528 | 1.46% | 2112 |
| 15 | 48 | 116 | 11136 | 534528 | 1.46% | 2112 |
| 16 | 38 | 146 | 14016 | 532608 | 1.09% | 212 |
| 17 | 32 | 174 | 16704 | 534528 | 1.46% | 2112 |
| 18 | 29 | 192 | 18432 | 534528 | 1.46% | 2112 |

(continued)

| Sequence number | $N_{SF}$ | $N_{PS}$ | $N_S$ | $N_F$ | OH | $N_{FAW} + N_{RES}$ |
|---|---|---|---|---|---|---|
| 19 | 26 | 214 | 20544 | 534144 | 1.38% | 1732 |
| 20 | 24 | 232 | 22272 | 534528 | 1.46% | 2112 |
| 21 | 20 | 278 | 26688 | 533760 | 1.31% | 1352 |
| 22 | 19 | 292 | 28032 | 532608 | 1.09% | 212 |
| 23 | 16 | 348 | 33408 | 534528 | 1.46% | 2112 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 57 may be obtained with reference to Table 56. In this case, the frame overhead OH in cases listed in Table 57 is less than 1.50%, and both the quantity $N_F$ of symbols in the super-frame and the quantity $N_S$ of symbols in each sub-frame are integer multiples of 192 and 128.

Table 57

| Sequence number | $N_{SF}$ | $N_{PS}$ | $N_S$ | $N_F$ | OH | $N_{FAW} + N_{RES}$ |
|---|---|---|---|---|---|---|
| 1 | 463 | 12 | 1152 | 533376 | 1.24% | 972 |
| 2 | 347 | 16 | 1536 | 532992 | 1.17% | 592 |
| 3 | 278 | 20 | 1920 | 533760 | 1.31% | 1352 |
| 4 | 232 | 24 | 2304 | 534528 | 1.46% | 2112 |
| 5 | 174 | 32 | 3072 | 534528 | 1.46% | 2112 |
| 6 | 139 | 40 | 3840 | 533760 | 1.31% | 1352 |
| 7 | 116 | 48 | 4608 | 534528 | 1.46% | 2112 |
| 8 | 107 | 52 | 4992 | 534144 | 1.38% | 1732 |
| 9 | 87 | 64 | 6144 | 534528 | 1.46% | 2112 |
| 10 | 73 | 76 | 7296 | 532608 | 1.09% | 212 |
| 11 | 58 | 96 | 9216 | 534528 | 1.46% | 2112 |
| 12 | 48 | 116 | 11136 | 534528 | 1.46% | 2112 |
| 13 | 29 | 192 | 18432 | 534528 | 1.46% | 2112 |
| 14 | 24 | 232 | 22272 | 534528 | 1.46% | 2112 |
| 15 | 19 | 292 | 28032 | 532608 | 1.09% | 212 |
| 16 | 16 | 348 | 33408 | 534528 | 1.46% | 2112 |

(22) The quantity $N_{CW}$ of symbols before framing is 702464. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{FAW}$ of frame alignment word symbols and a quantity $N_{RES}$ of reserved symbols each are as listed in one entry of Table 58. $N_{FAW}+N_{PS}$ is an even number, $N_{FAW}$ is an even number, and $N_{PS}$ is an even number, and correspondingly, $N_{RES}>0$, and OH=$(N_F-Ncw)/Ncw$.

A frame overhead of a super-frame architecture in cases listed in Table 58 is low: OR<1.50%. Neither the quantity $N_S$ of symbols in each sub-frame nor the quantity $N_F$ of symbols in the super-frame is limited in Table 58.

Table 58

| Sequence number | $N_{SF}$ | $N_{PS}$ | $N_S$ | $N_F$ | OH | $N_{FAW} + N_{RES}$ |
|---|---|---|---|---|---|---|
| 1 | 740 | 10 | 960 | 710400 | 1.13% | 536 |
| 2 | 617 | 12 | 1152 | 710784 | 1.18% | 916 |
| 3 | 529 | 14 | 1344 | 710976 | 1.21% | 1106 |
| 4 | 463 | 16 | 1536 | 711168 | 1.24% | 1296 |
| 5 | 411 | 18 | 1728 | 710208 | 1.10% | 346 |
| 6 | 370 | 20 | 1920 | 710400 | 1.13% | 536 |
| 7 | 337 | 22 | 2112 | 711744 | 1.32% | 1866 |
| 8 | 309 | 24 | 2304 | 711936 | 1.35% | 2056 |
| 9 | 285 | 26 | 2496 | 711360 | 1.27% | 1486 |
| 10 | 265 | 28 | 2688 | 712320 | 1.40% | 2436 |
| 11 | 247 | 30 | 2880 | 711360 | 1.27% | 1486 |
| 12 | 232 | 32 | 3072 | 712704 | 1.46% | 2816 |
| 13 | 218 | 34 | 3264 | 711552 | 1.29% | 1676 |
| 14 | 206 | 36 | 3456 | 711936 | 1.35% | 2056 |
| 15 | 195 | 38 | 3648 | 711360 | 1.27% | 1486 |
| 16 | 185 | 40 | 3840 | 710400 | 1.13% | 536 |
| 17 | 161 | 46 | 4416 | 710976 | 1.21% | 1106 |
| 18 | 148 | 50 | 4800 | 710400 | 1.13% | 536 |
| 19 | 137 | 54 | 5184 | 710208 | 1.10% | 346 |
| 20 | 128 | 58 | 5568 | 712704 | 1.46% | 2816 |
| 21 | 116 | 64 | 6144 | 712704 | 1.46% | 2816 |
| 22 | 109 | 68 | 6528 | 711552 | 1.29% | 1676 |
| 23 | 106 | 70 | 6720 | 712320 | 1.40% | 2436 |
| 24 | 103 | 72 | 6912 | 711936 | 1.35% | 2056 |
| 25 | 100 | 74 | 7104 | 710400 | 1.13% | 536 |
| 26 | 95 | 78 | 7488 | 711360 | 1.27% | 1486 |
| 27 | 86 | 86 | 8256 | 710016 | 1.08% | 156 |
| 28 | 79 | 94 | 9024 | 712896 | 1.49% | 3006 |
| 29 | 74 | 100 | 9600 | 710400 | 1.13% | 536 |
| 30 | 70 | 106 | 10176 | 712320 | 1.40% | 2436 |
| 31 | 65 | 114 | 10944 | 711360 | 1.27% | 1486 |
| 32 | 64 | 116 | 11136 | 712704 | 1.46% | 2816 |
| 33 | 58 | 128 | 12288 | 712704 | 1.46% | 2816 |
| 34 | 57 | 130 | 12480 | 711360 | 1.27% | 1486 |
| 35 | 53 | 140 | 13440 | 712320 | 1.40% | 2436 |
| 36 | 50 | 148 | 14208 | 710400 | 1.13% | 536 |
| 37 | 47 | 158 | 15168 | 712896 | 1.49% | 3006 |
| 38 | 43 | 172 | 16512 | 710016 | 1.08% | 156 |
| 39 | 39 | 190 | 18240 | 711360 | 1.27% | 1486 |

(continued)

| Sequence number | $N_{SF}$ | $N_{PS}$ | $N_S$ | $N_F$ | OH | $N_{FAW} + N_{RES}$ |
|---|---|---|---|---|---|---|
| 40 | 37 | 200 | 19200 | 710400 | 1.13% | 536 |
| 41 | 36 | 206 | 19776 | 711936 | 1.35% | 2056 |
| 42 | 35 | 212 | 20352 | 712320 | 1.40% | 2436 |
| 43 | 34 | 218 | 20928 | 711552 | 1.29% | 1676 |
| 44 | 32 | 232 | 22272 | 712704 | 1.46% | 2816 |
| 45 | 29 | 256 | 24576 | 712704 | 1.46% | 2816 |
| 46 | 27 | 274 | 26304 | 710208 | 1.10% | 346 |
| 47 | 25 | 296 | 28416 | 710400 | 1.13% | 536 |
| 48 | 23 | 322 | 30912 | 710976 | 1.21% | 1106 |
| 49 | 20 | 370 | 35520 | 710400 | 1.13% | 536 |
| 50 | 19 | 390 | 37440 | 711360 | 1.27% | 1486 |

In some specific application, a bus width in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 59 may be obtained with reference to Table 58. In this case, the frame overhead OH in cases listed in Table 59 is less than 1.50%, and the quantity $N_F$ of symbols in the super-frame is an integer multiple of 192 and 128. In addition, the quantity $N_S$ of symbols in each sub-frame is not limited in Table 59.

Table 59

| Sequence number | $N_{SF}$ | $N_{PS}$ | $N_S$ | $N_F$ | OH | $N_{FAW} + N_{RES}$ |
|---|---|---|---|---|---|---|
| 1 | 740 | 10 | 960 | 710400 | 1.13% | 536 |
| 2 | 617 | 12 | 1152 | 710784 | 1.18% | 916 |
| 3 | 463 | 16 | 1536 | 711168 | 1.24% | 1296 |
| 4 | 370 | 20 | 1920 | 710400 | 1.13% | 536 |
| 5 | 309 | 24 | 2304 | 711936 | 1.35% | 2056 |
| 6 | 265 | 28 | 2688 | 712320 | 1.40% | 2436 |
| 7 | 232 | 32 | 3072 | 712704 | 1.46% | 2816 |
| 8 | 218 | 34 | 3264 | 711552 | 1.29% | 1676 |
| 9 | 206 | 36 | 3456 | 711936 | 1.35% | 2056 |
| 10 | 185 | 40 | 3840 | 710400 | 1.13% | 536 |
| 11 | 148 | 50 | 4800 | 710400 | 1.13% | 536 |
| 12 | 128 | 58 | 5568 | 712704 | 1.46% | 2816 |
| 13 | 116 | 64 | 6144 | 712704 | 1.46% | 2816 |
| 14 | 109 | 68 | 6528 | 711552 | 1.29% | 1676 |
| 15 | 106 | 70 | 6720 | 712320 | 1.40% | 2436 |
| 16 | 103 | 72 | 6912 | 711936 | 1.35% | 2056 |
| 17 | 100 | 74 | 7104 | 710400 | 1.13% | 536 |
| 18 | 86 | 86 | 8256 | 710016 | 1.08% | 156 |
| 19 | 74 | 100 | 9600 | 710400 | 1.13% | 536 |
| 20 | 70 | 106 | 10176 | 712320 | 1.40% | 2436 |

(continued)

| Sequence number | $N_{SF}$ | $N_{PS}$ | $N_S$ | $N_F$ | OH | $N_{FAW} + N_{RES}$ |
|---|---|---|---|---|---|---|
| 21 | 64 | 116 | 11136 | 712704 | 1.46% | 2816 |
| 22 | 58 | 128 | 12288 | 712704 | 1.46% | 2816 |
| 23 | 53 | 140 | 13440 | 712320 | 1.40% | 2436 |
| 24 | 50 | 148 | 14208 | 710400 | 1.13% | 536 |
| 25 | 43 | 172 | 16512 | 710016 | 1.08% | 156 |
| 26 | 37 | 200 | 19200 | 710400 | 1.13% | 536 |
| 27 | 36 | 206 | 19776 | 711936 | 1.35% | 2056 |
| 28 | 35 | 212 | 20352 | 712320 | 1.40% | 2436 |
| 29 | 34 | 218 | 20928 | 711552 | 1.29% | 1676 |
| 30 | 32 | 232 | 22272 | 712704 | 1.46% | 2816 |
| 31 | 29 | 256 | 24576 | 712704 | 1.46% | 2816 |
| 32 | 25 | 296 | 28416 | 710400 | 1.13% | 536 |
| 33 | 20 | 370 | 35520 | 710400 | 1.13% | 536 |

In some specific application, a bus width in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that, if $N_S$ is an integer multiple of 192 and 128, $N_F$ is definitely an integer multiple of 192 and 128; or if Ns is not an integer multiple of 192 or 128, $N_F$ is not necessarily an integer multiple of 192 or 128. Considering that the quantity $N_S$ of symbols in each sub-frame is an integer multiple of 192 and 128, Table 60 may be obtained with reference to Table 59. In this case, the frame overhead OH in cases listed in Table 60 is less than 1.50%, and both the quantity $N_F$ of symbols in the super-frame and the quantity $N_S$ of symbols in each sub-frame are integer multiples of 192 and 128.

Table 60

| Sequence number | $N_{SF}$ | $N_{PS}$ | $N_S$ | $N_F$ | OH | $N_{FAW} + N_{RES}$ |
|---|---|---|---|---|---|---|
| 1 | 617 | 12 | 1152 | 710784 | 1.18% | 916 |
| 2 | 463 | 16 | 1536 | 711168 | 1.24% | 1296 |
| 3 | 370 | 20 | 1920 | 710400 | 1.13% | 536 |
| 4 | 309 | 24 | 2304 | 711936 | 1.35% | 2056 |
| 5 | 265 | 28 | 2688 | 712320 | 1.40% | 2436 |
| 6 | 232 | 32 | 3072 | 712704 | 1.46% | 2816 |
| 7 | 206 | 36 | 3456 | 711936 | 1.35% | 2056 |
| 8 | 185 | 40 | 3840 | 710400 | 1.13% | 536 |
| 9 | 116 | 64 | 6144 | 712704 | 1.46% | 2816 |
| 10 | 109 | 68 | 6528 | 711552 | 1.29% | 1676 |
| 11 | 103 | 72 | 6912 | 711936 | 1.35% | 2056 |
| 12 | 74 | 100 | 9600 | 710400 | 1.13% | 536 |
| 13 | 64 | 116 | 11136 | 712704 | 1.46% | 2816 |
| 14 | 58 | 128 | 12288 | 712704 | 1.46% | 2816 |
| 15 | 53 | 140 | 13440 | 712320 | 1.40% | 2436 |
| 16 | 50 | 148 | 14208 | 710400 | 1.13% | 536 |

(continued)

| Sequence number | $N_{SF}$ | $N_{PS}$ | $N_S$ | $N_F$ | OH | $N_{FAW} + N_{RES}$ |
|---|---|---|---|---|---|---|
| 17 | 43 | 172 | 16512 | 710016 | 1.08% | 156 |
| 18 | 37 | 200 | 19200 | 710400 | 1.13% | 536 |
| 19 | 35 | 212 | 20352 | 712320 | 1.40% | 2436 |
| 20 | 32 | 232 | 22272 | 712704 | 1.46% | 2816 |
| 21 | 29 | 256 | 24576 | 712704 | 1.46% | 2816 |
| 22 | 25 | 296 | 28416 | 710400 | 1.13% | 536 |

It should be noted that, in some specific application, a quantity $N_{FAW}$ of frame alignment word symbols is 22, and a specific frame alignment word sequence of the frame alignment word symbols is as follows:

| Frame alignment word sequence | |
|---|---|
| One polarization direction | A-Aj, A+Aj, A+Aj, A+Aj, A-Aj, A-Aj, -A-Aj, A+Aj, -A-Aj, -A+Aj, -A+Aj, A-Aj, -A-Aj, -A-Aj, -A+Aj, A+Aj, -A-Aj, A-Aj, -A+Aj, A+Aj, -A-Aj, and -A+Aj |
| The other polarization direction | A+Aj, -A+Aj, -A-Aj, -A+Aj, A-Aj, A+Aj, A-Aj, A-Aj, -A-Aj, A-Aj, A+Aj, -A+Aj, -A+Aj, A+Aj, -A-Aj, A+Aj, -A-Aj, -A+Aj, A-Aj, -A-Aj, A-Aj, and -A+Aj |

This application further provides several embodiments, which are described as follows:

Embodiment 1: Specific form of a frame alignment word sequence

A quantity $N_{FAW}$ of frame alignment word symbols is 22. In one polarization direction, the 22 frame alignment word symbols are respectively 3-3j, 3+3j, 3+3j, 3+3j, 3-3j, 3-3j, - 3-3j, 3+3j, -3-3j, -3+3j, -3+3j, 3-3j, -3-3j, -3-3j, -3+3j, 3+3j, -3-3j, 3-3j, -3+3j, 3+3j, -3-3j, and -3+3j; and in the other polarization direction, the 22 frame alignment word symbols are respectively 3+3j, -3+3j, -3-3j, -3+3j, 3-3j, 3+3j, 3-3j, 3-3j, -3-3j, 3-3j, 3+3j, -3+3j, -3+3j, 3+3j, -3-3j, 3+3j, -3-3j, -3+3j, 3-3j, -3-3j, 3-3j, and -3+3j. It should be noted that, in some specific application, a 1st pilot symbol is combined with the frame alignment word symbols for a purpose like frame alignment or link training. A 1st symbol of a first-type sub-frame is a 1st symbol of a pilot sequence, and a value of the 1st symbol has the following 16 cases: -3-3j in one polarization direction and -3-3j in the other polarization direction; -3+3j in one polarization direction and -3-3j in the other polarization direction; 3-3j in one polarization direction and -3-3j in the other polarization direction; 3+3j in one polarization direction and -3-3j in the other polarization direction; -3-3j in one polarization direction and -3+3j in the other polarization direction; -3+3j in one polarization direction and -3+3j in the other polarization direction; 3-3j in one polarization direction and -3+3j in the other polarization direction; 3+3j in one polarization direction and -3+3j in the other polarization direction; -3-3j in one polarization direction and 3-3j in the other polarization direction; -3+3j in one polarization direction and 3-3j in the other polarization direction; 3-3j in one polarization direction and 3-3j in the other polarization direction; 3+3j in one polarization direction and 3-3j in the other polarization direction; -3-3j in one polarization direction and 3+3j in the other polarization direction; -3+3j in one polarization direction and 3+3j in the other polarization direction; 3-3j in one polarization direction and 3+3j in the other polarization direction; or 3+3j in one polarization direction and 3+3j in the other polarization direction.

For example, when the 1st symbol of the pilot sequence is -3+3j in one polarization direction and is 3+3j in the other polarization direction, the 1st symbol of the pilot sequence and the frame alignment word sequence (23 symbols in total) in the polarization direction are -3+3j, 3-3j, 3+3j, 3+3j, 3+3j, 3-3j, 3-3j, -3-3j, 3+3j, -3-3j, -3+3j, -3-3j, 3-3j, -3-3j, -3-3j, -3+3j, 3+3j, -3-3j, 3-3j, -3+3j, 3+3j, -3-3j, and -3+3j, and the 1st symbol of the pilot sequence and the frame alignment word sequence (23 symbols in total) in the other polarization direction are 3+3j, 3+3j, -3+3j, -3-3j, -3+3j, 3-3j, 3+3j, 3-3j, 3-3j, -3-3j, 3-3j, 3+3j, -3+3j, -3+3j, 3+3j, -3-3j, 3+3j, -3-3j, -3+3j, 3-3j, -3-3j, 3-3j, and -3+3j. In this case, in the polarization direction (for example, an X polarization direction), a sequence of real parts of complex numbers corresponding to the 1st symbol of the pilot sequence and the frame alignment word sequence is denoted as $X_I$, and a sequence of imaginary parts of the corresponding complex numbers is denoted as $X_Q$; and in the other polarization direction (for example, a Y polarization direction), a sequence of real parts of the complex numbers corresponding to the 1st symbol of the pilot sequence and the frame alignment word sequence is denoted as $Y_I$, and a sequence of imaginary parts of the corresponding complex numbers is denoted as $Y_Q$. In this case, lengths of the four sequences $X_I$, $X_Q$, $Y_I$, and $Y_Q$ are all 23.

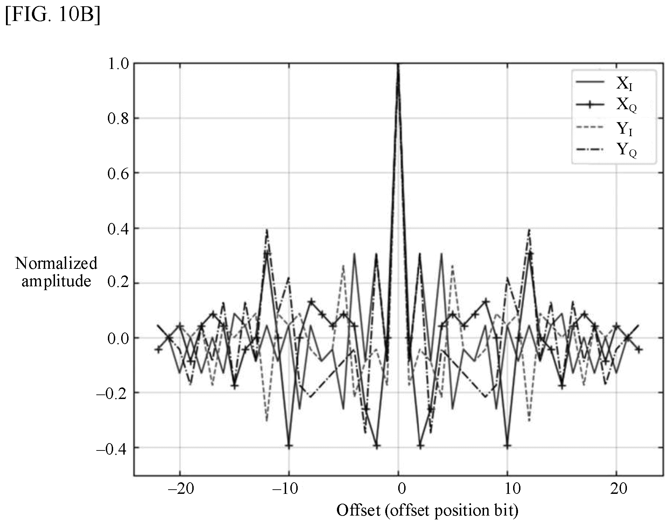

FIG. 10A and FIG. 10B are diagrams of effect of cross-correlation and autocorrelation according to an embodiment of this application. In FIG. 10A and FIG. 10B, a horizontal coordinate represents an offset (in a unit of an offset position bit), and a vertical coordinate represents a normalized amplitude. FIG. 10A shows cross-correlation (Cross-correlation) results of $X_I$ and $Y_I$, $X_Q$ and $Y_Q$, $X_I$ and $X_Q$, and $Y_I$ and $Y_Q$, and a normalized amplitude in the cross-correlation results is not greater than 0.39. FIG. 10B shows autocorrelation (Autocorrelation) results of $X_I$, $X_Q$, $Y_I$, and $Y_Q$, and an absolute value of a normalized amplitude of side lobe values in the autocorrelation results is not greater than 0.39. It should be understood that, when a 1st symbol of the frame alignment word sequence (that is, the 1st symbol of the pilot sequence) has other values in the two polarization directions, the normalized amplitude of the side lobe values in the autocorrelation of $X_I$, $X_Q$, $Y_I$, and $Y_Q$ and the normalized amplitude in the cross-correlation of $X_I$ and $Y_I$, $X_Q$ and $Y_Q$, $X_I$ and $X_Q$, and $Y_I$ and $Y_Q$ may be greater than 0.4.

Embodiment 2: Specific format of a super-frame

A symbol before framing is obtained by performing OFEC encoding with coding overhead of approximately 15.3%. A quantity of symbols before framing is 172032. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 61 below.

Table 61

| $N_{SF}$ | $N_{PS}$ | $N_S$ | $N_F$ | OH | $N_{FAW}$ | $N_{RES}$ |
|---|---|---|---|---|---|---|
| 113 | 12 | 1536 | 173568 | 0.89% | 22 | 158 |

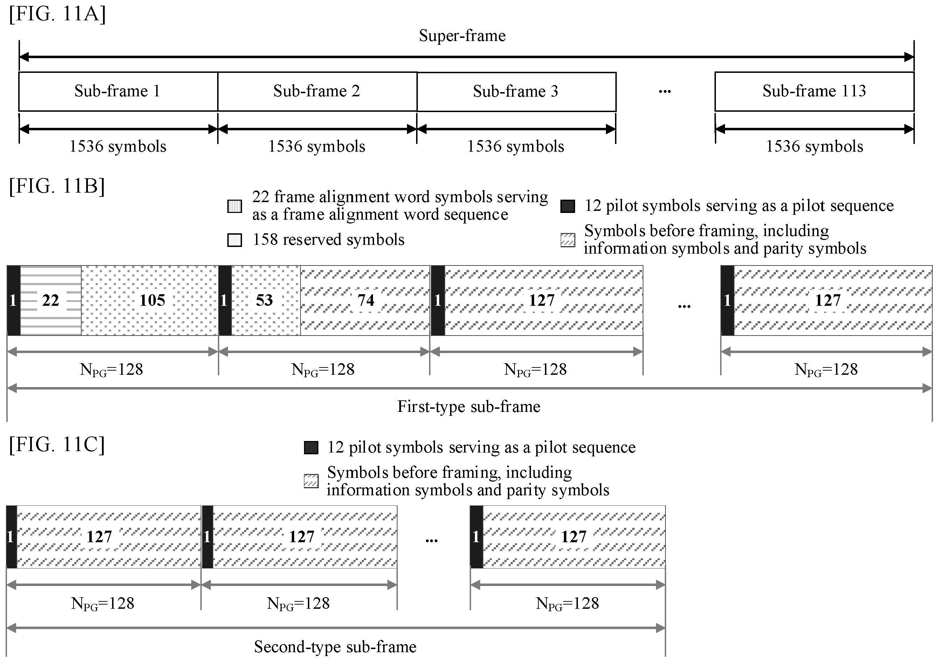

FIG. 11A to FIG. 11C are diagrams of a first implementation of a super-frame and sub-frames according to an embodiment of this application. The super-frame includes 113 sub-frames, and each sub-frame includes 1536 symbols, as shown in FIG. 11A. A structure of a first-type sub-frame is shown in FIG. 11B. The first-type sub-frame includes 12 pilot symbols, 22 frame alignment word symbols, and 158 reserved symbols. A structure of a second-type sub-frame is shown in FIG. 11C. The second-type sub-frame also includes 12 pilot symbols. In each sub-frame, a 1st symbol in every 128 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 3: Specific format of a super-frame

A symbol before framing is obtained by performing OFEC encoding with coding overhead of approximately 15.3%. A quantity of symbols before framing is 344064. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 62 below.

Table 62

| $N_{SF}$ | $N_{PS}$ | $N_S$ | $N_F$ | OH | $N_{FAW}$ | $N_{RES}$ |
|---|---|---|---|---|---|---|
| 113 | 24 | 3072 | 347136 | 0.89% | 22 | 338 |

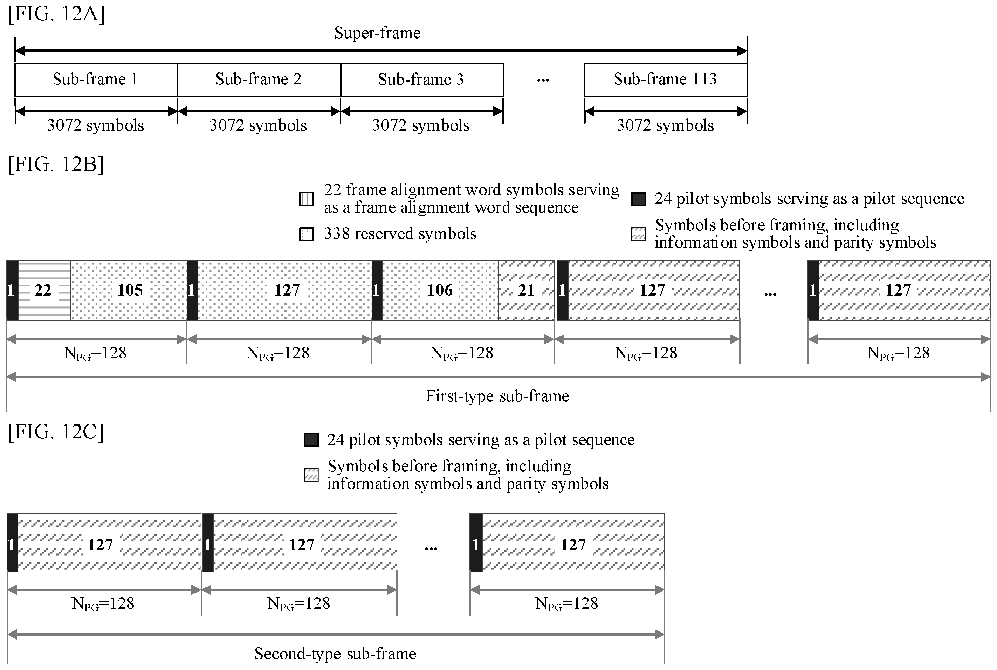

FIG. 12A to FIG. 12C are diagrams of a second implementation of a super-frame and sub-frames according to an embodiment of this application. The super-frame includes 113 sub-frames, and each sub-frame includes 3072 symbols, as shown in FIG. 12A. A structure of a first-type sub-frame is shown in FIG. 12B. The first-type sub-frame includes 24 pilot symbols, 22 frame alignment word symbols, and 338 reserved symbols. A structure of a second-type sub-frame is shown in FIG. 12C. The second-type sub-frame also includes 24 pilot symbols. In each sub-frame, a 1st symbol in every 128 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 4: Specific format of a super-frame

A symbol before framing is obtained by performing OFEC encoding with coding overhead of approximately 15.3%. A quantity of symbols before framing is 516096. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 63 below.

Table 63

| $N_{SF}$ | $N_{PS}$ | $N_S$ | $N_F$ | OH | $N_{FAW}$ | $N_{RES}$ |
|---|---|---|---|---|---|---|
| 113 | 36 | 4608 | 520704 | 0.89% | 22 | 518 |

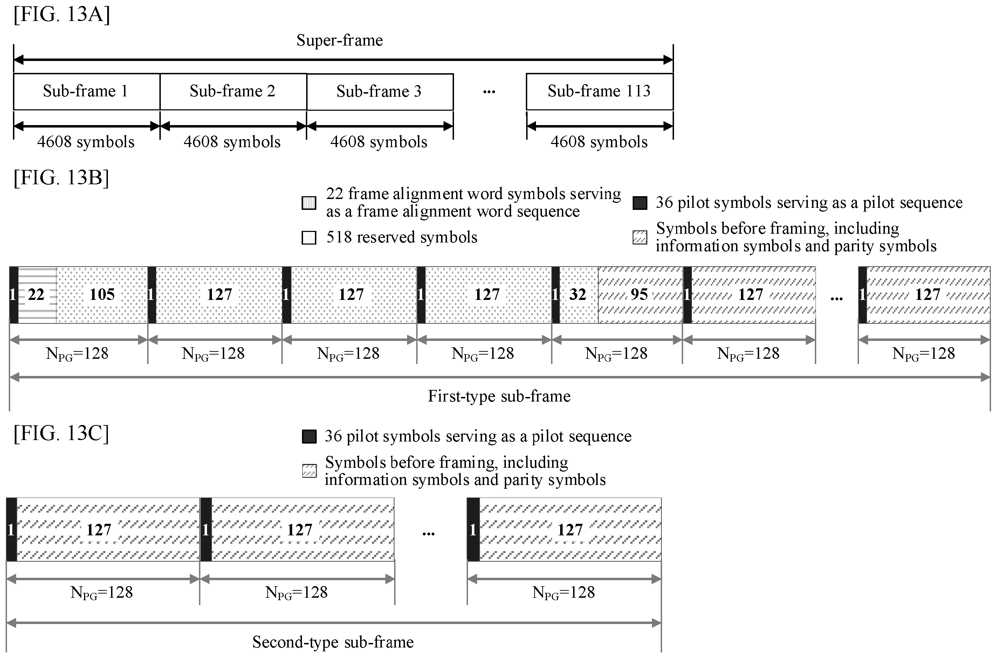

FIG. 13A to FIG. 13C are diagrams of a third implementation of a super-frame and sub-frames according to an embodiment of this application. The super-frame includes 113 sub-frames, and each sub-frame includes 4608 symbols, as shown in FIG. 13A. A structure of a first-type sub-frame is shown in FIG. 13B. The first-type sub-frame includes 36 pilot symbols, 22 frame alignment word symbols, and 518 reserved symbols. A structure of a second-type sub-frame is shown in FIG. 13C. The second-type sub-frame also includes 36 pilot symbols. In each sub-frame, a 1st symbol in every 128 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 5: Specific format of a super-frame

A symbol before framing is obtained by performing OFEC encoding with coding overhead of approximately 15.3%. A quantity of symbols before framing is 688128. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 64 below.

Table 64

| $N_{SF}$ | $N_{PS}$ | $N_S$ | $N_F$ | OH | $N_{FAW}$ | $N_{RES}$ |
|---|---|---|---|---|---|---|
| 113 | 48 | 6144 | 694272 | 0.89% | 22 | 698 |

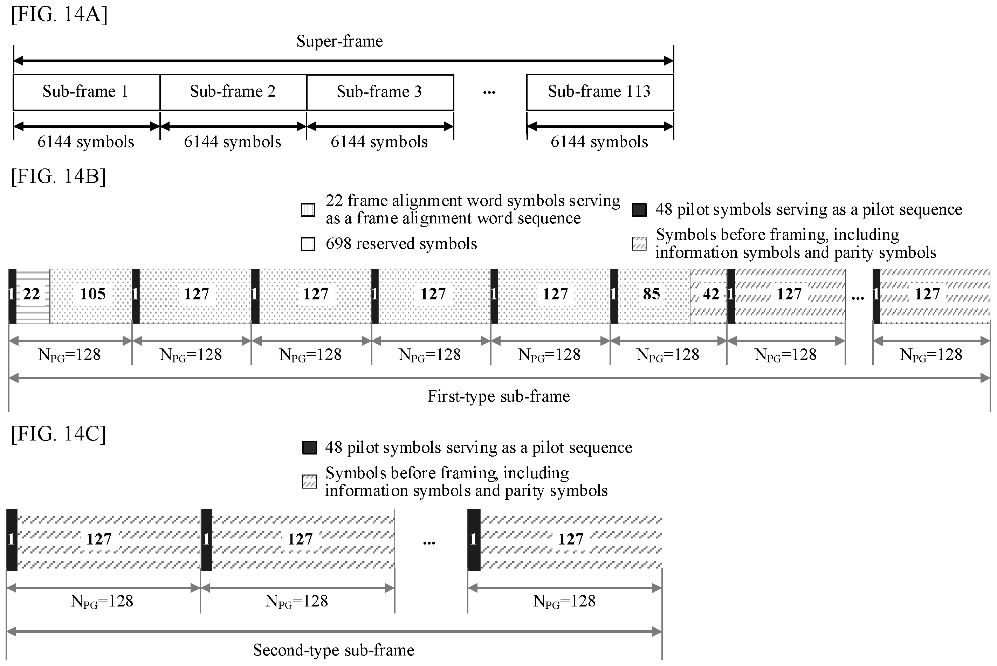

FIG. 14A to FIG. 14C are diagrams of a fourth implementation of a super-frame and sub-frames according to an embodiment of this application. The super-frame includes 113 sub-frames, and each sub-frame includes 6144 symbols, as shown in FIG. 14A. A structure of a first-type sub-frame is shown in FIG. 14B. The first-type sub-frame includes 48 pilot symbols, 22 frame alignment word symbols, and 698 reserved symbols. A structure of a second-type sub-frame is shown in FIG. 14C. The second-type sub-frame also includes 48 pilot symbols. In each sub-frame, a 1st symbol in every 128 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 6: Specific format of a super-frame

A symbol before framing is obtained by performing OFEC encoding with coding overhead of approximately 17.9%. A quantity of symbols before framing is 150528. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 65 below.

Table 65

| $N_{SF}$ | $N_{PS}$ | $N_S$ | $N_F$ | OH | $N_{FAW}$ | $N_{RES}$ |
|---|---|---|---|---|---|---|
| 22 | 54 | 6912 | 152064 | 1.02% | 22 | 326 |

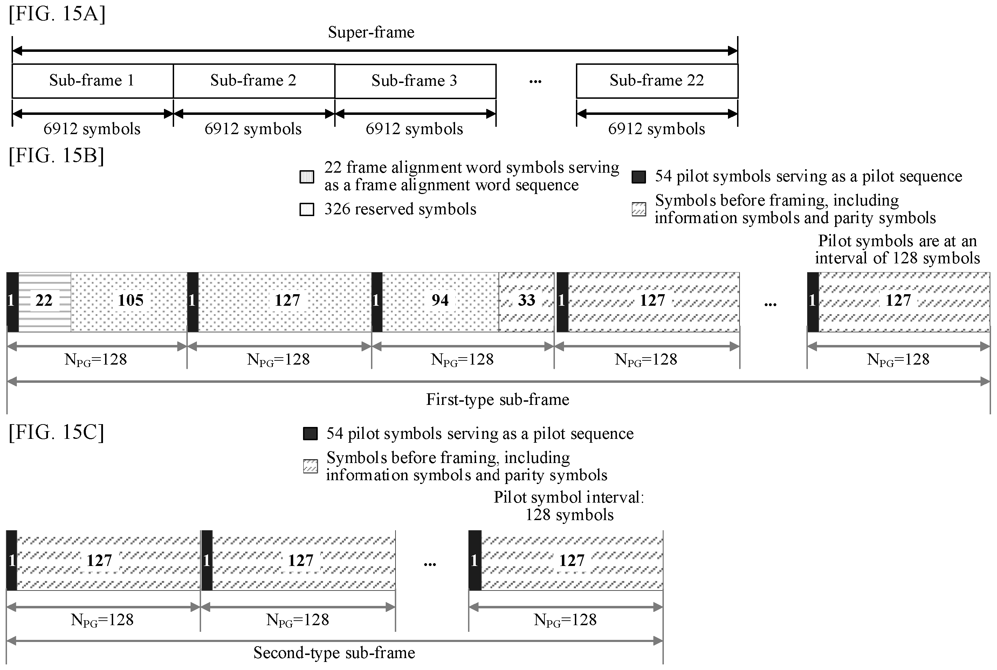

FIG. 15A to FIG. 15C are diagrams of a fifth implementation of a super-frame and sub-frames according to an embodiment of this application. The super-frame includes 22 sub-frames, and each sub-frame includes 6912 symbols, as shown in FIG. 15A. A structure of a first-type sub-frame is shown in FIG. 15B. The first-type sub-frame includes 54 pilot symbols, 22 frame alignment word symbols, and 326 reserved symbols. A structure of a second-type sub-frame is shown in FIG. 15C. The second-type sub-frame also includes 54 pilot symbols. In each sub-frame, a 1st symbol in every 128 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 7: Specific format of a super-frame

A symbol before framing is obtained by performing CFEC encoding with coding overhead of approximately 15.3%. A quantity of symbols before framing is 175616. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 66 below.

Table 66

| $N_{SF}$ | $N_{PS}$ | $N_S$ | $N_F$ | OH | $N_{FAW}$ | $N_{RES}$ |
|---|---|---|---|---|---|---|
| 21 | 66 | 8448 | 177408 | 1.02% | 22 | 384 |

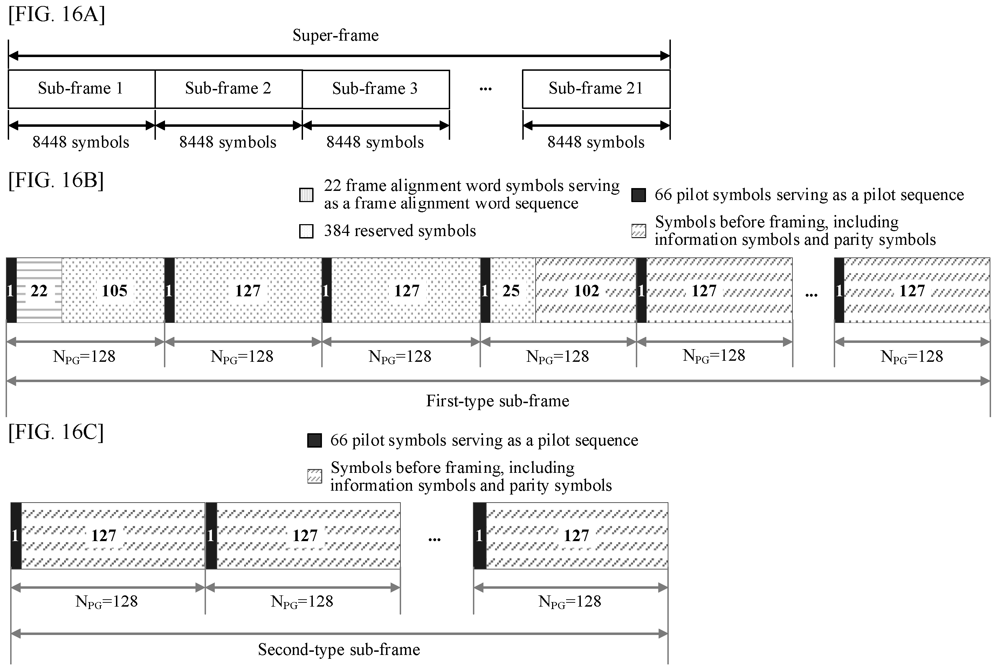

FIG. 16A to FIG. 16C are diagrams of a sixth implementation of a super-frame and sub-frames according to an embodiment of this application. The super-frame includes 21 sub-frames, and each sub-frame includes 8448 symbols, as shown in FIG. 16A. A structure of a first-type sub-frame is shown in FIG. 16B. The first-type sub-frame includes 66 pilot symbols, 22 frame alignment word symbols, and 384 reserved symbols. A structure of a second-type sub-frame is shown in FIG. 16C. The second-type sub-frame also includes 66 pilot symbols. In each sub-frame, a 1st symbol in every 128 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 8: Specific format of a super-frame

A symbol before framing is obtained by performing CFEC encoding with coding overhead of approximately 15.3%. A quantity of symbols before framing is 526848. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 67 below.

Table 67

| $N_{SF}$ | $N_{PS}$ | $N_S$ | $N_F$ | OH | $N_{FAW}$ | $N_{RES}$ |
|---|---|---|---|---|---|---|
| 173 | 24 | 3072 | 531456 | 0.87% | 22 | 434 |

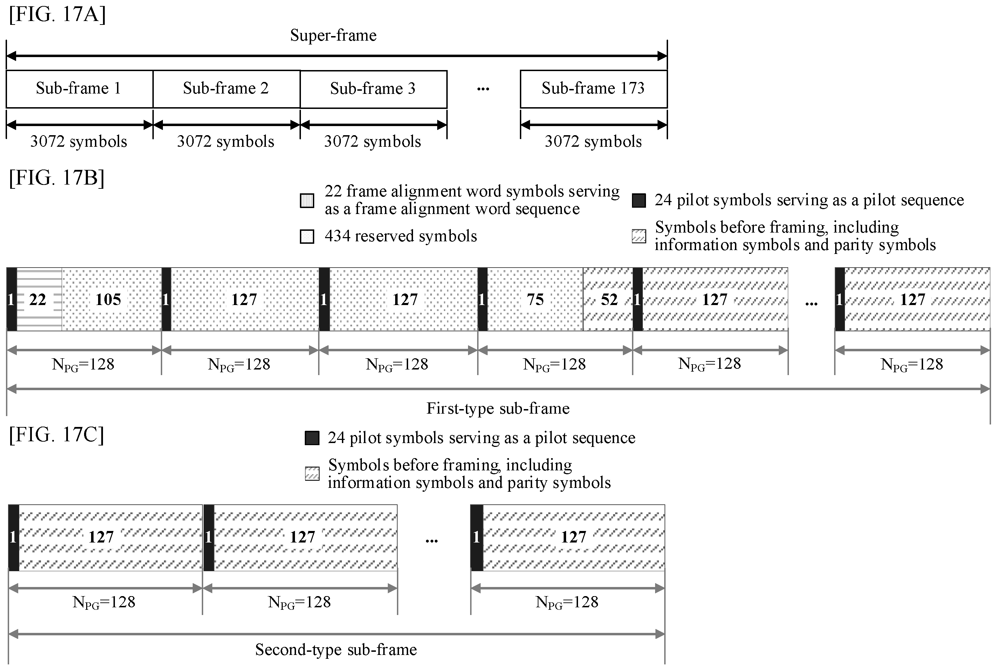

FIG. 17A to FIG. 17C are diagrams of a seventh implementation of a super-frame and sub-frames according to an embodiment of this application. The super-frame includes 173 sub-frames, and each sub-frame includes 3072 symbols, as shown in FIG. 17A. A structure of a first-type sub-frame is shown in FIG. 17B. The first-type sub-frame includes 24 pilot symbols, 22 frame alignment word symbols, and 434 reserved symbols. A structure of a second-type sub-frame is shown in FIG. 17C. The second-type sub-frame also includes 24 pilot symbols. In each sub-frame, a 1st symbol in every 128 symbols is a pilot symbol. In existing 400G-ZR and 800G-ZR standards, a 1st sub-frame also includes 22 frame alignment word symbols, facilitating multiplexing. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 9: Specific format of a super-frame

A symbol before framing is obtained by performing CFEC encoding with coding overhead of approximately 15.3%. A quantity of symbols before framing is 702464. A symbol at a fixed position in every $N_{PG}=128$ consecutive symbols is a pilot symbol. Corresponding parameters such as $N_{SF}$, $N_{PS}$, $N_{FAW}$, $N_{RES}$, $N_S$, $N_F$, and OH are shown in Table 68 below.

Table 68

| $N_{SF}$ | $N_{PS}$ | $N_S$ | $N_F$ | OH | $N_{FAW}$ | $N_{RES}$ |
|---|---|---|---|---|---|---|
| 71 | 78 | 9984 | 708864 | 0.91% | 22 | 840 |

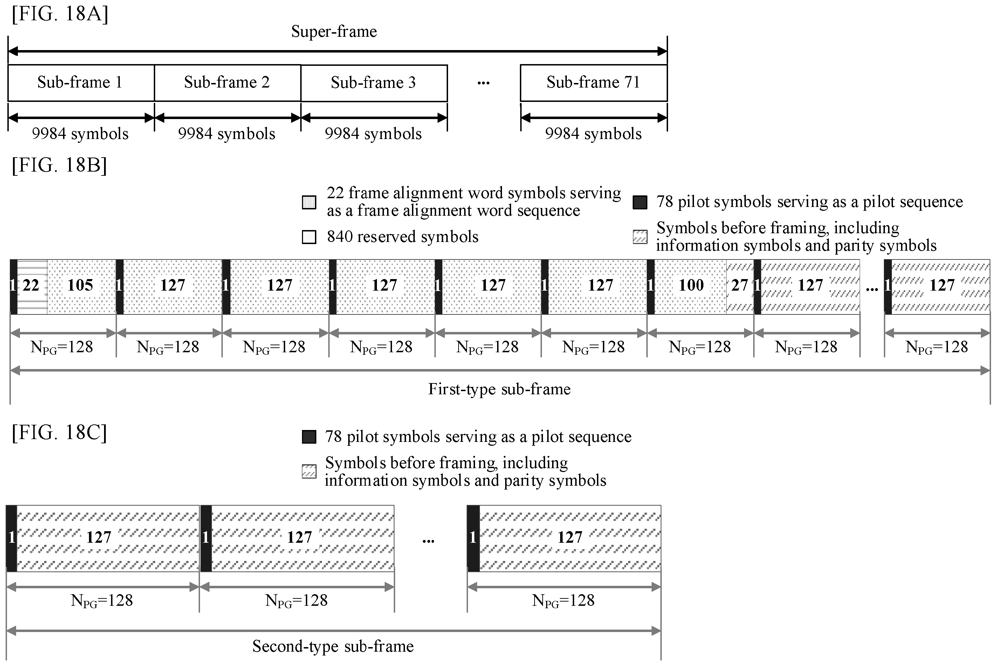

FIG. 18A to FIG. 18C are diagrams of an eighth implementation of a super-frame and sub-frames according to an embodiment of this application. The super-frame includes 71 sub-frames, and each sub-frame includes 9984 symbols, as shown in FIG. 18A. A structure of a first-type sub-frame is shown in FIG. 18B. The first-type sub-frame includes 78 pilot symbols, 22 frame alignment word symbols, and 840 reserved symbols. A structure of a second-type sub-frame is shown in FIG. 18C. The second-type sub-frame also includes 78 pilot symbols. In each sub-frame, a 1st symbol in every 128 symbols is a pilot symbol. In existing 400G-ZR and 800G-ZR standards, a 1st sub-frame also includes 22 frame alignment word symbols, facilitating multiplexing. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 10: Specific format of a super-frame

A symbol before framing is obtained by performing OFEC encoding with coding overhead of approximately 15.3%. A quantity of symbols before framing is 688128. Pilot symbols are at an interval of 96 symbols. Corresponding parameters such as $N_{SF}$, $N_{PS}$, $N_{FAW}$, $N_{RES}$, $N_S$, $N_F$, and OH are shown in Table 69 below.

Table 69

| $N_{SF}$ | $N_{PS}$ | $N_S$ | $N_F$ | OH | $N_{FAW}$ | $N_{RES}$ |
|---|---|---|---|---|---|---|
| 151 | 48 | 4608 | 695808 | 1.12% | 22 | 410 |

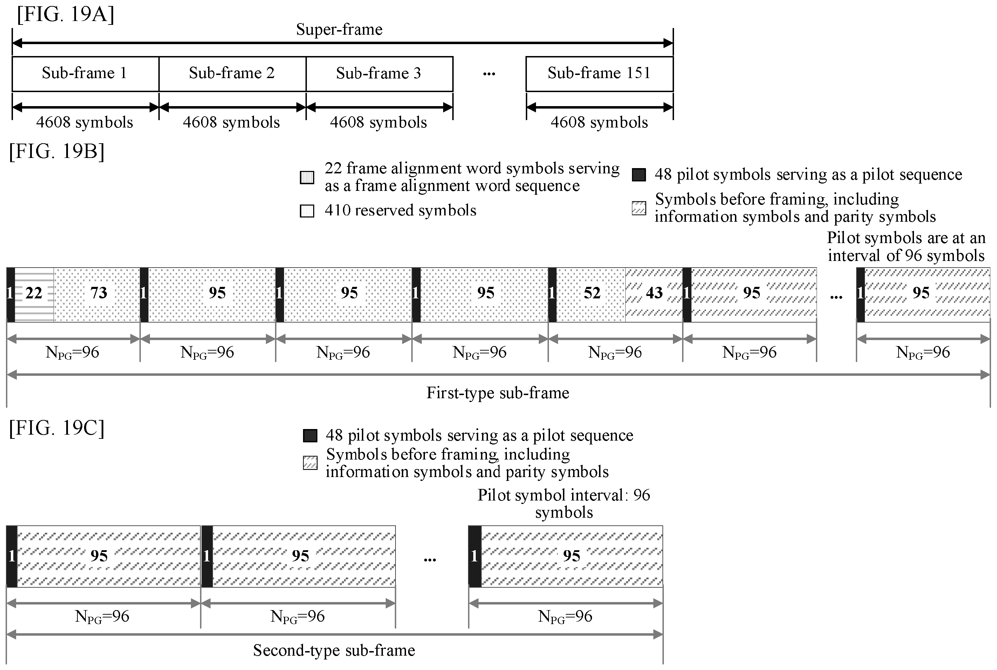

FIG. 19A to FIG. 19C are diagrams of a ninth implementation of a super-frame and sub-frames according to an embodiment of this application. The super-frame includes 151 sub-frames, and each sub-frame includes 4608 symbols, as shown in FIG. 19A. A structure of a first-type sub-frame is shown in FIG. 19B. The first-type sub-frame includes 48 pilot symbols, 22 frame alignment word symbols, and 410 reserved symbols. In existing 400G-ZR and 800G-ZR standards, the first-type sub-frame also includes 22 frame alignment word symbols, facilitating multiplexing. A structure of a second-type sub-frame is shown in FIG. 19C. The second-type sub-frame also includes 48 pilot symbols. In each sub-frame, a 1st symbol in every 96 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 11: Specific format of a super-frame

A symbol before framing is obtained by performing OFEC encoding with coding overhead of approximately 21.5%. A quantity of symbols before framing is 129024. A symbol at a fixed position in every $N_{PG}=96$ consecutive symbols is a pilot symbol. Corresponding parameters such as $N_{SF}$, $N_{PS}$, $N_{FAW}$, $N_{RES}$, $N_S$, $N_F$, and OH are shown in Table 70 below.

Table 70

| $N_{SF}$ | $N_{PS}$ | $N_S$ | $N_F$ | OH | $N_{FAW}$ | $N_{RES}$ |
|---|---|---|---|---|---|---|
| 20 | 68 | 6528 | 130560 | 1.19% | 22 | 154 |

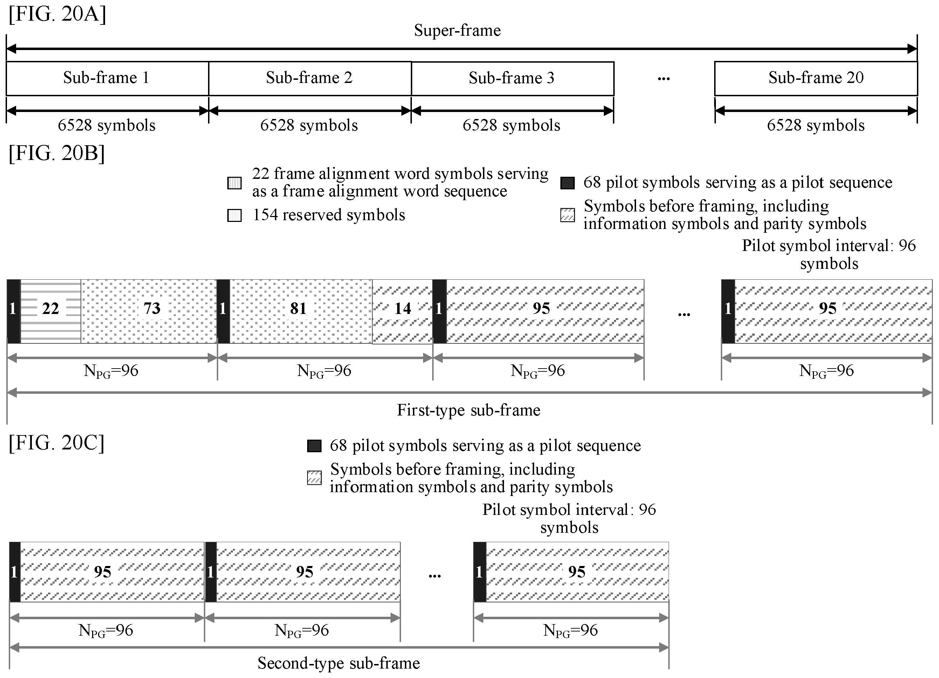

FIG. 20A to FIG. 20C are diagrams of a tenth implementation of a super-frame and sub-frames according to an embodiment of this application. The super-frame includes 20 sub-frames, and each sub-frame includes 6528 symbols, as shown in FIG. 20A. A structure of a first-type sub-frame is shown in FIG. 20B. The first-type sub-frame includes 68 pilot symbols, 22 frame alignment word symbols, and 154 reserved symbols. In existing 400G-ZR and 800G-ZR standards, a 1st sub-frame also includes 22 frame alignment word symbols, facilitating multiplexing. A structure of a second-type sub-frame is shown in FIG. 20C. The second-type sub-frame also includes 68 pilot symbols. In each sub-frame, a 1st symbol in every 96 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 12: Specific format of a super-frame

A symbol before framing is obtained by performing OFEC encoding with coding overhead of approximately 21.5%. A quantity of symbols before framing is 129024. A symbol at a fixed position in every $N_{PG}$=96 consecutive symbols is a pilot symbol. Corresponding parameters such as $N_{SF}$, $N_{PS}$, $N_{FAW}$, $N_{RES}$, $N_S$, $N_F$, and OH are shown in Table 71 below.

Table 71

| $NSF$ | $N_{PS}$ | $N_S$ | $N_F$ | OH | $N_{FAW}$ | $N_{RES}$ |
|---|---|---|---|---|---|---|
| 17 | 80 | 7680 | 130560 | 1.19% | 23 | 154 |

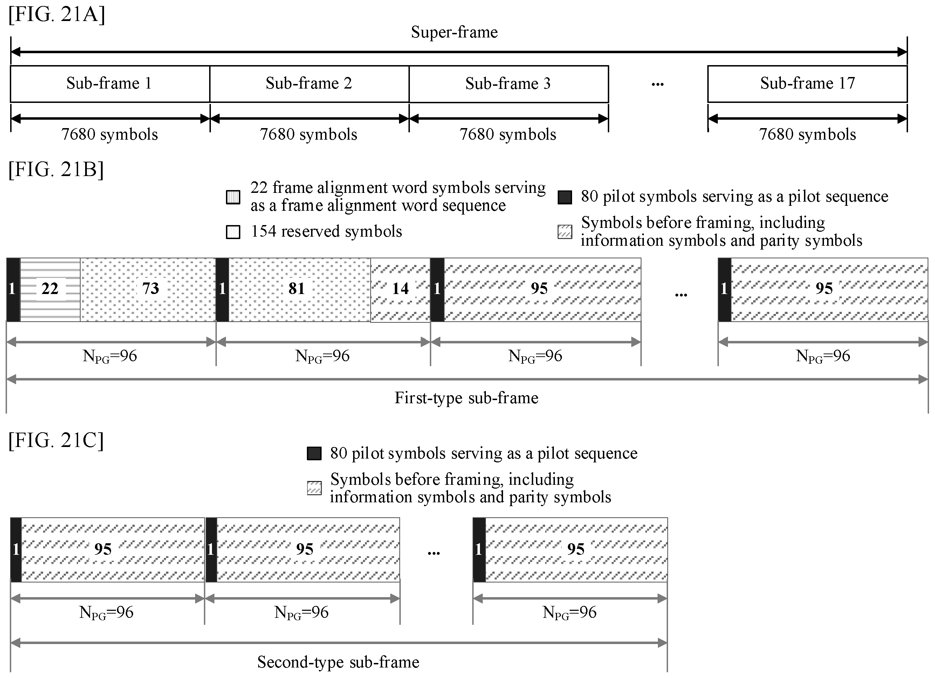

FIG. 21A to FIG. 21C are diagrams of an eleventh implementation of a super-frame and sub-frames according to an embodiment of this application. The super-frame includes 17 sub-frames, and each sub-frame includes 7680 symbols, as shown in FIG. 21A. A structure of a first-type sub-frame is shown in FIG. 21B. The first-type sub-frame includes 80 pilot symbols, 22 frame alignment word symbols, and 154 reserved symbols. In existing 400G-ZR and 800G-ZR standards, a 1st sub-frame also includes 22 frame alignment word symbols, facilitating multiplexing. A structure of a second-type sub-frame is shown in FIG. 21C. The second-type sub-frame also includes 80 pilot symbols. In each sub-frame, a 1st symbol in every 96 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 13: Specific format of a super-frame

A symbol before framing is obtained by performing CFEC encoding with coding overhead of approximately 15.3%. A quantity of symbols before framing is 351232. A symbol at a fixed position in every $N_{PG}$=96 consecutive symbols is a pilot symbol. Corresponding parameters such as $N_{SF}$, $N_{PS}$, $N_{FAW}$, $N_{RES}$, $N_S$, $N_F$, and OH are shown in Table 72 below.

Table 72

| $N_{SF}$ | $N_{PS}$ | $N_S$ | $N_F$ | OH | $N_{FAW}$ | $N_{RES}$ |
|---|---|---|---|---|---|---|
| 37 | 100 | 9600 | 355200 | 1.13% | 22 | 246 |

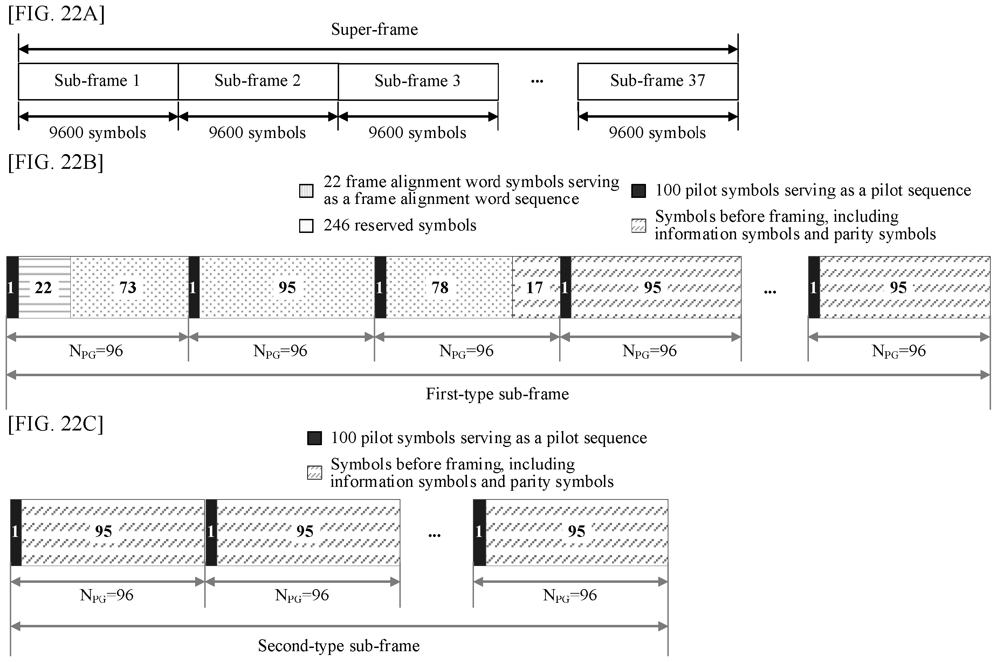

FIG. 22A to FIG. 22C are diagrams of a twelfth implementation of a super-frame and sub-frames according to an embodiment of this application. The super-frame includes 37 sub-frames, and each sub-frame includes 9600 symbols, as shown in FIG. 22A. A structure of a first-type sub-frame is shown in FIG. 22B. The first-type sub-frame includes 100 pilot symbols, 22 frame alignment word symbols, and 246 reserved symbols. In existing 400G-ZR and 800G-ZR standards, a 1st sub-frame also includes 22 frame alignment word symbols, facilitating multiplexing. A structure of a second-type sub-frame is shown in FIG. 22C. The second-type sub-frame also includes 100 pilot symbols. In each sub-frame, a 1st symbol in every 96 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 14: Specific format of a super-frame

A symbol before framing is obtained by performing CFEC encoding with coding overhead of approximately 15.3%. A quantity of symbols before framing is 526848. A symbol at a fixed position in every $N_{PG}$=96 consecutive symbols is a pilot symbol. Corresponding parameters such as $N_{SF}$, $N_{PS}$, $N_{FAW}$, $N_{RES}$, $N_S$, $N_F$, and OH are shown in Table 73 below.

Table 73

| $N_{SF}$ | $N_{PS}$ | $N_S$ | $N_F$ | OH | $N_{FAW}$ | $N_{RES}$ |
|---|---|---|---|---|---|---|
| 73 | 76 | 7296 | 532608 | 1.09% | 22 | 190 |

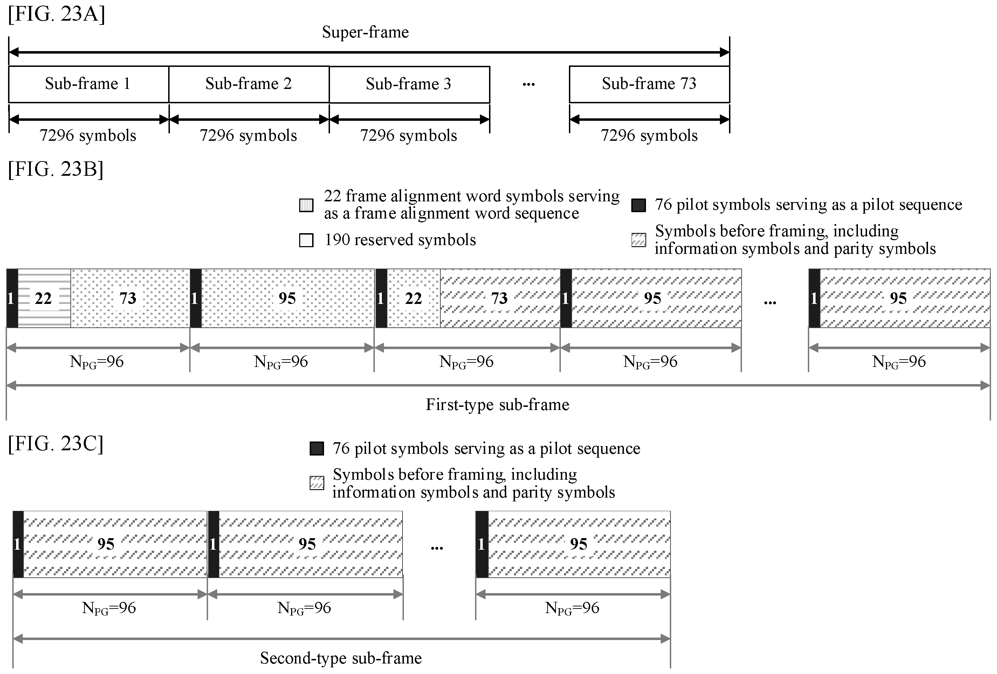

FIG. 23A to FIG. 23C are diagrams of a thirteenth implementation of a super-frame and sub-frames according to an embodiment of this application. The super-frame includes 73 sub-frames, and each sub-frame includes 7296 symbols, as shown in FIG. 23A. A structure of a first-type sub-frame is shown in FIG. 23B. The first-type sub-frame includes 76 pilot symbols, 22 frame alignment word symbols, and 190 reserved symbols. In existing 400G-ZR and 800G-ZR standards, a 1st sub-frame also includes 22 frame alignment word symbols, facilitating multiplexing. A structure of a second-type sub-frame is shown in FIG. 23C. The second-type sub-frame also includes 76 pilot symbols. In each sub-frame, a 1st symbol in every 96 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

Embodiment 15: Specific format of a super-frame

A symbol before framing is obtained by performing CFEC encoding with coding overhead of approximately 15.3%. A quantity of symbols before framing is 702464. A symbol at a fixed position in every $N_{PG}=96$ consecutive symbols is a pilot symbol. Corresponding parameters such as $N_{SF}$, $N_{PS}$, $N_{FAW}$, $N_{RES}$, $N_S$, $N_F$, and OH are shown in Table 74 below.

Table 74

| $N_{SF}$ | $N_{PS}$ | $N_S$ | $N_F$ | OH | $N_{FAW}$ | $N_{RES}$ |
|---|---|---|---|---|---|---|
| 43 | 172 | 16512 | 710016 | 1.08% | 22 | 134 |

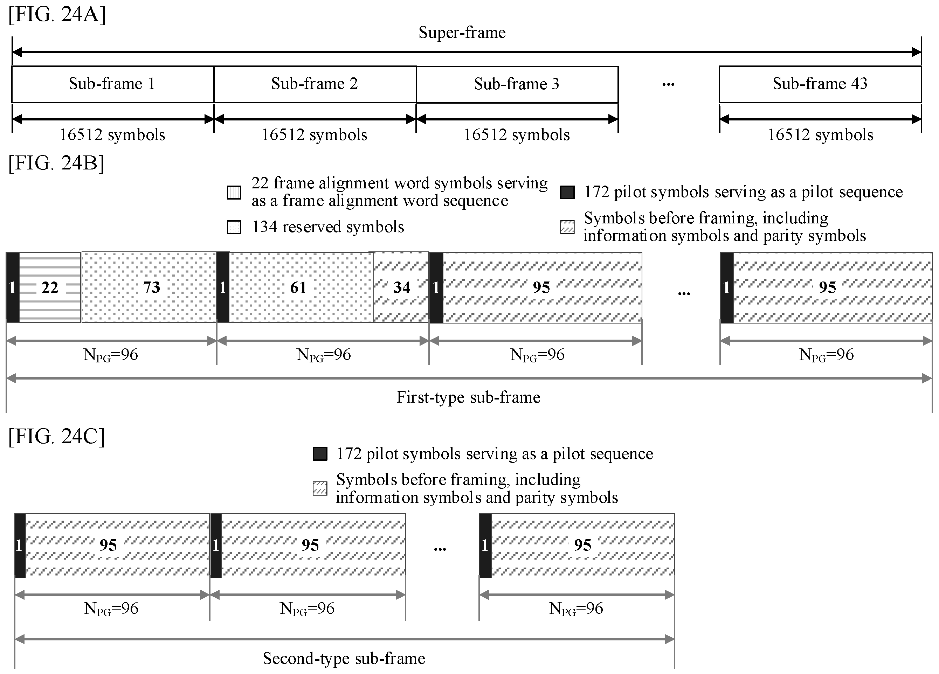

FIG. 24A to FIG. 24C are diagrams of a fourteenth implementation of a super-frame and sub-frames according to an embodiment of this application. The super-frame includes 43 sub-frames, and each sub-frame includes 16512 symbols, as shown in FIG. 24A. A structure of a first-type sub-frame is shown in FIG. 24B. The first-type sub-frame includes 172 pilot symbols, 22 frame alignment word symbols, and 134 reserved symbols. In existing 400G-ZR and 800G-ZR standards, a 1st sub-frame also includes 22 frame alignment word symbols, facilitating multiplexing. A structure of a second-type sub-frame is shown in FIG. 24C. The second-type sub-frame also includes 172 pilot symbols as shown in FIG. 24C. In each sub-frame, a 1st symbol in every 96 symbols is a pilot symbol. In some specific application, a bus width in a specific DSP implementation of a transmitter and a receiver is 192 or 128. For ease of hardware implementation, a quantity $N_F$ of symbols in the super-frame is an integer multiple of 192 and 128. Preferably, a quantity $N_S$ of symbols in each sub-frame in the super-frame is also an integer multiple of 192 and 128.

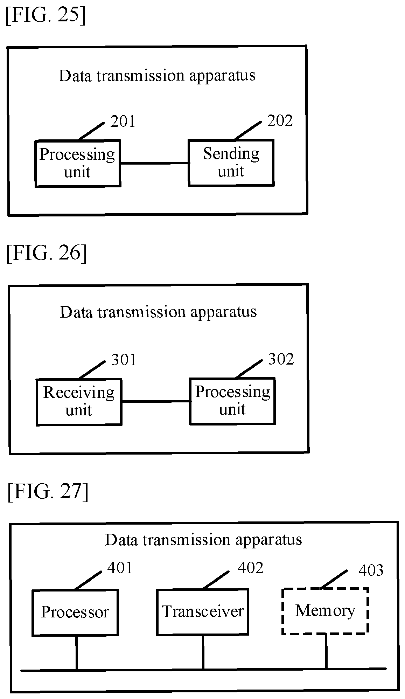

FIG. 25 is a diagram of a structure of a data transmission apparatus used at a transmitter according to an embodiment of this application. As shown in FIG. 25, the data transmission apparatus includes a processing unit 201 and a sending unit 202. The processing unit 201 is configured to perform an operation of step 101, and the sending unit 202 is configured to perform an operation of step 102. It should be understood that the data transmission apparatus provided in this embodiment of this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 26 is a diagram of a structure of a data transmission apparatus used at a receiver according to an embodiment of this application. As shown in FIG. 26, the data transmission apparatus includes a receiving unit 301 and a processing unit 302. The receiving unit 301 is configured to perform an operation of step 102, and the processing unit 302 is configured to perform an operation of step 103. It should be understood that the data transmission apparatus provided in this embodiment of this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 27 is a diagram of another structure of a data transmission apparatus according to an embodiment of this application. The data transmission apparatus may be used at a transmitter or a receiver. As shown in FIG. 27, the data transmission apparatus includes a processor 401 and a transceiver 402. The processor 401 and the transceiver 402 are connected to each other through a line. Specifically, the transceiver 402 is configured to perform data sending and receiving operations, and the processor 401 is configured to perform operations other than data sending and receiving. In a possible implementation, the processor 401 may include the processing unit 201 shown in FIG. 25, and the transceiver 402 includes the sending unit 202 shown in FIG. 25. In another possible implementation, the processor 401 may include the processing unit 302 shown in FIG. 26, and the transceiver 402 includes the receiving unit 301 shown in FIG. 26. Optionally, the data transmission apparatus may further include a memory 403. The memory 403 is configured to store program instructions and data.

An embodiment of this application further provides a chip. The chip integrates a circuit and one or more interfaces that are configured to implement a function of the processor 401. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by a transmitter device or a receiver device in the foregoing embodiments.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method for optical communication, comprising:

   obtaining a super-frame comprising a plurality of sub-frames, wherein the sub-frame comprises pilot symbols, in a polarization direction, a quantity $N_{PS}$ of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame comprise one pilot symbol located at a fixed position, $N_{PG}$ is 96 or 128, the super-frame comprises one first-type sub-frame, the first-type sub-frame further comprises $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number; and
   sending the super-frame.

2. The method according to claim 1, wherein in one sub-frame, a pilot sequence comprising a plurality of pilot symbols in a first polarization direction is different from a pilot sequence comprising a plurality of pilot symbols in a second polarization direction, and the first polarization direction and the second polarization direction are orthogonal to each other.

3. The method according to claim 1 or 2, wherein in one sub-frame, a sum of real parts of all pilot symbols in a polarization direction is 0, and a sum of imaginary parts of all the pilot symbols in the polarization direction is 0; and
   in the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0.

4. The method according to any one of claims 1 to 3, wherein in one sub-frame, for all pilot symbols in a polarization direction, a quantity of pilot symbols having the values -A-Aj, -A+Aj, A-Aj, and A+Aj differ pairwise by no more than 2.

5. The method according to any one of claims 1 to 4, wherein in one sub-frame, a quantity of pilot symbols having the value of -A-Aj in two polarization directions, a quantity of pilot symbols having the value of -A+Aj in two polarization directions, a quantity of pilot symbols having the value of A-Aj in two polarization directions, and a quantity of pilot symbols having the value of A+Aj in two polarization directions are equal to each other, and the two polarization directions are orthogonal to each other.

6. The method according to any one of claims 1 to 5, wherein the first-type sub-frame starts with a pilot symbol.

7. The method according to claim 6, wherein the $N_{FAW}$ consecutive frame alignment word symbols are arranged starting from a symbol immediately following the pilot symbol in the first-type sub-frame.

8. The method according to any one of claims 1 to 7, wherein the first-type sub-frame further comprises a reserved symbol and a symbol before framing, and in the first-type sub-frame, the frame alignment word symbols are located before the reserved symbol, and the reserved symbol is located before the symbol before framing.

9. The method according to any one of claims 1 to 8, wherein the super-frame comprises at least one second-type sub-frame, and the second-type sub-frame further comprises a symbol before framing.

10. The method according to any one of claims 1 to 9, wherein a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;

$N_{PG}$=128, $N_{CW}$=344064, and $N_F$=346880, 347136, 347392, 347520, 347648, 347776, 347904, or 348160;

$N_{PG}$=128, $N_{CW}$=516096, and $N_F$=520192, 520320, 520448, 520576, 520704, 520832, 520960, 521088, 521472, 521600, 521856, or 522240;

$N_{PG}$=128, $N_{CW}$=688128, and $N_F$=693760, 693888, 694144, 694272, 694400, 694656, 694784, 694912, 695040, 695296, 695552, 695808, 696192, or 696320;

$N_{PG}$=128, $N_{CW}$=150528, and $N_F$=152064, 152192, or 152320;

$N_{PG}$=128, $N_{CW}$=129024, and $N_F$=130176, or 130560;

$N_{PG}$=128, $N_{CW}$=107520, and $N_F$=108416, 108544, 108672, or 108800;

$N_{PG}$=128, $N_{CW}$=175616, and $N_F$=177152, 177280, 177408, 177536, or 177664;

$N_{PG}$=128, $N_{CW}$=351232, and $N_F$=354304, 354432, 354560, 354688, 354816, 354944, 355072, 355200, or 355328;

$N_{PG}$=128, $N_{CW}$=526848, and $N_F$=531200, 531456, 531712, 531840, 532224, 532480, 532608, 532864, 532992, or 533120;

$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;

$N_{PG}$=96, $N_{CW}$=172032, and $N_F$=173952, 174048, 174240, 174336, 174432, or 174528;

$N_{PG}$=96, $N_{CW}$=344064, and $N_F$=347904, 348000, 348096, 348192, 348384, 348480, 348672, 348768, 348864, or 349056;

$N_{PG}$=96, $N_{CW}$=516096, and $N_F$=521664, 521856, 522144, 522240, 522720, 522816, 523008, 523200, 523296, 523393, 523488, 523584, or 523776;

$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;

$N_{PG}$=96, $N_{CW}$=150528, and $N_F$=152160, 152256, 152352, 152448, 152544, 152640, or 152736;

$N_{PG}$=96, $N_{CW}$=129024, and $N_F$=130464, 130560, 130752, 130848, or 130944;

$N_{PG}$=96, $N_{CW}$=107520, and $N_F$=108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

11. The method according to any one of claims 1 to 10, wherein in a polarization direction, a modulation format of a symbol in the super-frame is quadrature phase shift keying QPSK, and A=-1 or 1;

in a polarization direction, a modulation format of a symbol in the super-frame is 16QAM, and A=-1, 1, -3, 3, $-\sqrt{5}$, or $\sqrt{5}$; or

in a polarization direction, a modulation format of a symbol in the super-frame is 64QAM, and A=-1, 1, -3, 3, $-\sqrt{21}$, $\sqrt{21}$, -5, 5, -7, or 7.

12. The method according to any one of claims 1 to 11, wherein A=$A_{FAW}$.

13. A data transmission method for optical communication, comprising:

receiving a super-frame comprising a plurality of sub-frames, wherein the sub-frame comprises pilot symbols, in a polarization direction, a quantity $N_{PS}$ of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame comprise one pilot symbol located at a fixed position, $N_{PG}$ is 96 or 128, the super-frame comprises one first-type sub-frame, the first-type sub-frame further comprises $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number; and decoding the super-frame.

**14.** The method according to claim 13, wherein the first-type sub-frame starts with a pilot symbol.

**15.** The method according to claim 13 or 14, wherein the $N_{FAW}$ consecutive frame alignment word symbols are arranged starting from a symbol immediately following the pilot symbol in the first-type sub-frame.

**16.** A chip, wherein the chip comprises a processor and a memory, the memory and the processor are connected to each other through a line, the memory stores instructions, and the processor is configured to perform the method according to any one of claims 1 to 15.

**17.** A data transmission apparatus used at a transmitter, comprising a processing unit and a sending unit, wherein

the processing unit is configured to obtain a super-frame comprising a plurality of sub-frames, wherein the sub-frame comprises pilot symbols, in a polarization direction, a quantity $N_{PS}$ of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame comprise one pilot symbol located at a fixed position, $N_{PG}$ is 96 or 128, the super-frame comprises one first-type sub-frame, the first-type sub-frame further comprises $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number; and
the sending unit is configured to send the super-frame.

**18.** The data transmission apparatus according to claim 17, wherein in one sub-frame, a pilot sequence comprising a plurality of pilot symbols in a first polarization direction is different from a pilot sequence comprising a plurality of pilot symbols in a second polarization direction, and the first polarization direction and the second polarization direction are orthogonal to each other.

**19.** The data transmission apparatus according to claim 17 or 18, wherein in one sub-frame, a sum of real parts of all pilot symbols in a polarization direction is 0, and a sum of imaginary parts of all the pilot symbols in the polarization direction is 0; and
in the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0.

**20.** The data transmission apparatus according to any one of claims 17 to 19, wherein in one sub-frame, for all pilot symbols in a polarization direction, a quantity of pilot symbols having the values -A-Aj, -A+Aj, A-Aj, and A+Aj differ pairwise by no more than 2.

**21.** The data transmission apparatus according to any one of claims 17 to 20, wherein in one sub-frame, a quantity of pilot symbols having the value of -A-Aj in two polarization directions, a quantity of pilot symbols having the value of -A+Aj in two polarization directions, a quantity of pilot symbols having the value of A-Aj in two polarization directions, and a quantity of pilot symbols having the value of A+Aj in two polarization directions are equal to each other, and the two polarization directions are orthogonal to each other.

**22.** The data transmission apparatus according to any one of claims 17 to 21, wherein the first-type sub-frame starts with a pilot symbol.

**23.** The data transmission apparatus according to claim 22, wherein the $N_{FAW}$ consecutive frame alignment word symbols are arranged starting from a symbol immediately following the pilot symbol in the first-type sub-frame.

**24.** The data transmission apparatus according to any one of claims 17 to 23, wherein the first-type sub-frame further comprises a reserved symbol and a symbol before framing, and in the first-type sub-frame, the frame alignment word symbols are located before the reserved symbol, and the reserved symbol is located before the symbol before framing.

**25.** The data transmission apparatus according to any one of claims 17 to 24, wherein the super-frame comprises at least one second-type sub-frame, and the second-type sub-frame further comprises a symbol before framing.

**26.** The data transmission apparatus according to any one of claims 17 to 25, wherein a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;
$N_{PG}$=128, $N_{CW}$=344064, and $N_F$=346880, 347136, 347392, 347520, 347648, 347776, 347904, or 348160;
$N_{PG}$=128, $N_{CW}$=516096, and $N_F$=520192, 520320, 520448, 520576, 520704, 520832, 520960, 521088, 521472, 521600, 521856, or 522240;
$N_{PG}$=128, $N_{CW}$=688128, and $N_F$=693760, 693888, 694144, 694272, 694400, 694656, 694784, 694912, 695040, 695296, 695552, 695808, 696192, or 696320;
$N_{PG}$=128, $N_{CW}$=150528, and $N_F$=152064, 152192, or 152320;
$N_{PG}$=128, $N_{CW}$=129024, and $N_F$=130176, or 130560;
$N_{PG}$=128, $N_{CW}$=107520, and $N_F$=108416, 108544, 108672, or 108800;
$N_{PG}$=128, $N_{CW}$=175616, and $N_F$=177152, 177280, 177408, 177536, or 177664;
$N_{PG}$=128, $N_{CW}$=351232, and $N_F$=354304, 354432, 354560, 354688, 354816, 354944, 355072, 355200, or 355328;
$N_{PG}$=128, $N_{CW}$=526848, and $N_F$=531200, 531456, 531712, 531840, 532224, 532480, 532608, 532864, 532992, or 533120;
$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;
$N_{PG}$=96, $N_{CW}$=172032, and $N_F$=173952, 174048, 174240, 174336, 174432, or 174528;
$N_{PG}$=96, $N_{CW}$=344064, and $N_F$=347904, 348000, 348096, 348192, 348384, 348480, 348672, 348768, 348864, or 349056;
$N_{PG}$=96, $N_{CW}$=516096, and $N_F$=521664, 521856, 522144, 522240, 522720, 522816, 523008, 523200, 523296, 523393, 523488, 523584, or 523776;
$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;
$N_{PG}$=96, $N_{CW}$=150528, and $N_F$=152160, 152256, 152352, 152448, 152544, 152640, or 152736;
$N_{PG}$=96, $N_{CW}$=129024, and $N_F$=130464, 130560, 130752, 130848, or 130944;
$N_{PG}$=96, $N_{CW}$=107520, and $N_F$=108768, 108864, 108960, or 109056;
$N_{PG}$=96, $N_{CW}$=175616, and $N_F$=177504, 177600, 177888, 177984, 178080, or 178176;
$N_{PG}$=96, $N_{CW}$=351232, and $N_F$=355008, 355104, 355200, 355488, 355680, 355776, 355872, 355968, 356160, 356352, or 356448;
$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and
$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

**27.** The data transmission apparatus according to any one of claims 17 to 26, wherein in a polarization direction, a modulation format of a symbol in the super-frame is quadrature phase shift keying QPSK, and A=-1 or 1;

in a polarization direction, a modulation format of a symbol in the super-frame is 16QAM, and A=-1, 1, -3, 3, $-\sqrt{5}$, or $\sqrt{5}$; or
in a polarization direction, a modulation format of a symbol in the super-frame is 64QAM, and A=-1, 1, -3, 3, $-\sqrt{21}$, $\sqrt{21}$, -5, 5, -7, or 7.

**28.** The data transmission apparatus according to any one of claims 17 to 27, wherein A=$A_{FAW}$.

**29.** A data transmission apparatus used at a receiver, comprising a receiving unit and a processing unit, wherein

the receiving unit is configured to receive a super-frame comprising a plurality of sub-frames, wherein the sub-frame comprises pilot symbols, in a polarization direction, a quantity $N_{PS}$ of the pilot symbols in the sub-frame is an even number greater than 0, each pilot symbol is one of four complex numbers: -A-Aj, -A+Aj, A-Aj, and A+Aj, A is a real number, every $N_{PG}$ consecutive symbols in the sub-frame comprise one pilot symbol located at a fixed position, $N_{PG}$ is 96 or 128, the super-frame comprises one first-type sub-frame, the first-type sub-frame further comprises $N_{FAW}$ frame alignment word symbols, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and $N_{FAW}$ is an even number; and

the processing unit is configured to decode the super-frame.

30. The data transmission apparatus according to claim 29, wherein in one sub-frame, a pilot sequence comprising a plurality of pilot symbols in a first polarization direction is different from a pilot sequence comprising a plurality of pilot symbols in a second polarization direction, and the first polarization direction and the second polarization direction are orthogonal to each other.

31. The data transmission apparatus according to claim 29 or 30, wherein in one sub-frame, a sum of real parts of all pilot symbols in a polarization direction is 0, and a sum of imaginary parts of all the pilot symbols in the polarization direction is 0; and

in the first-type sub-frame, a sum of real parts of $N_{FAW}$ frame alignment word symbols in a polarization direction is 0, and a sum of imaginary parts of the $N_{FAW}$ frame alignment word symbols in the polarization direction is 0.

32. A data transmission system, comprising the data transmission apparatus according to any one of claims 17 to 28 and the data transmission apparatus according to any one of claims 29 to 31.

EP 4 776 537 A1

[FIG. 1]

[FIG. 2A]

[FIG. 2B]

[FIG. 2C]

65

[FIG. 3]

```
┌───────────────┐                              ┌──────────────┐
│  Transmitter  │                              │   Receiver   │
└───────────────┘                              └──────────────┘
        │                                              │
┌───────────────────────────────────────────┐         │
│ 101: Obtain a super-frame including a      │         │
│        plurality of sub-frames             │         │
└───────────────────────────────────────────┘         │
        │                                              │
        │       102: Send the super-frame              │
        │─────────────────────────────────────────────>│
        │                                              │
        │              ┌───────────────────────────────────────────┐
        │              │      103: Decode the super-frame           │
        │              └───────────────────────────────────────────┘
        │                                              │
        │                                              │
```

[FIG. 4]

Super-frame

| Sub-frame 1 | Sub-frame 2 | Sub-frame 3 | ··· | Sub-frame $N_{SF}$ |
|---|---|---|---|---|
| $N_S$ symbols | $N_S$ symbols | $N_S$ symbols | | $N_S$ symbols |

## [FIG. 5A]

$N_{FAW}$ frame alignment word symbols serving as a frame alignment word sequence

$N_{PS}$ pilot symbols serving as a pilot sequence

$N_{RES}$ reserved symbols

Symbols before framing, including information symbols and parity symbols

| 1 | $N_{FAW}$ | ... |
| --- | --- | --- |

$N_{PG}=128$    $N_{PG}=128$    $N_{PG}=128$    $N_{PG}=128$

First-type sub-frame

## [FIG. 5B]

$N_{PS}$ pilot symbols serving as a pilot sequence

Symbols before framing, including information symbols and parity symbols

$N_{PG}=128$    $N_{PG}=128$    $N_{PG}=128$

Second-type sub-frame

[FIG. 6A]

$N_{\mathrm{FAW}}$ frame alignment word symbols
serving as a frame alignment word sequence

$N_{\mathrm{PS}}$ pilot symbols serving as a pilot sequence

$N_{\mathrm{RES}}$ reserved symbols

Symbols before framing, including
information symbols and parity symbols

First-type sub-frame

[FIG. 6B]

$N_{\mathrm{PS}}$ pilot symbols serving as a pilot sequence

Symbols before framing, including
information symbols and parity symbols

Second-type sub-frame

EP 4 776 537 A1

[FIG. 7A]

X polarization

Y polarization

[FIG. 7B]

X polarization

Y polarization

[FIG. 8A]

X polarization

Y polarization

[FIG. 8B]

X polarization

Y polarization

[FIG. 9]

X polarization

Including symbol mapping, polarization distribution, and framing

Digital-to-analog conversion $\rightarrow$ $X_I$

Digital-to-analog conversion $\rightarrow$ $X_Q$

Digital-to-analog conversion $\rightarrow$ $Y_I$

Digital-to-analog conversion $\rightarrow$ $Y_Q$

Y polarization

[FIG. 10A]

Normalized amplitude

Offset (offset position bit)

Legend:
- $X_I \& Y_I$
- $X_Q \& Y_Q$
- $X_I \& X_Q$
- $Y_I \& Y_Q$

[FIG. 10B]

[FIG. 11A]

Super-frame

| Sub-frame 1 | Sub-frame 2 | Sub-frame 3 | ... | Sub-frame 113 |
|---|---|---|---|---|

1536 symbols · 1536 symbols · 1536 symbols · 1536 symbols

[FIG. 11B]

▥ 22 frame alignment word symbols serving as a frame alignment word sequence

☐ 158 reserved symbols

■ 12 pilot symbols serving as a pilot sequence

▨ Symbols before framing, including information symbols and parity symbols

| 1 | 22 | 105 | 1 | 53 | 74 | 1 | 127 | ... | 1 | 127 |

$N_{PG}=128$   $N_{PG}=128$   $N_{PG}=128$   $N_{PG}=128$

First-type sub-frame

[FIG. 11C]

■ 12 pilot symbols serving as a pilot sequence

▨ Symbols before framing, including information symbols and parity symbols

| 1 | 127 | 1 | 127 | ... | 1 | 127 |

$N_{PG}=128$   $N_{PG}=128$   $N_{PG}=128$

Second-type sub-frame

[FIG. 12A]

Super-frame

| Sub-frame 1 | Sub-frame 2 | Sub-frame 3 | ... | Sub-frame 113 |
|---|---|---|---|---|
| 3072 symbols | 3072 symbols | 3072 symbols | | 3072 symbols |

[FIG. 12B]

▦ 22 frame alignment word symbols serving as a frame alignment word sequence

■ 24 pilot symbols serving as a pilot sequence

☐ 338 reserved symbols

▨ Symbols before framing, including information symbols and parity symbols

First-type sub-frame

[FIG. 12C]

■ 24 pilot symbols serving as a pilot sequence

▨ Symbols before framing, including information symbols and parity symbols

Second-type sub-frame

EP 4 776 537 A1

[FIG. 13A]

Super-frame

| Sub-frame 1 | Sub-frame 2 | Sub-frame 3 | ... | Sub-frame 113 |

4608 symbols · 4608 symbols · 4608 symbols · 4608 symbols

[FIG. 13B]

22 frame alignment word symbols serving as a frame alignment word sequence

518 reserved symbols

36 pilot symbols serving as a pilot sequence

Symbols before framing, including information symbols and parity symbols

1 | 22 | 105 | 1 | 127 | 1 | 127 | 1 | 127 | 1 | 32 | 95 | 1 | 127 | ... | 1 | 127

$N_{PG}=128$ · $N_{PG}=128$ · $N_{PG}=128$ · $N_{PG}=128$ · $N_{PG}=128$ · $N_{PG}=128$ · $N_{PG}=128$ · $N_{PG}=128$

First-type sub-frame

[FIG. 13C]

36 pilot symbols serving as a pilot sequence

Symbols before framing, including information symbols and parity symbols

1 | 127 | 1 | 127 | ... | 1 | 127

$N_{PG}=128$ · $N_{PG}=128$ · $N_{PG}=128$

Second-type sub-frame

[FIG. 14A]

Super-frame

| Sub-frame 1 | Sub-frame 2 | Sub-frame 3 | ... | Sub-frame 113 |

6144 symbols    6144 symbols    6144 symbols        6144 symbols

[FIG. 14B]

▥ 22 frame alignment word symbols serving as a frame alignment word sequence

■ 48 pilot symbols serving as a pilot sequence

☐ 698 reserved symbols

▨ Symbols before framing, including information symbols and parity symbols

| 1 | 22 | 105 | 1 | 127 | 1 | 127 | 1 | 127 | 1 | 127 | 1 | 85 | 42 | 1 | 127 | ... | 1 | 127 |

$N_{PG}=128$  $N_{PG}=128$  $N_{PG}=128$  $N_{PG}=128$  $N_{PG}=128$  $N_{PG}=128$  $N_{PG}=128$  $N_{PG}=128$

First-type sub-frame

[FIG. 14C]

■ 48 pilot symbols serving as a pilot sequence

▨ Symbols before framing, including information symbols and parity symbols

| 1 | 127 | 1 | 127 | ... | 1 | 127 |

$N_{PG}=128$    $N_{PG}=128$    $N_{PG}=128$

Second-type sub-frame

EP 4 776 537 A1

[FIG. 15A]

Super-frame

| Sub-frame 1 | Sub-frame 2 | Sub-frame 3 | ... | Sub-frame 22 |

6912 symbols | 6912 symbols | 6912 symbols | 6912 symbols

[FIG. 15B]

▤ 22 frame alignment word symbols serving as a frame alignment word sequence

☐ 326 reserved symbols

■ 54 pilot symbols serving as a pilot sequence

▨ Symbols before framing, including information symbols and parity symbols

Pilot symbols are at an interval of 128 symbols

1 | 22 | $N_{PG}=128$ | 1 | 105 | $N_{PG}=128$ | 1 | 127 | $N_{PG}=128$ | 1 | 94 | $N_{PG}=128$ | 1 | 33 | 1 | 127 | $N_{PG}=128$ | ... | 1 | 127 | $N_{PG}=128$

First-type sub-frame

[FIG. 15C]

■ 54 pilot symbols serving as a pilot sequence

▨ Symbols before framing, including information symbols and parity symbols

Pilot symbol interval: 128 symbols

1 | 127 | $N_{PG}=128$ | 1 | 127 | $N_{PG}=128$ | ... | 1 | 127 | $N_{PG}=128$ | 1 | 127 | $N_{PG}=128$

Second-type sub-frame

[FIG. 16A]

Super-frame

| Sub-frame 1 | Sub-frame 2 | Sub-frame 3 | ⋯ | Sub-frame 21 |

8448 symbols    8448 symbols    8448 symbols    8448 symbols

[FIG. 16B]

▥ 22 frame alignment word symbols serving as a frame alignment word sequence

■ 66 pilot symbols serving as a pilot sequence

▢ 384 reserved symbols

▨ Symbols before framing, including information symbols and parity symbols

| 1 | 22 | 105 | 1 | 127 | 1 | 127 | 1 | 25 | 102 | 1 | 127 | ⋯ | 1 | 127 |

$N_{PG}=128$    $N_{PG}=128$    $N_{PG}=128$    $N_{PG}=128$    $N_{PG}=128$    $N_{PG}=128$

First-type sub-frame

[FIG. 16C]

■ 66 pilot symbols serving as a pilot sequence

▨ Symbols before framing, including information symbols and parity symbols

| 1 | 127 | 1 | 127 | ⋯ | 1 | 127 |

$N_{PG}=128$    $N_{PG}=128$    $N_{PG}=128$

Second-type sub-frame

EP 4 776 537 A1

[FIG. 17A]

Super-frame

| Sub-frame 1 | Sub-frame 2 | Sub-frame 3 | ... | Sub-frame 173 |
|---|---|---|---|---|
| 3072 symbols | 3072 symbols | 3072 symbols | | 3072 symbols |

[FIG. 17B]

▦ 22 frame alignment word symbols serving as a frame alignment word sequence    ■ 24 pilot symbols serving as a pilot sequence

▫ 434 reserved symbols    ▨ Symbols before framing, including information symbols and parity symbols

| 1 | 22 | 105 | 1 | 127 | 1 | 127 | 1 | 75 | 52 | 1 | 127 | ... | 1 | 127 |

$N_{PG}=128$    $N_{PG}=128$    $N_{PG}=128$    $N_{PG}=128$    $N_{PG}=128$    $N_{PG}=128$

First-type sub-frame

EP 4 776 537 A1

[FIG. 17C]

■ 24 pilot symbols serving as a pilot sequence

▨ Symbols before framing, including information symbols and parity symbols

| 1 | 127 | 1 | 127 | ... | 1 | 127 |

$N_{PG}=128$    $N_{PG}=128$    $N_{PG}=128$

Second-type sub-frame

[FIG. 18A]

Super-frame

| Sub-frame 1 | Sub-frame 2 | Sub-frame 3 | ⋯ | Sub-frame 71 |

9984 symbols    9984 symbols    9984 symbols      9984 symbols

[FIG. 18B]

▨ 22 frame alignment word symbols serving as a frame alignment word sequence

■ 78 pilot symbols serving as a pilot sequence

☐ 840 reserved symbols

▧ Symbols before framing, including information symbols and parity symbols

1 22 105 | 1 127 | 1 127 | 1 127 | 1 127 | 1 127 | 1 100 27 1 127 ⋯ 1 127

$N_{PG}=128$   $N_{PG}=128$   $N_{PG}=128$   $N_{PG}=128$   $N_{PG}=128$   $N_{PG}=128$   $N_{PG}=128$   $N_{PG}=128$   $N_{PG}=128$

First-type sub-frame

EP 4 776 537 A1

[FIG. 18C]

■ 78 pilot symbols serving as a pilot sequence

▧ Symbols before framing, including information symbols and parity symbols

1 127 | 1 127 | ⋯ | 1 127

$N_{PG}=128$    $N_{PG}=128$    $N_{PG}=128$

Second-type sub-frame

EP 4 776 537 A1

[FIG. 19A]

Super-frame

| Sub-frame 1 | Sub-frame 2 | Sub-frame 3 | ... | Sub-frame 151 |

4608 symbols  4608 symbols  4608 symbols  4608 symbols

[FIG. 19B]

▦ 22 frame alignment word symbols serving as a frame alignment word sequence

☐ 410 reserved symbols

■ 48 pilot symbols serving as a pilot sequence

▨ Symbols before framing, including information symbols and parity symbols

Pilot symbols are at an interval of 96 symbols

| 1 | 22 | 73 | 1 | 95 | 1 | 95 | 1 | 95 | 1 | 52 | 43 | 1 | 95 | ... | 1 | 95 |

$N_{PG}=96$  $N_{PG}=96$  $N_{PG}=96$  $N_{PG}=96$  $N_{PG}=96$  $N_{PG}=96$  $N_{PG}=96$

First-type sub-frame

[FIG. 19C]

■ 48 pilot symbols serving as a pilot sequence

▨ Symbols before framing, including information symbols and parity symbols

Pilot symbol interval: 96 symbols

| 1 | 95 | 1 | 95 | ... | 1 | 95 |

$N_{PG}=96$  $N_{PG}=96$  $N_{PG}=96$

Second-type sub-frame

[FIG. 20A]

Super-frame

| Sub-frame 1 | Sub-frame 2 | Sub-frame 3 | ... | Sub-frame 20 |

6528 symbols     6528 symbols     6528 symbols     6528 symbols

[FIG. 20B]

▦ 22 frame alignment word symbols serving as a frame alignment word sequence

□ 154 reserved symbols

■ 68 pilot symbols serving as a pilot sequence

▨ Symbols before framing, including information symbols and parity symbols

Pilot symbol interval: 96 symbols

| 1 | 22 | 73 | 1 | 81 | 14 | 1 | 95 | ... | 1 | 95 |

$N_{PG}=96$     $N_{PG}=96$     $N_{PG}=96$     $N_{PG}=96$

First-type sub-frame

[FIG. 20C]

■ 68 pilot symbols serving as a pilot sequence

▨ Symbols before framing, including information symbols and parity symbols

Pilot symbol interval: 96 symbols

| 1 | 95 | 1 | 95 | ... | 1 | 95 |

$N_{PG}=96$     $N_{PG}=96$     $N_{PG}=96$

Second-type sub-frame

EP 4 776 537 A1

EP 4 776 537 A1

**[FIG. 21A]**

Super-frame

| Sub-frame 1 | Sub-frame 2 | Sub-frame 3 | ··· | Sub-frame 17 |
|---|---|---|---|---|
| 7680 symbols | 7680 symbols | 7680 symbols | | 7680 symbols |

**[FIG. 21B]**

▥ 22 frame alignment word symbols serving as a frame alignment word sequence

■ 80 pilot symbols serving as a pilot sequence

☐ 154 reserved symbols

▨ Symbols before framing, including information symbols and parity symbols

| 1 | 22 | 73 | 1 | 81 | 14 | 1 | 95 | ··· | 1 | 95 |

$N_{PG}=96$  $N_{PG}=96$  $N_{PG}=96$  $N_{PG}=96$

First-type sub-frame

**[FIG. 21C]**

■ 80 pilot symbols serving as a pilot sequence

▨ Symbols before framing, including information symbols and parity symbols

| 1 | 95 | 1 | 95 | ··· | 1 | 95 |

$N_{PG}=96$  $N_{PG}=96$  $N_{PG}=96$

Second-type sub-frame

[FIG. 22A]

Super-frame

| Sub-frame 1 | Sub-frame 2 | Sub-frame 3 | ··· | Sub-frame 37 |

9600 symbols 　 9600 symbols 　 9600 symbols 　 9600 symbols

[FIG. 22B]

▦ 22 frame alignment word symbols serving as a frame alignment word sequence

■ 100 pilot symbols serving as a pilot sequence

▢ 246 reserved symbols

▨ Symbols before framing, including information symbols and parity symbols

| 1 | 22 | 73 | 1 | 95 | 1 | 78 | 17 | 1 | 95 | ··· | 1 | 95 |

$N_{PG}=96$ 　 $N_{PG}=96$ 　 $N_{PG}=96$ 　 $N_{PG}=96$ 　 $N_{PG}=96$

First-type sub-frame

[FIG. 22C]

■ 100 pilot symbols serving as a pilot sequence

▨ Symbols before framing, including information symbols and parity symbols

| 1 | 95 | 1 | 95 | ··· | 1 | 95 |

$N_{PG}=96$ 　 $N_{PG}=96$ 　 $N_{PG}=96$

Second-type sub-frame

EP 4 776 537 A1

[FIG. 23A]

Super-frame

| Sub-frame 1 | Sub-frame 2 | Sub-frame 3 | ... | Sub-frame 73 |

7296 symbols / 7296 symbols / 7296 symbols / 7296 symbols

[FIG. 23B]

22 frame alignment word symbols serving as a frame alignment word sequence

190 reserved symbols

76 pilot symbols serving as a pilot sequence

Symbols before framing, including information symbols and parity symbols

First-type sub-frame

22 | 1 | 73 | 1 | 95 | 1 | 22 | 1 | 73 | 1 | 95 | 1 | 95

$N_{PG}=96$

[FIG. 23C]

76 pilot symbols serving as a pilot sequence

Symbols before framing, including information symbols and parity symbols

Second-type sub-frame

1 | 95 | 1 | 95 | ... | 1 | 95

$N_{PG}=96$

[FIG. 24A]

Super-frame

| Sub-frame 1 | Sub-frame 2 | Sub-frame 3 | ... | Sub-frame 43 |
|---|---|---|---|---|

16512 symbols   16512 symbols   16512 symbols   16512 symbols

[FIG. 24B]

▤ 22 frame alignment word symbols serving as a frame alignment word sequence    ■ 172 pilot symbols serving as a pilot sequence

☐ 134 reserved symbols    ▨ Symbols before framing, including information symbols and parity symbols

| 1 | 22 | 73 | 1 | 61 | 34 | 1 | 95 | ... | 1 | 95 |

$N_{PG}=96$    $N_{PG}=96$    $N_{PG}=96$    $N_{PG}=96$

First-type sub-frame

[FIG. 24C]

■ 172 pilot symbols serving as a pilot sequence

▨ Symbols before framing, including information symbols and parity symbols

| 1 | 95 | 1 | 95 | ... | 1 | 95 |

$N_{PG}=96$    $N_{PG}=96$    $N_{PG}=96$

Second-type sub-frame

EP 4 776 537 A1

[FIG. 25]

Data transmission apparatus

201

Processing
unit

202

Sending
unit

[FIG. 26]

Data transmission apparatus

301

Receiving
unit

302

Processing
unit

[FIG. 27]

Data transmission apparatus

401

Processor

402

Transceiver

403

Memory

## INTERNATIONAL SEARCH REPORT

| International application No. |
| --- |
| **PCT/CN2024/096019** |

| A. | CLASSIFICATION OF SUBJECT MATTER |
| --- | --- |

H04L1/00(2006.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE, 3GPP: 光通信, 超帧, 导频, 间隔, 插入, 符号, 冗余, optical communication, super-frame, pilot, interval, insert, symbol, redundancy

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114978337 A (HUAWEI TECHNOLOGIES CO., LTD.) 30 August 2022 (2022-08-30) description, paragraphs [0004]-[0987], and figures 1-44 | 1-32 |
| Y | CN 111431827 A (63921 UNIT OF PLA) 17 July 2020 (2020-07-17) description, paragraphs [0002]-[0064], and figures 1-4 | 1-32 |
| Y | WO 9927508 A1 (CLARITI TELECOMMUNICATIONS INTERNATIONAL, LTD.) 03 June 1999 (1999-06-03) description, pages 10-19, and figures 1-3 | 1-32 |
| A | CN 108282266 A (FUJIAN FEITONG COMMUNICATION TECHNOLOGY CO., LTD.) 13 July 2018 (2018-07-13) entire document | 1-32 |
| A | US 9059886 B1 (ELECTRONICS AND TELECOMMUNICATIONS RESEARCH INSTITUTE) 16 June 2015 (2015-06-16) entire document | 1-32 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 August 2024** | **30 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | | | | International application No. |
|---|---|---|---|---|---|---|
| Information on patent family members | | | | | | PCT/CN2024/096019 |

| Patent document cited in search report | | | Publication date (day/month/year) | Patent family member(s) | | | Publication date (day/month/year) |
|---|---|---|---|---|---|---|---|
| CN | 114978337 | A | 30 August 2022 | CN | 116566498 | A | 08 August 2023 |
| | | | | CN | 116683996 | A | 01 September 2023 |
| | | | | CN | 116388881 | A | 04 July 2023 |
| | | | | CN | 117118524 | A | 24 November 2023 |
| | | | | EP | 4318977 | A1 | 07 February 2024 |
| CN | 111431827 | A | 17 July 2020 | CN | 111431827 | B | 07 March 2023 |
| WO | 9927508 | A1 | 03 June 1999 | EP | 1034519 | A1 | 13 September 2000 |
| CN | 108282266 | A | 13 July 2018 | | None | | |
| US | 9059886 | B1 | 16 June 2015 | KR | 20150064595 | A | 11 June 2015 |
| | | | | US | 2015156045 | A1 | 04 June 2015 |

Form PCT/ISA/210 (patent family annex) (July 2022)

## EP 4 776 537 A1

**REFERENCES CITED IN THE DESCRIPTION**

**Patent documents cited in the description**

- CN 202311294873